(19) Europäisches Patentamt
European Patent Office
Office européen des brevets

(11) EP 2 559 736 A1

(12) EUROPEAN PATENT APPLICATION
published in accordance with Art. 153(4) EPC

(43) Date of publication:
**20.02.2013 Bulletin 2013/08**

(21) Application number: **11768915.8**

(22) Date of filing: **14.04.2011**

(51) Int Cl.:
***C08L 101/00*** (2006.01) ***C08K 5/13*** (2006.01)
***C08K 5/134*** (2006.01) ***C08K 5/1545*** (2006.01)
***C08K 5/526*** (2006.01)

(86) International application number:
**PCT/JP2011/059265**

(87) International publication number:
**WO 2011/129394 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**29.10.2010 JP 2010243443**
**29.10.2010 JP 2010243442**
**29.10.2010 JP 2010243441**
**29.10.2010 JP 2010243440**
**29.06.2010 JP 2010147340**
**12.05.2010 JP 2010109955**
**14.04.2010 JP 2010092970**
**14.04.2010 JP 2010092968**

(71) Applicant: **Sumitomo Chemical Company Limited**
**Tokyo 104-8260 (JP)**

(72) Inventors:
- **KIMURA, Yoshikazu**
**Osaka-shi**
**Osaka 558-0051 (JP)**
- **AWA, Hideaki**
**Ibaraki-shi**
**Osaka 567-0826 (JP)**

(74) Representative: **Jones, Nicholas Andrew**
**Withers & Rogers LLP**
**4 More London Riverside**
**London**
**SE1 2AU (GB)**

# (54) THERMOPLASTIC POLYMER COMPOSITION AND STABILISER COMPOSITION

(57) The present invention provides a thermoplastic polymer composition containing a particular phenol compound or organic phosphorous compound, trehalose and a thermoplastic polymer, as well as a stabilizer composition containing a particular phenol compound or organic phosphorous compound and trehalose. A combined use of a particular phenol compound or organic phosphorous compound and trehalose can improve processing stability of a thermoplastic polymer composition.

EP 2 559 736 A1

## Description

## Technical Field

The present invention relates to a thermoplastic polymer composition and stabilizer composition.

## Background Art

Since thermoplastic polymers are superior in transparency and show good impact resistance, they are widely used for food packaging containers, convenience goods and the like. For the production of such products, thermoplastic polymers are used as compositions containing additives. As additives for thermoplastic polymers, 2,4-di-t-pentyl-6-[1-(3,5-di-t-pentyl-2-hydroxyphenyl)ethyl]phenyl acrylate, 6-[3-(3-t-butyl-4-hydroxy-5-methylphenyl)propoxy]-2,4,8,10-tetra-t-butyldibenzo[d,f][1,3,2]dioxaphosphepine (which is also called 6-t-butyl-4-[3-[(2,4,8,10-tetra-t-butyldibenzo[d,f][1,3,2]dioxaphosphepin-6-yl)oxy]propyl]-2-methylphenol), octadecyl 3-(3,5-di-t-butyl-4-hydroxyphenyl)propionate, 3,9-bis[2-{3=(3-t-butyl-4-hydroxy-5-methylphenyl)propionyloxy}-1,1-dimethylethyl]-2,4,8,10-tetraoxaspiro[5.5]undecane, pentaerythritol tetrakis[3-(3,5-di-t-butyl-4-hydroxyphenyl)propionate], tris(2,4-di-t-butylphenyl) phosphite and the like are known (patent documents 1 - 6).

## Document List

## Patent Documents

patent document 1: JP-A-1-168643
patent document 2: JP-A-10-273494
patent document 3: US Patent No. 3330859
patent document 4: US Patent No. 3644482
patent document 5: JP-A-59-25826
patent document 6: JP-A-51-109050

SUMMARY OF THE INVENTION

Problems to be Solved by the Invention

There is a demand for a thermoplastic polymer composition showing further improved processing stability.
Means of Solving the Problems

The present inventors have conducted intensive studies in an attempt to solve the aforementioned problems and found that a thermoplastic polymer composition containing the following compound represented by the formula (1), the following compound represented by the formula (2), at least one selected from the group consisting of the following compounds represented by the formulas (3) - (7), or the following compound represented by the formula (8), trehalose, and a thermoplastic polymer
shows superior processing stability. They have reached the following invention based on such findings.

[1] A thermoplastic polymer composition comprising a compound represented by the formula (1):

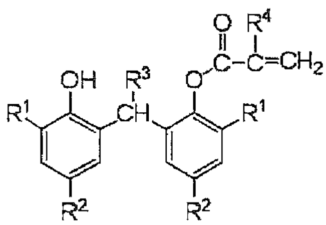

(1)

wherein in the formula (1),

each $R^1$ and/or each $R^2$ are/is independently a $C_{1-8}$ alkyl group, a $C_{6-12}$ aryl group or a $C_{7-18}$ aralkyl group,
$R^3$ is a hydrogen atom or a $C_{1-3}$ alkyl group, and
$R^4$ is a hydrogen atom or a methyl group, trehalose and a thermoplastic polymer.

[2] The thermoplastic polymer composition of the above-mentioned [1], wherein the total amount of the compound represented by the formula (1) and trehalose is 0.001 - 3 parts by weight relative to 100 parts by weight of the thermoplastic polymer.

[3] A stabilizer composition comprising a compound represented by the formula (1) and trehalose.

[4] The stabilizer composition of the above-mentioned [3], wherein the compound represented by the formula (1) is at least one selected from the group consisting of 2,4-di-t-pentyl-6-[1-(3,5-di-t-pentyl-2-hydroxyphenyl)ethyl]phenyl acrylate and 2-t-butyl-6-(3-t-butyl-2-hydroxy-5-methylbenzyl)-4-methylphenyl acrylate.

[5] The stabilizer composition of the above-mentioned [3] or [4], further comprising a compound represented by the formula (2):

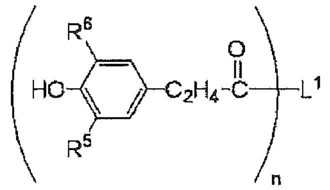
(2)

wherein in the formula (2),

each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol.

[6] The stabilizer composition of any one of the above-mentioned [3] - [5], further comprising at least one selected from the group consisting of the compounds represented by the formulas (3) - (7):

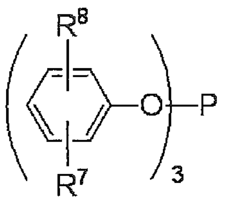
(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

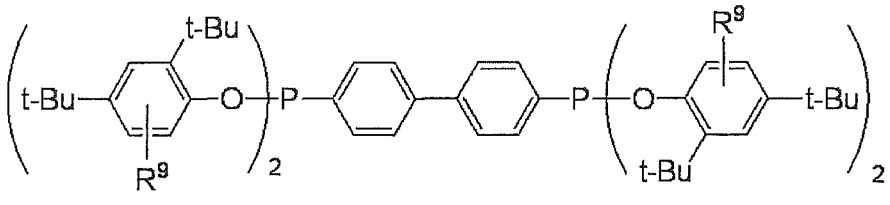
(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

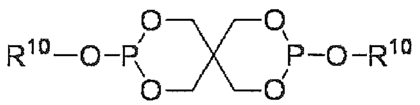
(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

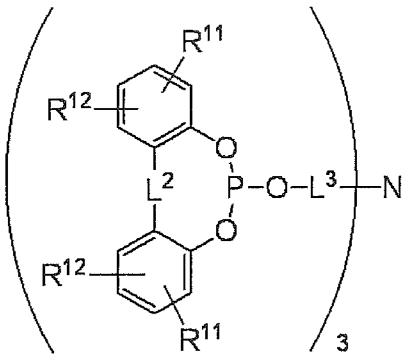

(6)

wherein in the formula (6),

each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

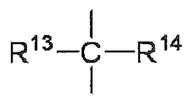

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

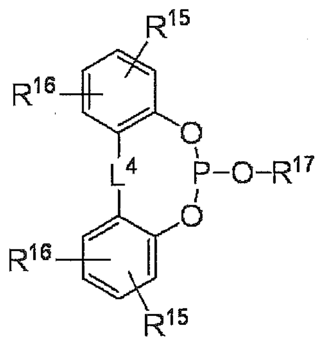

(7)

wherein in the formula (7),

each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

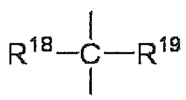

(7a)

wherein in the formula (7a), $R^{18}$ and $R^{19}$ are each independently a hydrogen atom or a $C_{1-7}$ alkyl group, and

the total carbon number of $R^{18}$ and $R^{19}$ is not more than 7.

[7] The stabilizer composition of the above-mentioned [6], wherein at least one selected from the group consisting of the compounds represented by the formulas (3) - (7) is the compound represented by the formula (3).
[8] A production method of a thermoplastic polymer composition, comprising mixing the stabilizer composition of any one of the above-mentioned [3] - [7] and a thermoplastic polymer.
[9] Use of the stabilizer composition of any one of the above-mentioned [3] - [7] for improving the processing stability of a thermoplastic polymer composition.
[10] A thermoplastic polymer composition comprising a compound represented by the formula (8):

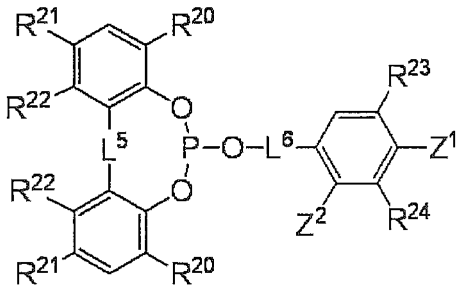
(8)

wherein in the formula (8),

each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):

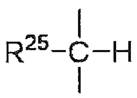
(8a)

wherein in the formula (8a), $R^{25}$ is a hydrogen atom, a $C_{1-8}$ alkyl group or a $C_{5-8}$ cycloalkyl group,
$L^6$ is a $C_{2-8}$ alkylene group or a divalent group represented by the formula (8b):

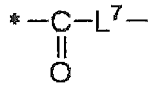
(8b)

wherein in the formula (8b), $L^7$ is a single bond or a $C_{1-8}$ alkylene group, and * shows bonding to the oxygen atom side, and
one of $Z^1$ and $Z^2$ is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group, trehalose and a thermoplastic polymer.

[11] The thermoplastic polymer composition of the above-mentioned [10], wherein the total amount of the compound represented by the formula (8) and trehalose is 0.001 - 3 parts by weight relative to 100 parts by weight of the thermoplastic polymer.
[12] A stabilizer composition comprising a compound represented by the formula (8) and trehalose.
[13] The stabilizer composition of the above-mentioned [12], wherein the compound represented by the formula (8) is 6-[3-(3-t-butyl-4-hydroxy-5-methylphenyl)propoxy]-2,4,8,10-tetra-t-butyldibenzo[d,f][1,3,2]dioxaphosphepine.
[14] The stabilizer composition of the above-mentioned [12] or [13], further comprising a compound represented by the formula (2).
[15] The stabilizer composition of any one of the above-mentioned [12] - [14], further comprising at least one selected from the group consisting of the compounds represented by the formulas (3) - (7).
[16] The stabilizer composition of the above-mentioned [15], wherein at least one selected from the group consisting

of the compounds represented by the formulas (3) - (7) is the compound represented by the formula (3).

[17] A production method of a thermoplastic polymer composition, comprising mixing the stabilizer composition of any one of the above-mentioned [12] - [16] and a thermoplastic polymer.

[18] Use of the stabilizer composition of any one of the above-mentioned [12] - [16] for improving the processing stability of a thermoplastic polymer composition.

[19] A thermoplastic polymer composition comprising a compound represented by the formula (2), trehalose and a thermoplastic polymer.

[20] The thermoplastic polymer composition of the above-mentioned [19], wherein the total amount of the compound represented by the formula (2) and trehalose is 0.001 - 3 parts by weight relative to 100 parts by weight of the thermoplastic polymer.

[21] The thermoplastic polymer composition of the above-mentioned [19] or [20], wherein the thermoplastic polymer is a styrene-butadiene block copolymer.

[22] A stabilizer composition comprising a compound represented by the formula (2) and trehalose.

[23] A stabilizer composition consisting of a compound represented by the formula (2) and trehalose.

[24] The stabilizer composition of the above-mentioned [22] or [23], wherein the compound represented by the formula (2) is at least one selected from the group consisting of octadecyl 3-(3,5-di-t-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5.5]undecane and pentaerythritol tetrakis[3-(3,5-di-t-butyl-4-hydroxyphenyl)propionate].

[25] A production method of a thermoplastic polymer composition, comprising mixing the stabilizer composition of any one of the above-mentioned [22] - [24] and a thermoplastic polymer.

[26] Use of the stabilizer composition of any one of the above-mentioned [22] - [24] for improving the processing stability of a thermoplastic polymer composition.

[27] A thermoplastic polymer composition comprising trehalose, a thermoplastic polymer and at least one selected from the group consisting of the compounds represented by the formulas (3) - (7).

[28] The thermoplastic polymer composition of the above-mentioned [27], wherein the total amount of trehalose and the compound selected from the group consisting of the compounds represented by the formulas (3) - (7) is 0.001 - 3 parts by weight relative to 100 parts by weight of the thermoplastic polymer.

[29] The thermoplastic polymer composition of the above-mentioned [27] or [28], wherein the thermoplastic polymer is a styrene-butadiene block copolymer.

[30] A stabilizer composition comprising trehalose and at least one selected from the group consisting of the compounds represented by the formulas (3) - (7).

[31] A stabilizer composition consisting of trehalose and at least one selected from the group consisting of the compounds represented by the formulas (3) - (7).

[32] The stabilizer composition of the above-mentioned [30] or [31], wherein at least one selected from the group consisting of the compounds represented by the formulas (3) - (7) is the compound represented by the formula (3).

[33] The stabilizer composition of the above-mentioned [32], wherein the compound represented by the formula (3) is tris(2,4-di-t-butylphenyl) phosphite.

[34] A production method of a thermoplastic polymer composition, comprising mixing the stabilizer composition of any one of the above-mentioned [30] - [33] and a thermoplastic polymer.

[35] Use of the stabilizer composition of any one of the above-mentioned [30] - [33] for improving the processing stability of a thermoplastic polymer composition.

In the present invention, the "$C_{a-b}$" means that the carbon number is not less than a and not more than b. In the following, the "compound represented by the formula (1)" and the like are sometimes abbreviated as "compound (1)" and the like. Similarly, the "divalent group represented by the formula (6a)" and the like are sometimes abbreviated as "divalent group (6a)" and the like.

## Effect of the Invention

By using compound (1), compound (2), at least one selected from the group consisting of compounds (3) - (7) or compound (8) in combination with trehalose, the processing stability of a thermoplastic polymer composition can be improved.

## Description of Embodiments

The present invention is explained successively in the following. In the following, the thermoplastic polymer composition of the present invention and the stabilizer composition of the present invention, which contain compound (1) and trehalose as essential components, are sometimes referred to as "the first thermoplastic polymer composition"

and "the first stabilizer composition", respectively.

In addition, the thermoplastic polymer composition of the present invention and the stabilizer composition of the present invention, which contain compound (8) and trehalose as essential components, are sometimes referred to as "the second thermoplastic polymer composition" and "the second stabilizer composition", respectively.

Furthermore, the thermoplastic polymer composition of the present invention and the stabilizer composition of the present invention, which contain compound (2) and trehalose as essential components, are sometimes referred to as "the third thermoplastic polymer composition" and "the third stabilizer composition", respectively.

Moreover, the thermoplastic polymer composition of the present invention and the stabilizer composition of the present invention, which contain trehalose and at least one selected from the group consisting of compounds (3) - (7) as essential components, are sometimes referred to as "the fourth thermoplastic polymer composition" and "the fourth stabilizer composition", respectively.

The first thermoplastic polymer composition is explained now. The first thermoplastic polymer composition contains compound (1), trehalose and a thermoplastic polymer. Only one kind of compound (1) may be used or two or more kinds thereof may be used in combination. In the following, compound (1) is explained successively.

Each $R^1$ and/or each $R^2$ in the formula (1) are/is independently a $C_{1-8}$ alkyl group, a $C_{6-12}$ aryl group or a $C_{7-18}$ aralkyl group. While there are two $R^1$, they may be the same or different, and they are preferably the same. The same applies to $R^2$.

The $C_{1-8}$ alkyl group may be a chain or a cyclic group, preferably a chain (linear or branched chain), more preferably a branched chain. The $C_{1-8}$ alkyl group includes a linear $C_{1-8}$ alkyl group (e.g., a methyl group, an ethyl group, a propyl group, a butyl group, a pentyl group (to be also referred to as an amyl group) and the like), a branched chain $C_{3-8}$ alkyl group (e.g., an isopropyl group, an isobutyl group, a sec-butyl group, a t-butyl group, a t-pentyl group, a 2-ethylhexyl group and the like), and a cyclic $C_{3-8}$ alkyl group (i.e., a $C_{3-8}$ cycloalkyl group, for example, a cyclopentyl group, a cyclohexyl group and the like). Examples of the $C_{6-12}$ aryl group include a phenyl group, a 1-naphthyl group, a 2-naphthyl group and the like. Examples of the $C_{7-18}$ aralkyl group include a benzyl group, a 1-phenylethyl group, a 2-phenylethyl group and the like.

Preferably, each $R^1$ and/or each $R^2$ are/is independently a branched chain $C_{3-8}$ alkyl group, more preferably a $C_{4-8}$ alkyl group having a tertiary carbon atom, still more preferably a t-butyl group or a t-pentyl group, particularly preferably a t-pentyl group.

$R^3$ in the formula (1) is a hydrogen atom or a $C_{1-3}$ alkyl group. The $C_{1-3}$ alkyl group may be a linear or branched chain. Examples of the $C_{1-3}$ alkyl group include a methyl group, an ethyl group, a propyl group and an isopropyl group. $R^3$ is preferably a hydrogen atom or a methyl group.

$R^4$ in the formula (1) is a hydrogen atom or a methyl group, preferably a hydrogen atom.

Examples of compound (1) include 2,4-di-t-butyl-6-[1-(3,5-di-t-butyl-2-hydroxyphenyl)ethyl]phenyl (meth)acrylate, 2-t-butyl-6-(3-t-butyl-2-hydroxy-5-methylbenzyl)-4-methylphenyl (meth)acrylate, 2,4-di-t-pentyl-6-[1-(3,5-di-t-pentyl-2-hydroxyphenyl)ethyl]phenyl (meth)acrylate, 2,4-di-t-butyl-6-(3,5-di-t-butyl-2-hydroxy-benzyl)phenyl (meth)acrylate, 2-t-butyl-6-(3-t-butyl-2-hydroxy-5-methylbenzyl)-4-ethylphenyl (meth)acrylate, 2-t-pentyl-6-(3-t-pentyl-2-hydroxy-5-methylbenzyl)-4-methylphenyl (meth)acrylate and the like. Here, the "(meth)acrylate" means "acrylate and methacrylate".

Preferable compound (1) is 2,4-di-t-pentyl-6-[1-(3,5-dit-pentyl-2-hydroxyphenyl)ethyl]phenyl acrylate (hereinafter sometimes to be abbreviated as "compound (1-1)"), and 2-t-butyl-6-(3-t-butyl-2-hydroxy-5-methylbenzyl)-4-methylphenyl acrylate (hereinafter sometimes to be abbreviated as "compound (1-2)"). Compound (1-1) is commercially available as Sumilizer (registered trade mark) GS(F) (manufactured by Sumitomo Chemical Company, Limited), and compound (1-2) is commercially available as Sumilizer (registered trade mark) GM (manufactured by Sumitomo Chemical Company, Limited).

As compound (1), a commercially available product can be used, or it can be produced according to a known method (for example, the method described in JP-A-1-168643 or JP-A-58-84835).

Trehalose may be an anhydride or a hydrate, or a mixture thereof. The trehalose is commercially available, and a commercially available product can be directly used.

Only one kind of thermoplastic polymers may be used or two or more kinds thereof may be used in combination. Examples of the thermoplastic polymer include polyethylene resin (high density polyethylene (HDPE), low density polyethylene (LDPE), linear low density polyethylene (LLDPE), ethylene-vinyl alcohol copolymer (EVOH), ethylene-ethyl acrylate copolymer (EEA), ethylene-vinyl acetate copolymer (EVA) and the like), polypropylene resin (crystalline propylene homopolymer, propylene-ethylene random copolymer, propylene-$\alpha$-olefin random copolymer, propylene-ethylene-$\alpha$-olefin copolymer, polypropylene block copolymer comprised of a block of propylene homopolymer or copolymer containing propylene as a main component and a block of copolymer of propylene and ethylene and/or other $\alpha$-olefin, and the like), methylpentene polymer, polystyrene resin (polystyrenes such as polystyrene (PS), poly(p-methylstyrene), poly($\alpha$-methylstyrene) and the like, acrylonitrile-styrene copolymer (SAN), acrylonitrile-butadiene-styrene copolymer (ABS), special acrylic rubber-acrylonitrile-styrene copolymer, acrylonitrile-chlorinated polyethylene-styrene copolymer (ACS), styrene-ethylene-butylene-styrene block copolymer (SEBS), styrene-isoprene-styrene block copolymer (SIS)

and the like), polybutadiene resin (polybutadiene; polybutadiene rubber (BR); styrene-butadiene copolymer (SB); styrene-butadiene block copolymer (SBS); impact resistance polystyrene (HI-PS) modified by polybutadiene, styrene-butadiene copolymer or SBS, styrene-butadiene thermoplastic elastomer and the like), chlorinated polyethylene (CPE), polychloroprene, chlorinated rubber, poly(vinyl chloride) thermoplastic elastomer, poly(vinyl chloride) (PVC), poly(vinylidene chloride) (PVDC), methacrylate resin, fluororesin, polyacetal (POM), grafted poly(phenylene ether) resin, poly(phenylene sulfide) resin (PPS), polyurethane (PU), polyamide (PA, also called as nylon (registered trade mark), for example, nylon 6 (Ny6), nylon 11 (Ny11), nylon 12 (Ny12), nylon 610 (Ny610), nylon 612 (Ny612), nylon MXD6 (NyMXD6)), polyester resin (e.g., poly(ethylene terephthalate) (PET), poly(butylene terephthalate) (PBT) and the like), poly(lactic acid) (PLA), polycarbonate (PC), polyacrylate, polysulfone (PPSU), poly(ether ether ketone) (PEEK), poly(ether sulfone) (PES), aromatic polyester, diallyl phthalate prepolymer, silicone resin (SI), 1,2-polybutadiene, polyisoprene, butadiene-acrylonitrile copolymer (NBR), ethylene-methyl methacrylate copolymer (EMMA) and the like.

Of these, due to good molding processability, polyethylene resin, polypropylene resin, polystyrene resin and polybutadiene resin are preferable, polyethylene resin and polybutadiene resin are more preferable, and styrene-butadiene block copolymer (SBS) is still more preferable.

While the weight average molecular weight (Mw) of the thermoplastic polymer to be used is not particularly limited, it is generally not less than 1000 and not more than 300,000. Mw can be measured by, for example, gel permeation chromatography (GPC) using polystyrene as a standard.

The total amount of compound (1) and trehalose in the first thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer.

The weight ratio of compound (1) and trehalose in the first thermoplastic polymer composition (i.e., compound (1):trehalose) is preferably 1000:1 - 0.05:1. Compound (1)trehalose is more preferably 1000:1 - 0.1:1 from the aspect of processing stability of the thermoplastic polymer composition, and still more preferably 1000:1 - 0.5:1, particularly preferably 1000:1 - 1:1, from the aspect of suppression of color change of the thermoplastic polymer composition.

The first thermoplastic polymer composition may further contain compound (2). Only one kind of compound (2) may be used or two or more kinds thereof may be used in combination. In the following, compound (2) is explained successively.

Each $R^5$ and/or each $R^6$ in the formula (2) are/is independently a hydrogen atom or a $C_{1-6}$ alkyl group. When n is two or more, $R^5$ may be the same as or different from each other, and they are preferably the same. The same applies to $R^6$. The $C_{1-6}$ alkyl group may be a chain or a cyclic group, and the chain may be a linear or branched chain. The $C_{1-6}$ alkyl group includes a linear $C_{1-6}$ alkyl group (a methyl group, an ethyl group, a propyl group, a butyl group, a pentyl group, a hexyl group), a branched chain $C_{3-6}$ alkyl group (e.g., an isopropyl group, an isobutyl group, a t-butyl group, an isopentyl group, a t-pentyl group, a t-hexyl group), and a cyclic $C_{3-6}$ alkyl group (i.e., a $C_{3-6}$ cycloalkyl group, for example, a cyclopentyl group, a cyclohexyl group). Preferably, each $R^5$ and/or each $R^6$ are/is independently a linear $C_{1-6}$ alkyl group or branched chain $C_{3-6}$ alkyl group, more preferably a methyl group or a t-butyl group. Still more preferably, each $R^5$ and each $R^6$ are t-butyl groups.

$L^1$ in the formula (2) is an n-valent $C_{1-24}$ alcohol residue optionally containing a hetero atom, and n is an integer of 1 - 4. Examples of the hetero atom include an oxygen atom, a sulfur atom, a nitrogen atom and the like. These hetero atoms may be replaced with the carbon atom of the n-valent $C_{1-24}$ alcohol residue. That is, the n-valent $C_{1-24}$ alcohol residue may have -O-, -S-, -NR- wherein R is a hydrogen atom or other substituent (for example, a $C_{1-6}$ alkyl group)) and the like. As the hetero atom, an oxygen atom is preferable.

The n-valent $C_{1-24}$ alcohol residue (n=1 - 4) may be a chain or a cyclic residue, or a combination of these. The chain may be a linear or branched chain.

Examples of the monovalent $C_{1-24}$ alcohol residue include the residues of methanol, ethanol, propanol, isopropanol, butanol, t-butanol, hexanol, octanol, decanol, dodecanol, tetradecanol, hexadecanol, octadecanol and the like.

Examples of the divalent $C_{1-24}$ alcohol residue include the residues of ethylene glycol, 1,2-propanediol, 1,3-propanediol, 1,4-butanediol, 1,5-pentanediol, 1,6-hexanediol, 1,8-octanediol, 1,10-decanediol, 1,12-dodecanediol, 1,14-tetradecanediol, 1,16-hexadecanediol, diethylene glycol, triethylene glycol, 3,9-bis(1,1-dimethyl-2-hydroxyethyl)-2,4,8,10-tetraoxaspiro[5.5]undecane and the like.

Examples of the trivalent $C_{1-24}$ alcohol residue include the residues of glycerol and the like.

Examples of the tetravalent $C_{1-24}$ alcohol residue include the residues of erythritol, pentaerythritol and the like.

Examples of compound (2) include ester of 3-(3,5-di-t-butyl-4-hydroxyphenyl)propionic acid, 3-(3-t-butyl-4-hydroxy-5-methylphenyl)propionic acid or 3-(3,5-dicyclohexyl-4-hydroxyphenyl)propionic acid and a monovalent or polyvalent alcohol. Examples of the aforementioned monovalent or polyvalent alcohol include methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, triethylene glycol, pentaerythritol, tris(hydroxyethyl)isocyanurate, N,N'-bis(hydroxyethyl) oxamide, 3-thiaundecanol, 3-thiapentadecanol, trimethylhexanediol, trimethylolpropane, 4-hydroxymethyl-1-phospha-2,6,7-trioxabicyclo[2,2,2]octane, 3,9-bis(1,1-dimethyl-2-hydroxyethyl)-2,4,8,10-tetraoxaspiro[5.5]undecane, a mixture

thereof and the like.

Preferable compound (2) is octadecyl 3-(3,5-di-t-butyl-4-hydroxyphenyl)propionate (hereinafter sometimes to be abbreviated as "compound (2-1)"), 3,9-bis[2-{3-(3-t-butyl-4-hydroxy-5-methylphenyl)propionyloxy}-1,1-dimethylethyl]-2,4,8,10-tetraoxaspiro[5.5]undecane (hereinafter sometimes to be abbreviated as "compound (2-2)") and pentaerythritol tetrakis[3-(3,5-di-t-butyl-4-hydroxyphenyl)propionate] (hereinafter sometimes to be abbreviated as "compound (2-3)"). Compound (2-1) is commercially available as "Irganox (registered trade mark) 1076" (manufactured by BASF), compound (2-2) is commercially available as "Sumilizer (registered trade mark) GA-80" (manufactured by Sumitomo Chemical Company, Limited), and compound (2-3) is commercially available as "Irganox (registered trade mark) 1010" (manufactured by BASF).

As compound (2), a commercially available product can be used, or it can be produced according to a known method (for example, the method described in US Patent No. 3330859, US Patent No. 3644482 or JP-A-59-25826).

When the first thermoplastic polymer composition contains compound (2), the content of compound (2) is preferably 0.001 - 3 parts by weight, more preferably 0.02 - 2 parts by weight, relative to 100 parts of weight of the first thermoplastic polymer composition.

The first thermoplastic polymer composition may further contain at least one selected from the group consisting of compounds (3) - (7). Only one kind of compounds (3) - (7) may be used or two or more kinds thereof may be used in combination. In the following, compounds (3) - (7) are explained successively.

Each $R^7$ and/or each $R^8$ in the formula (3) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. While there are three $R^7$, they may be the same as or different from each other, and they are preferably the same. The same applies to $R^8$. The positions of $R^7$ and $R^8$ are preferably the 2-position and the 4-position.

The $C_{1-9}$ alkyl group may be a linear or branched chain. The carbon number of the $C_{1-9}$ alkyl group is preferably not less than 3 and not more than 5. Examples of the $C_{1-9}$ alkyl group include a methyl group, an ethyl group, a propyl group, an isopropyl group, a butyl group, an isobutyl group, a sec-butyl group, a t-butyl group, a pentyl group, a t-pentyl group, a 2-ethylhexyl group, a nonyl group and the like.

The $C_{5-8}$ cycloalkyl group includes a cyclopentyl group, a cyclohexyl group, a cycloheptyl group and a cyclooctyl group.

Examples of the $C_{6-12}$ alkylcycloalkyl group include a 1-methylcyclopentyl group, a 2-methylcyclopentyl group, a 1-methylcyclohexyl group, a 2-methylcyclohexyl group, a 1-methyl-4-isopropylcyclohexyl group and the like.

Examples of the $C_{7-12}$ aralkyl group include a benzyl group, an $\alpha$-methylbenzyl group (also to be referred to as a 1-phenylethyl group), an $\alpha,\alpha$-dimethylbenzyl group (also to be referred to as a 1-methyl-1-phenylethyl group or a cumyl group) and the like.

Preferably, each $R^7$ and/or each $R^8$ are/is independently a hydrogen atom or a $C_{1-9}$ alkyl group, more preferably a hydrogen atom, a t-butyl group or a nonyl group, still more preferably a t-butyl group.

Examples of compound (3) include tris(2,4-di-t-butylphenyl) phosphite (hereinafter sometimes to be abbreviated as "compound (3-1)"), triphenyl phosphite, tris(4-nonylphenyl) phosphite, tris(2,4-dinonylphenyl) phosphite and the like. Of these, compound (3-1) is preferable. Compound (3-1) is commercially available as "Irgafos (registered trade mark) 168" (manufactured by BASF).

Each $R^9$ in the formula (4) is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. While there are four $R^9$, they may be the same as or different from each other, and they are preferably the same. Examples of the $C_{1-9}$ alkyl group, $C_{5-8}$ cycloalkyl group, $C_{6-12}$ alkylcycloalkyl group and $C_{7-12}$ aralkyl group for $R^9$ include those mentioned above. Each $R^9$ is preferably independently a hydrogen atom or a $C_{1-9}$ alkyl group, more preferably a hydrogen atom.

Examples of compound (4) include tetrakis(2,4-di-t-butylphenyl)-4,4-biphenylene diphoshonite (hereinafter sometimes to be abbreviated as "compound (4-1)"), tetrakis(2,4-di-t-butyl-5-methylphenyl)-4,4-biphenylene diphoshonite (hereinafter sometimes to be abbreviated as "compound (4-2)") and the like. Of these, compound (4-1) is preferable. Compound (4-1) is commercially available as "Sandostab (registered trade mark) P-EPQ" (manufactured by Clariant), and compound (4-2) is commercially available as "Yoshinox (registered trade mark) GSY-P101" (manufactured by API).

Each $R^{10}$ in the formula (5) is independently a $C_{1-18}$ alkyl group or a phenyl group. The phenyl group for $R^{10}$ may have, as a substituent, at least one selected from the group consisting of a $C_{1-9}$ alkyl group, a $C_{5-8}$ cycloalkyl group, a $C_{6-12}$ alkylcycloalkyl group and a $C_{7-12}$ aralkyl group. Examples of these substituents for phenyl group include those mentioned above. In addition, while there are two $R^{10}$, they may be the same as or different from each other, and they are preferably the same.

The $C_{1-18}$ alkyl group may be a linear or branched chain. The carbon number of the $C_{1-18}$ alkyl group is preferably not less than 12 and not more than 18. Examples of the $C_{1-18}$ alkyl group include a methyl group, an ethyl group, a propyl group, an isopropyl group, a butyl group, an isobutyl group, a t-butyl group, a hexyl group, an octyl group, a decyl group, a dodecyl group, a tetradecyl group, a hexadecyl group, an octadecyl group and the like.

Examples of the phenyl group substituted by a $C_{1-9}$ alkyl group include a 2-methylphenyl group, a 4-methylphenyl

group, a 2-t-butylphenyl group, a 4-t-butylphenyl group, a 2-nonylphenyl group, a 4-nonylphenyl group, a 2,4-di-t-butylphenyl group, a 2,4-di-nonylphenyl group, a 2,6-di-t-butylphenyl group, a 2-t-butyl-4-methylphenyl group, a 2-t-butyl-4-ethylphenyl group, a 2,5-di-t-butylphenyl group, a 2,6-di-t-butyl-4-methylphenyl group and the like.

Examples of the phenyl group substituted by a $C_{5-8}$ cycloalkyl group include a 2-cyclopentylphenyl group, a 2-cyclohexylphenyl group, a 4-cyclohexylphenyl group, a 2,4-dicyclohexylphenyl group and the like.

Examples of the phenyl group substituted by a $C_{6-12}$ alkylcycloalkyl group include a 2-(2-methylcyclohexyl) phenyl group, a 4-(2-methylcyclohexyl)phenyl group, a 2,4-di-(2-methylcyclohexyl)phenyl group and the like.

Examples of the phenyl group substituted by a $C_{7-12}$ aralkyl group include a 2-benzylphenyl group, a 2-cumylphenyl group, a 4-cumylphenyl group, a 2,4-dicumylphenyl group and the like.

Examples of the phenyl group substituted by a $C_{1-9}$ alkyl group and a $C_{5-8}$ cycloalkyl group include a 2-methyl-4-cyclohexylphenyl group and the like. Examples of the phenyl group substituted by a $C_{1-9}$ alkyl group and a $C_{6-12}$ alkylcycloalkyl group include a 2-methyl-4-(2-methylcyclohexyl)phenyl group and the like. Examples of the phenyl group substituted by a $C_{1-9}$ alkyl group and a $C_{7-12}$ aralkyl group include a 2-benzyl-4-methylphenyl group and the like.

Each $R^{10}$ is preferably independently an octadecyl group (also to be referred to as a stearyl group), a 2,6-di-t-butyl-4-methylphenyl group, a 2,4-di-t-butylphenyl group or a 2,4-dicumylphenyl group.

Examples of compound (5) include bis(2,6-di-t-butyl-4-methylphenyl)pentaerythritol diphosphite (hereinafter sometimes to be abbreviated as "compound (5-1)"), bis(2,4-dit-butylphenyl)pentaerythritol diphosphite (hereinafter sometimes to be abbreviated as "compound (5-2)"), bis(2,4-dicumylphenyl)pentaerythritol diphosphite (hereinafter sometimes to be abbreviated as "compound (5-3)"), distearylpentaerythritol diphosphite (hereinafter sometimes to be abbreviated as "compound (5-4)"), diisodecylpentaerythritol diphosphite, bis(2,4-di-t-butylphenyl)pentaerythritol diphosphite, bis(2,4-di-t-butyl-6-methylphenyl)pentaerythritol diphosphite, bis(2,4,6-tri-t-butylphenyl)pentaerythritol diphosphite and the like. Of these, compound (5-1), compound (5-2) and compound (5-3) are preferable. Compound (5-1) is commercially available as "Adekastab (registered trade mark) PEP-36" (manufactured by ADEKA), compound (5-2) is commercially available as "Ultranox (registered trade mark) 626" (manufactured by GE Plastics), compound (5-3) is commercially available as "Doverphos S9228T" (manufactured by Dover Chemical Corporation), and compound (5-4) is commercially available as "Adekastab (registered trade mark) PEP-8" (manufactured by ADEKA).

Each $R^{11}$ and/or each $R^{12}$ in the formula (6) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. Examples of the $C_{1-9}$ alkyl group, $C_{5-8}$ cycloalkyl group, $C_{6-12}$ alkylcycloalkyl group and $C_{7-12}$ aralkyl group for $R^{11}$ or $R^{12}$ include those mentioned above. While there are six $R^{11}$, they may be the same as or different from each other, and they are preferably the same. The same applies to $R^{12}$. The positions of $R^{11}$ and $R^{12}$ are preferably the 3-position and the 5-position, when the position of the carbon atom on the benzene ring to which $L^2$ is bonded is the 1-position. Preferably, each $R^{11}$ and/or each $R^{12}$ are/is independently a $C_{1-9}$ alkyl group, more preferably a t-butyl group.

Each $L^2$ in the formula (6) is independently a single bond, a sulfur atom or a divalent group represented by the formula (6a). The total carbon number of $R^{13}$ and $R^{14}$ in the formula (6a) is not more than 7, and $R^{13}$ and $R^{14}$ are each independently a hydrogen atom or a $C_{1-7}$ alkyl group. While there are three $L^2$, they may be the same as or different from each other, and they are preferably the same.

The $C_{1-7}$ alkyl group may be a linear or branched chain. The carbon number of the $C_{1-7}$ alkyl group is preferably not less than 1 and not more than 3. The total carbon number of $R^{13}$ and $R^{14}$ is preferably not more than 3. Examples of the $C_{1-7}$ alkyl group include a methyl group, an ethyl group, a propyl group, an isopropyl group, a butyl group, an isobutyl group, a sec-butyl group, a t-butyl group, a pentyl group, an isopentyl group, a neopentyl group, a t-pentyl group, a hexyl group, a heptyl group and the like.

Examples of the divalent group (6a) include $-CH_2-$, $-CH(CH_3)-$, $-CH(C_2H_5)-$, $-C(CH_3)_2-$, $-CH(n-C_3H_7)-$ and the like.

Each $L^2$ is preferably $-CH_2-$ or a single bond, more preferably a single bond.

Each $L^3$ in the formula (6) is independently a $C_{2-8}$ alkylene group. While there are three $L^3$, they may be the same as or different from each other, and they are preferably the same.

Examples of the $C_{2-8}$ alkylene group include an ethylene group, a propylene group ($-CH(CH3)CH_2-$, $-CH_2CH(CH_3)-$), a trimethylene group, a tetramethylene group, a pentamethylene group, a hexamethylene group, an octamethylene group, a 2,2-dimethyl-1,3-propylene group and the like.

Each $L^3$ is preferably independently an ethylene group or a trimethylene group, more preferably an ethylene group.

As compound (6), 6,6',6"-[nitrilotris(ethyleneoxy)]tris(2,4,8,10-tetra-t-butyldibenzo[d,f][1,3,2]dioxaphosphepine) (hereinafter sometimes to be abbreviated as "compound (6-1)") is preferable. Compound (6-1) is commercially available as "Irgafos (registered trade mark) 12" (manufactured by BASF).

Each $R^{15}$ and/or each $R^{16}$ in the formula (7) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. Examples of the $C_{1-9}$ alkyl group, $C_{5-8}$ cycloalkyl group, $C_{6-12}$ alkylcycloalkyl group and $C_{7-12}$ aralkyl group for $R^{15}$ or $R^{16}$ include those mentioned above.

While there are two $R^{15}$, they may be the same as or different from each other, and they are preferably the same. The same applies to $R^{16}$. The positions of $R^{15}$ and $R^{16}$ are preferably the 3-position and the 5-position, when the position of the carbon atom on the benzene ring to which $L^4$ is bonded is the 1-position. That is, when the position of the carbon atom on the benzene ring to which O is bonded is the 1-position, respectively, the 2-position and the 4-position are preferable. Preferably, each $R^{15}$ and/or each $R^{16}$ are/is independently a $C_{1-9}$ alkyl group, more preferably a t-butyl group.

$R^{17}$ in the formula (7) is a $C_{1-8}$ alkyl group or a phenyl group. The phenyl group for $R^{17}$ may have, as a substituent, at least one selected from the group consisting of a $C_{1-9}$ alkyl group, a $C_{5-8}$ cycloalkyl group, a $C_{6-12}$ alkylcycloalkyl group and a $C_{7-12}$ aralkyl group. Examples of the $C_{1-8}$ alkyl group and the phenyl group having a substituent for $R^{17}$ include those mentioned above. The carbon number of the $C_{1-8}$ alkyl group for $R^{17}$ is preferably not less than 4 and not more than 8. $R^{17}$ is preferably a $C_{1-8}$ alkyl group, more preferably an octyl group.

$L^4$ in the formula (7) is a single bond, a sulfur atom or a divalent group represented by the formula (7a). The total carbon number of $R^{18}$ and $R^{19}$ in the formula (7a) is not more than 7, and $R^{18}$ and $R^{19}$ are each independently a hydrogen atom or a $C_{1-7}$ alkyl group. Examples of the $C_{1-7}$ alkyl group for $R^{18}$ or $R^{19}$ include those mentioned above. The total carbon number for $R^{18}$ or $R^{19}$ is preferably not more than 3. Specific examples of the divalent group (7a) include those recited for the divalent group (6a). $L^4$ is preferably $-CH_2-$ or a single bond, more preferably $-CH_2-$.

Examples of compound (7) include 2,2-methylenebis(4,6-dit-butylphenyl) octyl phosphite (hereinafter sometimes to be abbreviated as "compound (7-1)") and 2,2'-methylenebis(4,6-dit-butylphenyl) 2-ethylhexyl phosphite. Of these, compound (7-1) is preferable. Compound (7-1) is commercially available as "Adekastab (registered trade mark) HP-10" (manufactured by ADEKA).

Among compounds (3) - (7), compound (3) is preferable, and compound (3-1) is more preferable.

When the first thermoplastic polymer composition contains at least one selected from the group consisting of compounds (3) - (7), the total amount of the compounds selected from the group consisting of compounds (3) - (7) is preferably 0.001 - 3 parts by weight, more preferably 0.02 - 2 parts by weight, relative to 100 parts of weight of the first thermoplastic polymer composition.

Next, the second thermoplastic polymer composition is explained. The second thermoplastic polymer composition contains compound (8), trehalose and a thermoplastic polymer. Only one kind of compound (8) may be used or two or more kinds thereof may be used in combination. Explanations of trehalose and the thermoplastic polymer in the second thermoplastic polymer composition are the same as those mentioned above. In the following, compound (8) is explained successively.

Each $R^{20}$ and/or each $R^{21}$ in the formula (8) are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group. $R^{23}$ and $R^{24}$ in the formula (8) are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group. While there are two $R^{20}$, they may be the same as or different from each other, and they are preferably the same. The same applies to $R^{21}$.

The $C_{1-8}$ alkyl group may be a linear or branched chain. The carbon number of the $C_{1-8}$ alkyl group is preferably not less than 1 and not more than 5. Examples of the $C_{1-8}$ alkyl group include a methyl group, an ethyl group, a propyl group, an isopropyl group, a butyl group, an isobutyl group, a sec-butyl group, a t-butyl group, a t-pentyl group, an isooctyl group (also to be referred to as a 6-methylheptyl group), a t-octyl group (also to be referred to as a 1,1,3,3-tetramethylbutyl group), a 2-ethylhexyl group and the like.

The $C_{5-8}$ cycloalkyl group includes a cyclopentyl group, a cyclohexyl group, a cycloheptyl group and a cyclooctyl group.

Examples of the $C_{6-12}$ alkylcycloalkyl group include a 1-methylcyclopentyl group, a 2-methylcyclopentyl group, a 1-methylcyclohexyl group, a 2-methylcyclohexyl group, a 1-methyl-4-isopropylcyclohexyl group and the like.

Examples of the $C_{7-12}$ aralkyl group include a benzyl group, $\alpha$-methylbenzyl group (also to be referred to as a 1-phenylethyl group), an $\alpha,\alpha$-dimethylbenzyl group (also to be referred to as a 1-methyl-1-phenylethyl group or a cumyl group) and the like.

Preferably, each $R^{20}$ and/or $R^{23}$ are/is independently a $C_{1-8}$ alkyl group (more preferably a $C_{4-8}$ alkyl group having a tertiary carbon atom), a $C_{5-8}$ cycloalkyl group (more preferably a cyclohexyl group) or a $C_{6-12}$ alkylcycloalkyl group (more preferably a 1-methylcyclohexyl group). As the $C_{4-8}$ alkyl group having a tertiary carbon atom, a t-butyl group, a t-pentyl group and a t-octyl group are still more preferable.

Each $R^{21}$ is preferably independently a $C_{1-8}$ alkyl group, a $C_{5-8}$ cycloalkyl group or a $C_{6-12}$ alkylcycloalkyl group, more preferably a $C_{1-5}$ alkyl group. The $C_{1-5}$ alkyl group may be a linear or branched chain. Examples of the $C_{1-5}$ alkyl group include a methyl group, an ethyl group, a propyl group, an isopropyl group, a butyl group, an isobutyl group, a sec-butyl group, a t-butyl group, a t-pentyl group and the like. More preferably, each $R^{21}$ is independently a methyl group, a t-butyl group or a t-pentyl group.

$R^{24}$ is preferably a hydrogen atom or a $C_{1-5}$ alkyl group, more preferably a hydrogen atom or a methyl group. Examples of the $C_{1-5}$ alkyl group for $R^{24}$ include those mentioned above.

Each $R^{22}$ in the formula (8) is independently a hydrogen atom or a $C_{1-8}$ alkyl group. While there are two $R^{22}$,

they may be the same as or different from each other, and they are preferably the same. Each $R^{22}$ is preferably a hydrogen atom or a $C_{1-5}$ alkyl group, more preferably a methyl group or a hydrogen atom. Examples of the $C_{1-8}$ alkyl group and $C_{1-5}$ alkyl group for $R^{22}$ include those mentioned above.

$L^5$ in the formula (8) is a single bond, a sulfur atom or a divalent group represented by the formula (8a). $R^{25}$ in the formula (8a) is a hydrogen atom, a $C_{1-8}$ alkyl group or a $C_{5-8}$ cycloalkyl group. $R^{25}$ is preferably a hydrogen atom or a $C_{1-5}$ alkyl group. Examples of the $C_{1-8}$ alkyl group, $C_{1-5}$ alkyl group and $C_{5-8}$ cycloalkyl group for $R^{25}$ include those mentioned above. $L^5$ is preferably a single bond or the divalent group (8a), more preferably a single bond.

$L^6$ in the formula (8) is a $C_{2-8}$ alkylene group or a divalent group represented by the formula (8b). $L^7$ in the formula (8b) is a single bond or a $C_{1-8}$ alkylene group. The $C_{2-8}$ alkylene group and $C_{1-8}$ alkylene group may be each a linear or branched chain. Examples of the $C_{2-8}$ alkylene group include an ethylene group, a propylene group (-CH($CH_3$)$CH_2$-, -CH2CH($C_H$3)-), a trimethylene group, a tetramethylene group, a pentamethylene group, a hexamethylene group, an octamethylene group, a 2,2-dimethyl-1,3-propylene group and the like. Examples of the $C_{1-8}$ alkylene group include a methylene group, the aforementioned $C_{2-8}$ alkylene group and the like.

$L^6$ is preferably a $C_{2-8}$ alkylene group, the divalent group (8b) wherein $L^7$ is a single bond (i.e., a carbonyl group), or the divalent group (8b) wherein $L^7$ is an ethylene group; more preferably a $C_{2-8}$ alkylene group; and still more preferably a trimethylene group.

One of $Z^1$ and $Z^2$ in the formula (8) is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group. Examples of the $C_{1-8}$ alkyl group for $Z^1$ and $Z^2$ include those mentioned above.

The $C_{1-8}$ alkoxy group may be a linear or branched chain. Examples of the $C_{1-8}$ alkoxy group include a methoxy group, an ethoxy group, a propoxy group, an isopropoxy group, a butoxy group, an isobutoxy group, a sec-butoxy group, a t-butoxy group, a t-pentyloxy group, an isooctyloxy group (also to be referred to as a 6-methylheptyloxy group), a t-octyloxy group (also to be referred to as a 1,1,3,3-tetramethylbutyloxy group), a 2-ethylhexyloxy group and the like.

Examples of the $C_{7-12}$ aralkyloxy group include a benzyloxy group, an $\alpha$-methylbenzyloxy group, an $\alpha,\alpha$-dimethylbenzyloxy group and the like.

Preferably, one of $Z^1$ and $Z^2$ is a hydroxy group, and the other is a hydrogen atom.

A preferable combination of the substituents is a combination wherein each $R^{20}$ and/or $R^{23}$ are/is independently a $C_{4-8}$ alkyl group having a tertiary carbon atom, cyclohexyl or a 1-methylcyclohexyl group, each $R^{21}$ is independently a $C_{1-5}$ alkyl group, each $R^{22}$ is independently a hydrogen atom or a $C_{1-5}$ alkyl group, $R^{24}$ is a hydrogen atom or a $C_{1-5}$ alkyl group, $L^5$ is a single bond, $L^6$ is a $C_{2-8}$ alkylene group, and one of $Z^1$ and $Z^2$ is a hydroxy group and the other is a hydrogen atom. In this preferable combination, each $R^{20}$ is more preferably the same. The same applies to each $R^{21}$ and each $R^{22}$. In addition, in this preferable combination, each $R^{20}$, each $R^{22}$ and $R^{23}$ are all still more preferably t-butyl groups or t-pentyl groups (particularly t-butyl groups).

Examples of compound (8) include 6-[3-(3-t-butyl-4-hydroxy-5-methylphenyl)propoxy]-2,4,8,10-tetra-t-butyldibenzo[d,f][1,3,2]dioxaphosphepine, 2,10-dimethyl-4,8-di-t-butyl-6-[3-(3,5-di-t-butyl-4-hydroxyphenyl)propoxy]-12H-dibenzo[d,g][1,3,2]dioxaphosphocin, 2,4,8,10-tetra-t-butyl-6-[3-(3,5-di-t-butyl-4-hydroxyphenyl)propoxy]dibenzo[d,f][1,3,2]dioxaphosphepine, 2,4,8,10-tetra-t-pentyl-6-[3-(3,5-di-t-butyl-4-hydroxyphenyl)propoxy]-12-methyl-12H-dibenzo[d,g][1,3,2]dioxaphosphocin, 2,10-dimethyl-4,8-di-t-butyl-6-[3-(3,5-di-t-butyl-4-hydroxyphenyl)propionyloxy]-12H-dibenzo[d,g][1,3,2]dioxaphosphocin, 2,4,8,10-tetra-t-pentyl-6-[3-(3,5-di-t-butyl-4-hydroxyphenyl)propionyloxy]-12-methyl-12H-dibenzo[d,g][1,3,2]dioxaphosphocin, 2,4,8,10-tetra-t-butyl-6-[3-(3,5-di-t-butyl-4-hydroxyphenyl)propionyloxy]-dibenzo[d,f][1,3,2]dioxaphosphepine, 2,10-dimethyl-4,8-di-t-butyl-6-(3,5-di-t-butyl-4-hydroxybenzoyloxy)-12H-dibenzo[d,g][1,3,2]dioxaphosphocin, 2,4,8,10-tetra-t-butyl-6-(3,5-di-t-butyl-4-hydroxybenzoyloxy)-12-methyl-12H-dibenzo[d,g][1,3,2]dioxaphosphocin, 2,10-dimethyl-4,8-di-t-butyl-6-[3-(3-methyl-4-hydroxy-5-t-butylphenyl)propoxy]-12H-dibenzo[d,g][1,3,2]dioxaphosphocin, 2,4,8,10-tetra-t-butyl-6-[3-(3,5-di-t-butyl-4-hydroxyphenyl)propoxy]-12H-dibenzo[d,g][1,3,2]dioxaphosphocin, 2,10-diethyl-4,8-di-t-butyl-6-[3-(3,5-di-t-butyl-4-hydroxyphenyl)propoxy]-12H-dibenzo[d,g][1,3,2]dioxaphosphocin, 2,4,8,10-tetra-t-butyl-6-[2,2-dimethyl-3-(3-t-butyl-4-hydroxy-5-methylphenyl)propoxy]-dibenzo[d,f][1,3,2]dioxaphosphepine and the like.

Of compound (8), 6-[3-(3-t-butyl-4-hydroxy-5-methylphenyl)propoxy]-2,4,8,10-tetra-t-butyldibenzo[d,f][1,3,2]dioxaphosphepine (hereinafter sometimes to be abbreviated as "compound (8-1)") is preferable. Compound (8-1) is commercially available as "Sumilizer (registered trade mark) GP" (manufactured by Sumitomo Chemical Company, Limited).

As compound (8), a commercially available product can be used, or it can be produced according to a known method (for example, the method described in JP-A-10-273494).

The total amount of compound (8) and trehalose in the second thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer.

The weight ratio of compound (8) and trehalose in the second thermoplastic polymer composition (i.e., compound (8) :trehalose) is preferably 1000:1 - 0.05:1. Compound (8) :trehalose is more preferably 1000:1 - 0.1:1 from the aspect

of processing stability of a thermoplastic polymer composition, and still more preferably 1000:1 - 0.5:1, particularly preferably 1000:1 - 1:1, from the aspect of suppression of color change of a thermoplastic polymer composition.

The second thermoplastic polymer composition may further contain compound (2). Only one kind of compound (2) may be used or two or more kinds thereof may be used in combination. Explanations of compound (2) are the same as those mentioned above.

When the second thermoplastic polymer composition contains compound (2), the content of compound (2) is preferably 0.001 - 3 parts by weight, more preferably 0.02 - 2 parts by weight, relative to 100 parts by weight of the second thermoplastic polymer composition.

The second thermoplastic polymer composition may further contain at least one selected from the group consisting of compounds (3) - (7). Only one kind of compounds (3) - (7) may be used or two or more kinds thereof may be used in combination. Explanations of compounds (3) - (7) are the same as those mentioned above.

When the second thermoplastic polymer composition contains at least one selected from the group consisting of compounds (3) - (7), the total amount of the compounds selected from the group consisting of compounds (3) - (7) is preferably 0.001 - 3 parts by weight, more preferably 0.02 - 2 parts by weight, relative to 100 parts by weight of the second thermoplastic polymer composition.

Next, the third thermoplastic polymer composition is explained. The third thermoplastic polymer composition contains compound (2), trehalose and a thermoplastic polymer. Only one kind of compound (2) may be used or two or more kinds thereof may be used in combination. Explanations of compound (2), trehalose and the thermoplastic polymer in the third thermoplastic polymer composition are the same as those mentioned above.

The total amount of compound (2) and trehalose in the third thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer.

The weight ratio of compound (2) and trehalose in the third thermoplastic polymer composition (i.e., compound (2):trehalose) is preferably 1000:1 - 0.05:1. Compound (2):trehalose is more preferably 1000:1 - 0.1:1 from the aspect of processing stability of a thermoplastic polymer composition, and still more preferably 1000:1 - 0.5:1, particularly preferably 1000:1 - 1:1, from the aspect of suppression of color change of a thermoplastic polymer composition.

The third thermoplastic polymer composition may further contain compound (1). Only one kind of compound (1) may be used or two or more kinds thereof may be used in combination. Explanations of compound (1) are the same as those mentioned above.

The third thermoplastic polymer composition may further contain at least one selected from the group consisting of compounds (3) - (7). Only one kind of compounds (3) - (7) may be used or two or more kinds thereof may be used in combination. Explanations of compounds (3) - (7) are the same as those mentioned above.

The third thermoplastic polymer composition may further contain compound (8). Only one kind of compound (8) may be used or two or more kinds thereof may be used in combination. Explanations of compound (8) are the same as those mentioned above.

Of compound (1) and compounds (3) - (8) usable for the third thermoplastic polymer composition, compound (1), compound (3) and compound (8) are preferable.

When the third thermoplastic polymer composition contains at least one of compound (1) and compounds (3) - (8), the content of each of compound (1) and compounds (3) - (8) is preferably 0.001 - 3 parts by weight, more preferably 0.02 - 2 parts by weight, relative to 100 parts by weight of the third thermoplastic polymer composition.

Next, the fourth thermoplastic polymer composition is explained. The fourth thermoplastic polymer composition contains trehalose, a thermoplastic polymer and at least one selected from the group consisting of compounds (3) - (7) (i.e., organic phosphorous compound). Only one kind of compounds (3) - (7) may be used or two or more kinds thereof may be used in combination. Explanations of compounds (3) - (7) and the thermoplastic polymer in the fourth thermoplastic polymer composition are the same as those mentioned above.

The total amount of trehalose and the compound selected from the group consisting of compounds (3) - (7) in the fourth thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer.

The weight ratio of the compound selected from the group consisting of compounds (3) - (7) and trehalose in the fourth thermoplastic polymer composition (i.e., compound selected from the group consisting of compounds (3) - (7):trehalose) is preferably 1000:1 - 0.05:1. The compound selected from the group consisting of compounds (3) - (7): trehalose is more preferably 1000:1 - 0.1:1 from the aspect of processing stability of a thermoplastic polymer composition, and still more preferably 1000:1 - 0.5:1, particularly preferably 1000:1 - 1:1, from the aspect of suppression of color change of a thermoplastic polymer composition.

The fourth thermoplastic polymer composition may further contain at least one selected from the group consisting of compound (1), compound (2) and compound (8). Only one kind of each of compound (1), compound (2) and compound (8) may be used or two or more kinds thereof may be used in combination. Explanations of compound (1), compound (2) and compound (8) are the same as those mentioned above.

When the fourth thermoplastic polymer composition contains at least one of compound (1), compound (2) and compound (8), the content of each of compound (1), compound (2) and compound (8) is preferably 0.001 - 3 parts by weight, more preferably 0.02 - 2 parts by weight, relative to 100 parts by weight of the fourth thermoplastic polymer composition.

The thermoplastic polymer composition of the present invention (i.e., the first - fourth thermoplastic polymer compositions) may contain additives other than the above-mentioned components (hereinafter to be abbreviated as "other additives"). Only one kind of other additives may be used or two or more kinds thereof may be used in combination. Examples of other additive include antioxidant, UV absorber, light stabilizer, stabilizer, lubricant, metal deactivator, nucleating agent, antistatic agent, flame-retardant, filler, pigment, inorganic filler and the like.

Examples of the antioxidant include phenol antioxidant (excluding compound (1) and compound (2)), sulfur antioxidant, phosphorus antioxidant (excluding compounds (3) - (8)), hydroquinone antioxidant and the like.

Examples of the phenol antioxidant include those described in the following [1] - [16] and the like.

[1] alkylated monophenol such as 2,6-di-t-butyl-4-methylphenol, 2,4,6-tri-t-butylphenol, 2,6-di-t-butylphenol, 2-t-butyl-4,6-dimethylphenol, 2,6-di-t-butyl-4-ethylphenol, 2,6-di-t-butyl-4-n-butylphenol, 2,6-di-t-butyl-4-isobutylphenol, 2,6-dicyclopentyl-4-methylphenol, 2-($\alpha$-methylcyclohexyl)-4,6-dimethylphenol, 2,6-dioctadecyl-4-methylphenol, 2,4,6-tricyclohexylphenol, 2,6-di-t-butyl-4-methoxymethylphenol, 2,6-di-nonyl-4-methylphenol, 2,4-dimethyl-6-(1'-methylundecyl-1'-yl)phenol, 2,4-dimethyl-6-(1'-methylheptadecyl-1'-yl)phenol, 2,4-dimethyl-6-(1'-methyltridecyl-1'-yl)phenol and the like.

[2] alkylthiomethylphenol such as 2,4-bis(octylthiomethyl)-6-t-butylphenol, 2,4-bis(octylthiomethyl)-6-methylphenol, 2,4-bis(octylthiomethyl)-6-ethylphenol, 2,6-bis(dodecylthiomethyl)-4-nonylphenol and the like.

[3] alkylidene bisphenol and derivatives thereof such as 2,2'-methylenebis(4-methyl-6-t-butylphenol), 2,2'-methylenebis(4-ethyl-6-t-butylphenol), 2,2'-methylenebis[4-methyl-6-($\alpha$-methylcyclohexyl)phenol], 2,2'-methylenebis(4-methyl-6-cyclohexylphenol), 2,2'-methylenebis(4-methyl-6-nonylphenol), 2,2'-methylenebis(4,6-di-t-butylphenol), 2,2'-ethylidenebis(4,6-di-t-butylphenol), 2,2'-ethylidenebis(4-isobutyl-6-t-butylphenol), 2,2'-methylenebis[6-($\alpha$-methylbenzyl)-4-nonylphenol], 2,2'-methylenebis[6-($\alpha$,$\alpha$-dimethylbenzyl)-4-nonylphenol], 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2-methylphenyl)butane, 2,6-bis(3-t-butyl-5-methyl-2-hydroxybenzyl)-4-methylphenol, 1,1,3-tris(5-t-butyl-4-hydroxy-2-methylphenyl)butane, 1,1-bis(5-t-butyl-4-hydroxy-2-methylphenyl)-3-n-dodecylmercaptobutane, ethylene glycol bis[3,3-bis(3'-t-butyl-4'-hydroxyphenyl)butyrate], bis(3-t-butyl-4-hydroxy-5-methylphenyl)dicyclopentadiene, bis[2-(3'-t-butyl-2'-hydroxy-5'-methylbenzyl)-6-t-butyl-4-methylphenyl] terephthalate, 1,1-bis(3,5-dimethyl-2-hydroxyphenyl)butane, 2,2-bis(3,5-di-t-butyl-4-hydroxyphenyl)propane, 2,2-bis(5-t-butyl-4-hydroxy-2-methylphenyl)-4-n-dodecylmercaptobutane, 1,1,5,5-tetra(5-t-butyl-4-hydroxy-2-methylphenyl)pentane and the like.

[4] acylaminophenol derivative such as 4-hydroxylauryl anilide, 4-hydroxystearic anilide, octyl-N-(3,5-di-t-butyl-4-hydroxyphenyl)carbamate and the like.

[5] ester of $\beta$-(3,5-di-t-butyl-4-hydroxyphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[6] bis(hydroxyphenyl)sulfide such as 2,2'-thiobis(6-t-butylphenol), 2,2'-thiobis(4-methyl-6-t-butylphenol), 2,2'-thiobis(4-octylphenol), 4,4'-thiobis(2-methyl-6-t-butylphenol), 4,4'-bis(2,6-dimethyl-4-hydroxyphenyl)sulfide and the like.

[7] O-benzyl derivative, N-benzyl derivative and S-benzyl derivative such as 3,5,3',5'-tetra-t-butyl-4,4'-dihydroxydibenzyl ether, octadecyl 4-hydroxy-3,5-dimethylbenzylmercaptoacetate, tris(3,5-di-t-butyl-4-hydroxybenzyl)amine, bis(4-t-butyl-3-hydroxy-2,6-dimethylbenzyl) dithioterephthalate, bis(3,5-di-t-butyl-4-hydroxybenzyl)sulfide, isooctyl 3,5-di-t-butyl-4-hydroxybenzylmercaptoacetate and the like.

[8] triazine derivative such as 2,4-bis(n-octylthio)-6-(4-hydroxy-3,5-di-t-butylanilino)-1,3,5-triazine, 2-n-octylthio-4,6-bis(4-hydroxy-3,5-di-t-butylanilino)-1,3,5-triazine, 2-n-octylthio-4,6-bis(4-hydroxy-3,5-di-t-butylphenoxy)-1,3,5-triazine, 2,4,6-tris(3,5-di-t-butyl-4-phenoxy)-1,3,5-triazine, tris(4-t-butyl-3-hydroxy-2,6-dimethylbenzyl)isocyanurate, tris(3,5-di-t-butyl-4-hydroxybenzyl)isocyanurate, 2,4,6-tris(3,5-di-t-butyl-4-hydroxyphenylethyl)-1,3,5-triazine, 2,4,6-tris(3,5-di-t-butyl-4-hydroxyphenylpropyl)-1,3,5-triazine, tris(3,5-dicyclohexyl-4-hydroxybenzyl)isocyanurate, tris[2-(3',5'-di-t-butyl-4'-hydroxycinnamoyloxy)ethyl]isocyanurate and the like.

[9] hydroxybenzylated malonate derivative such as dioctadecyl 2,2-bis(3,5-di-t-butyl-2-hydroxybenzyl)malonate, dioctadecyl 2-(3-t-butyl-4-hydroxy-5-methylbenzyl)malonate, didodecylmercaptoethyl 2,2-bis(3,5-di-t-butyl-4-hydroxybenzyl)malonate, bis[4-(1,1,3,3-tetramethylbutyl)phenyl] 2,2-bis(3,5-di-t-butyl-4-hydroxybenzyl)malonate and the like.

[10] aromatic hydroxybenzyl derivative such as 1,3,5-trimethyl-2,4,6-tris(3,5-di-t-butyl-4-hydroxybenzyl)benzene, 1,4-bis(3,5-di-t-butyl-4-hydroxybenzyl)-2,3,5,6-tetramethylbenzene, 2,4,6-tris(3,5-di-t-butyl-4-hydroxybenzyl)phenol and the like.

[11] benzylphosphonate derivative such as dimethyl 3,5-di-t-butyl-4-hydroxybenzylphosphonate, diethyl 3,5-di-t-butyl-4-hydroxybenzylphosphonate, dioctadecyl 3,5-di-t-butyl-4-hydroxybenzylphosphonate, dioctadecyl 5-t-butyl-4-hydroxy-3-methylbenzylphosphonate, calcium salt of 3,5-di-t-butyl-4-hydroxybenzylphosphonic acid monoester and the like.

[12] ester of β-(5-t-butyl-4-hydroxy-3-methylphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[13] ester of β-(3,5-dicyclohexyl-4-hydroxyphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[14] ester of 3,5-di-t-butyl-4-hydroxyphenylacetic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof).

[15] amide of β-(3,5-di-t-butyl-4-hydroxyphenyl)propionic acid such as N,N'-bis[3-(3',5'-di-t-butyl-4'-hydroxyphenyl) propionyl]hydrazine, N,N'-bis[3-(3',5'-di-t-butyl-4'-hydroxyphenyl)propionyl]hexamethylenediamine, N,N'-bis[3-(3',5'-di-t-butyl-4'-hydroxyphenyl)propionyl]trimethylenediamine and the like.

[16] tocopherols such as α-tocopherol, β-tocopherol, γ-tocopherol, δ-tocopherol and the like.

Examples of the sulfur antioxidant include dilauryl 3,3'-thiodipropionate, tridecyl 3,3'-thiodipropionate, dimyristyl 3,3'-thiodipropionate, distearyl 3,3'-thiodipropionate, lauryl stearyl 3,3'-thiodipropionate, neopentanetetrakis(3-lauryl thiopropionate) and the like.

Examples of the phosphorus antioxidant include trilauryl phosphite, trioctadecyl phosphite, tristearylsorbitol triphosphite, 2,2'-ethylidenebis(4,6-di-t-butylphenyl) fluorophosphite, bis(2,4-di-t-butyl-6-methylphenyl)ethyl phosphite, bis(2,4-di-t-butyl-6-methylphenyl)methyl phosphite, 2-(2,4,6-tri-t-butylphenyl)-5-ethyl-5-butyl-1,3,2-oxaphosphorinan and the like.

Examples of the hydroquinone antioxidant include 2,6-dit-butyl-4-methoxyphenol, 2,5-di-t-butylhydroquinone, 2,5-di-t-pentylhydroquinone, 2,6-diphenyl-4-octadecyloxyphenol, 2,6-dit-butylhydroquinone, 2,5-di-t-butyl-4-hydroxyanisole, 3,5-dit-butyl-4-hydroxyphenyl stearate, bis(3,5-di-t-butyl-4-hydroxyphenyl) adipate and the like.

Examples of the UV absorber include those described in the following [1] - [3] and the like.

[1] salicylate derivative such as phenyl salicylate, 4-t-butylphenyl salicylate, 2,4-di-t-butylphenyl 3',5'-di-t-butyl-4'-hydroxybenzoate, 4-t-octylphenyl salicylate, bis(4-t-butylbenzoyl)resorcinol, benzoylresorcinol, hexadecyl 3',5'-di-t-butyl-4'-hydroxybenzoate, octadecyl 3',5'-di-t-butyl-4'-hydroxybenzoate, 2-methyl-4,6-di-t-butylphenyl 3',5'-di-t-butyl-4'-hydroxybenzoate and the like.

[2] 2-hydroxybenzophenone derivative such as 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone and the like.

[3] 2-(2'-hydroxyphenyl)benzotriazoles such as 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-sec-butyl-2'-hydroxy-5'-t-butylphenyl) benzotriazole, 2-(2'-hydroxy-4'-octyloxyphenyl)benzotriazole, 2-(3',5'-di-t-pentyl-2'-hydroxyphenyl)benzotriazole, 2-[2'-hydroxy-3',5'-bis(α,α-dimethylbenzyl)phenyl]-2H-benzotriazole, 2-[(3'-t-butyl-2'-hydroxyphenyl)-5'-(2-octyloxycarbonylethyl)phenyl]-5-chlorobenzotriazole, 2-[3'-t-butyl-5'-[2-(2-ethylhexyloxy)carbonylethyl]-2'-hydroxyphenyl]-5-chlorobenzotriazole, 2-[3'-t-butyl-2'-hydroxy-5'-(2-methoxycarbonylethyl)phenyl]-5-chlorobenzotriazole, 2-[3'-t-butyl-2'-hydroxy-5'-(2-methoxycarbonylethyl)phenyl]benzotriazole, 2-[3'-t-butyl-2'-hydroxy-5-(2-octyloxycarbonylethyl)phenyl]benzotriazole, 2-[3'-t-butyl-2'-hydroxy-5'-[2-(2-ethylhexyloxy)carbonylethyl]phenyl]benzotriazole, 2-[2-hydroxy-3-(3,4,5,6-tetrahydrophthalimidomethyl)-5-methylphenyl]benzotriazole, 2-(3,5-di-t-butyl-2-hydroxyphenyl)-5-chlorobenzotriazole, mixture of 2-(3'-dodecyl-2'-hydroxy-5'-methylphenyl)benzotriazole and 2-[3'-t-butyl-2'-hydroxy-5'-(2-isooctyloxycarbonylethyl)phenyl]benzotriazole, 2,2'-methylenebis[6-(2H-benzotriazol-2-yl)-4-(1,1,3,3-tetramethylbutyl)phenol], 2,2'-methylenebis[4-t-butyl-6-(2H-benzotriazol-2-yl)phenol], condensate of poly(3 - 11)(ethylene glycol) and 2-[3'-t-butyl-2'-hydroxy-5'-(2-methoxycarbonylethyl)phenyl]benzotriazole, condensate of poly(3-11)(ethylene glycol) and methyl 3-[3-(2H-benzotriazol-2-yl)-5-t-butyl-4-hydroxyphenyl]propionate, 2-ethylhexyl 3-[3-t-butyl-5-(5-chloro-2H-benzotriazol-2-yl)-4-hydroxyphenyl]propionate, octyl 3-[3-t-butyl-5-(5-chloro-2H-benzotriazol-2-yl)-4-hydroxyphenyl]propionate, methyl 3-[3-t-butyl-5-(5-chloro-2H-benzotriazol-2-yl)-4-hydroxyphenyl]propionate, 3-[3-t-butyl-5-(5-chloro-2H-benzotriazol-2-yl)-4-hydroxyphenyl]propionic acid and the like.

Examples of the light stabilizer include those described in the following [1] - [5] and the like.

[1] hindered amine light stabilizer, for example, those described in the following [a] - [c].

[a] bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis (1,2,2,6,6-pentamethyl-4-piperidyl) 2-(3,5-di-t-butyl-4-hydroxybenzyl)-2-butylmalonate, bis(1-acryloyl-2,2,6,6-tetramethyl-4-piperidyl) 2,2-bis(3,5-di-t-butyl-4-hydroxybenzyl)malonate, bis(1,2,2,6,6-pentamethyl-4-piperidyl) decanedioate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate.

[b] mixed ester of 1,2,3,4-butanetetracarboxylic acid and 1,2,2,6,6-pentamethyl-4-piperidinol and 1-tridecanol, mixed ester of 1,2,3,4-butanetetracarboxylic acid and 2,2,6,6-tetramethyl-4-piperidinol and 1-tridecanol, mixed ester of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro[5.5]undecane, mixed ester of 1,2,3,4-butanetetracarboxylic acid and 2,2,6,6-tetramethyl-4-piperidinol and 3,9-bis(2-hydroxy-1,1-dimethylethyl)-2,4,8,10-tetraoxaspiro[5.5]undecane.

[c] polycondensate of dimethyl succinate and 1-(2-hydroxyethyl)-4-hydroxy-2,2,6,6-tetramethylpiperidine, poly[(6-morpholino-1,3,5-triazine-2,4-diyl)((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazine-2,4-diyl)((2,2,6,6-tetramethyl-4-piperidyl)imino)hexamethylene((2,2,6,6-tetramethyl-4-piperidyl)imino)], polycondensate of N,N'-bis(2,2,6,6-tetramethyl-4-piperidyl)hexamethylenediamine and 1,2-dibromoethane, N,N',4,7-tetrakis[4,6-bis(N-butyl-N-(2,2,6,6-tetramethyl-4-piperidyl)amino)-1,3,5-triazin-2-yl]-4,7-diazadecane-1,10-diamine, N,N',4-tris[4,6-bis(N-butyl-N-(2,2,6,6-tetramethyl-4-piperidyl)amino)-1,3,5-triazin-2-yl]-4,7-diazadecane-1,10-diamine, N,N',4,7-tetrakis[4,6-bis(N-butyl-N-(1,2,2,6,6-pentamethyl-4-piperidyl)amino)-1,3,5-triazin-2-yl]-4,7-diazadecane-1,10-diamine, N,N',4-tris[4,6-bis(N-butyl-N-(1,2,2,6,6-pentamethyl-4-piperidyl)amino)-1,3,5-triazin-2-yl]-4,7-diazadecane-1,10-diamine.

[2] acrylate light stabilizer such as ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate, N-(β-carbomethoxy-β-cyanovinyl)-2-methylindoline and the like.

[3] nickel light stabilizer such as nickel complex of 2,2'-thiobis-[4-(1,1,3,3-tetramethylbutyl)phenol], nickel dibutyldithiocarbamate, nickel salt of monoalkylester, nickel complex of ketoxime and the like.

[4] oxamide light stabilizer such as 4,4'-dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide, 2-ethoxy-5,4'-di-t-butyl-2'-ethyloxanilide and the like.

[5] 2-(2-hydroxyphenyl)-1,3,5-triazine light stabilizer such as 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethylphenyl)-1,3,5-triazine, 2-[2-hydroxy-4-(2-hydroxy-3-octyloxypropoxy)phenyl]-4,6-bis(2,4-dimethylphenyl)-1,3,5-triazine and the like.

Examples of the stabilizer include hydroxyamines such as N,N-dibenzylhydroxyamine, N,N-diethylhydroxyamine, N,N-dioctylhydroxyamine, N,N-dilauryl hydroxyamine, N,N-ditetradecylhydroxyamine, N,N-dihexadecylhydroxyamine, N,N-dioctadecylhydroxyamine, N-hexadecyl-N-octadecylhydroxyamine, N-heptadecyl-N-octadecylhydroxyamine and the like, and the like.

Examples of the lubricant include aliphatic hydrocarbon such as paraffin, wax and the like, $C_{8-22}$ higher fatty acid, metal (Al, Ca, Mg, Zn) salt of $C_{8-22}$ higher fatty acid, $C_{8-22}$ aliphatic alcohol, polyglycol, ester of $C_{4-22}$ fatty acid and $C_{4-18}$ aliphatic monovalent alcohol, $C_{8-22}$ higher aliphatic amide, silicone oil, rosin derivative and the like.

Of the aforementioned other additives, phenol antioxidant, phosphorus antioxidant, sulfur antioxidant, UV absorber and hindered amine light stabilizer are preferable, and phenol antioxidant is more preferable.

Examples of particularly preferable phenol antioxidant include those described below: 2,6-di-t-butyl-4-methylphenol, 2,4,6-tri-t-butylphenol, 2,4-bis(octylthiomethyl)-6-t-butylphenol, 2,2'-thiobis(6-t-butylphenol), 2,2'-methylenebis (4-methyl-6-t-butylphenol), 2,2'-methylenebis(4-ethyl-6-t-butylphenol), 2,2'-methylenebis[4-methyl-6-(α-methylcyclohexyl)phenol], 2,2'-methylenebis(4-methyl-6-cyclohexylphenol), 2,2'-methylenebis(4,6-di-t-butylphenol), 2,2'-ethylidenebis(4,6-di-t-butylphenol), 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2-methylphenyl)butane, 1,1,3-tris(5-t-butyl-4-hydroxy-2-methylphenyl)butane, ethylene glycol bis[3,3-bis(3'-t-butyl-4'-hydroxyphenyl)butyrate], 2,4,6-tris(3,5-di-t-butyl-4-phenoxy)-1,3,5-triazine, tris(4-t-butyl-3-hydroxy-2,6-dimethylbenzyl)isocyanurate, bis(3,5-di-t-butyl-4-hydroxybenzyl)isocyanurate, tris[2-(3',5'-di-t-butyl-4'-hydroxycinnamoyloxy)ethyl]isocyanurate, diethyl 3,5-di-t-butyl-4-hydroxybenzylphosphonate, di-n-octadecyl 3,5-di-t-butyl-4-hydroxybenzylphosphonate, calcium salt of 3,5-di-t-butyl-4-hydroxybenzylphosphonic acid monoester, neopentanetetrayl tetrakis(3,5-di-t-butyl-4-hydroxycinnamate), thiodiethylene bis(3,5-di-t-butyl-4-hydroxycinnamate), 1,3,5-trimethyl-2,4,6-tris(3,5-di-t-butyl-4-hydroxybenzyl)benzene, 3,6-dioxaoctamethylene bis(3,5-di-t-butyl-4-hydroxycinnamate), hexamethylene bis(3,5-di-t-butyl-4-hydroxycinnamate), triethylene glycol bis(5-t-butyl-4-hydroxy-3-methylcinnamate), 3,9-bis[2-(3-(3-t-butyl-4-hydroxy-5-methylphenyl)propionyloxy)-1,1-dimethylethyl]-2,4,8,10-tetraoxaspiro[5.5]undecane, N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine.

Examples of particularly preferable phosphorus antioxidant include those described below: 2,2'-ethylidenebis (4,6-di-t-butylphenyl) fluorophosphite, bis(2,4-di-t-butyl-6-methylphenyl) ethyl phosphite, 2-(2,4,6-tri-t-butylphenyl)-5-ethyl-5-butyl-1,3,2-oxaphosphorinan.

Examples of particularly preferable UV absorber include those described below: phenyl salicylate, 4-t-butylphenyl salicylate, 2,4-di-t-butylphenyl 3',5'-di-t-butyl-4'-hydroxybenzoate, 4-t-octylphenyl salicylate, 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone, 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-sec-butyl-2'-hydroxy-5'-t-butylphenyl)benzotriazole, 2-(2'-hydroxy-4'-octyloxyphenyl)benzotriazole, 2-(3',5'-di-t-pentyl-2'-hydroxyphenyl)benzotriazole, 2-[2'-hydroxy-3',5'-bis(α,α-dimethylbenzyl)phenyl]-2H-benzotriazole.

Examples of particularly preferable hindered amine light stabilizer include those described below: bis(2,2,6,6-tetramethyl-4-piperidyl) sebacate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl) 2-(3,5-di-t-butyl-4-hydroxybenzyl)-2-butylmalonate, bis (1-acryloyl-2,2,6,6-tetramethyl-4-piperidyl) 2,2-bis(3,5-di-t-butyl-4-hydroxybenzyl)-2-butylmalonate, bis(2,2,6,6-tetramethyl-4-piperidyl) succinate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,6,6-pentamethyl-4-piperidyl) 1,2,3,4-butanetetracarboxylate, mixed ester of 1,2,3,4-butanetetracarboxylic acid and 1,2,2,6,6-pentamethyl-4-piperidinol and 1-tridecanol, mixed ester of 1,2,3,4-butanetetracarboxylic acid and 2,2,6,6-tetramethyl-4-piperidinol and 1-tridecanol, mixed ester of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro [5.5]undecane, mixed ester of 1,2,3,4-butanetetracarboxylic acid and 2,2,6,6-tetramethyl-4-piperidinol and 3,9-bis(2-hydroxy-1,1-dimethylethyl)-2,4,8,10-tetraoxaspiro[5.5]undecane, polycondensate of dimethyl succinate and 1-(2-hydroxyethyl)-4-hydroxy-2,2,6,6-tetramethylpiperidine, poly[(6-morpholino-1,3,5-triazine-2,4-diyl)((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazine-2,4-diyl)((2,2,6,6-tetramethyl-4-piperidyl)imino)hexamethylene((2,2,6,6-tetramethyl-4-piperidyl)imino)].

Examples of the production method of the thermoplastic polymer composition of the present invention (i.e., the first - fourth thermoplastic polymer compositions) include

(a) a method including adding, when kneading a thermoplastic polymer, essential components compound (1) - compound (8) and trehalose, and, where necessary, optional components compound (1) - compound (8) and other

additives separately to the thermoplastic polymer;
(b) a method including first mixing essential components compound (1) - compound (8) and trehalose, and, where necessary, optional components compound (1) - compound (8) and other additives to give a stabilizer composition, then mixing the obtained stabilizer composition with a thermoplastic polymer;

and the like. In view of the dispersibility of the essential components compound (1) - compound (8) and trehalose in a thermoplastic polymer, the method of the aforementioned (b) is preferable.

The production method of the stabilizer composition in the method of the aforementioned (b) is similar to the exemplified method described in the below-mentioned production method of a stabilizer composition.

Examples of the mixing method of a stabilizer composition and a thermoplastic polymer include

(c) a method including dry-blending a stabilizer composition and a thermoplastic polymer, melt-kneading them and extruding the mixture in a single screw or multiscrew extruder to give pellets of a thermoplastic polymer composition;
(d) a method including dissolving a stabilizer composition in a solvent such as cyclohexane and the like to give a solution of the stabilizer composition, adding the solution to a polymer solution after completion of thermoplastic polymer polymerization, and desolvating the mixture;

and the like.

The obtained thermoplastic polymer composition may be supplied in a molten state without cooling to a molding machine for molding. The molding method is not particularly limited and, for example, molding method such as injection molding method, extrusion molding method, extrusion blow molding method, injection blow molding method, biaxial orientation blow molding method and the like can be used.

By cooling after molding, a thermoplastic polymer molded product comprised of the thermoplastic polymer composition of the present invention is obtained. Examples of the use of the obtained thermoplastic polymer molding product include electronic component (for example, coil bobbin, connector, switch, resistor component, socket, relay, condenser case, fuse, motor, oven, printed circuit board, IC manufacturing equipment, lamp and the like), automobile part (for example, air outlet garnish, hood vent, distributor cap, exhaust gas control valve and the like), clock component (for example, machine component such as gear, cam and the like, ground plane and the like), camera component (for example, bottom cover, barrel, lever and the like), component of leisure goods (for example, reel and the like), household electrical appliance housing, illumination wiring equipment, film, bottle, fiber, septic tank, toilet tank, bath tub, unit bath, water tank, boats and ships, chemicals tank, pipe, corrugated plate, flat plate, paint, decorative laminate, mounting agent for electronic component, resin concrete and the like.

Next, the stabilizer composition of the present invention (i.e., the first - fourth stabilizer compositions) is explained. The stabilizer composition of the present invention is used to improve processing stability of thermoplastic polymer compositions. The processing stability of a thermoplastic polymer composition can be evaluated by the method described in the below-mentioned Examples.

First, the first stabilizer composition is explained. The first stabilizer composition contains compound (1) and trehalose. Only one kind of compound (1) may be used or two or more kinds thereof may be used in combination. Explanations of compound (1) and trehalose are the same as those mentioned above.

The weight ratio of compound (1) and trehalose in the first stabilizer composition (i.e., compound (1):trehalose) is preferably 1000:1 - 0.05:1. Compound (1):trehalose is more preferably 1000:1 - 0.1:1 from the aspect of processing stability of the thermoplastic polymer composition, and still more preferably 1000:1 - 0.5:1, particularly preferably 1000: 1 - 1:1, from the aspect of suppression of color change of the thermoplastic polymer composition.

The first stabilizer composition may contain components other than compound (1) and trehalose as long as the effect of the present invention is not inhibited. For example, the first stabilizer composition may further contain compound (2). In addition, the first stabilizer composition may further contain at least one selected from the group consisting of compounds (3) - (7). Only one kind of compounds (2) - (7) may be used or two or more kinds thereof may be used in combination. Explanations of compound (2) - compound (7) are the same as those mentioned above.

The content of compound (2) in the first stabilizer composition is preferably 0 - 90 parts by weight, more preferably 0.1 - 80 parts by weight, relative to 100 parts by weight of the first stabilizer composition. The total amount of the compounds selected from the group consisting of compounds (3) - (7) in the first stabilizer composition is preferably 0 - 10 parts by weight, more preferably 0.001 - 5 parts by weight, relative to 100 parts by weight of the first stabilizer composition.

The first stabilizer composition may further contain other additives. Explanations of other additives are the same as those mentioned above.

The second stabilizer composition is now explained. The second stabilizer composition contains compound (8) and trehalose. Only one kind of compound (8) may be used or two or more kinds thereof may be used in combination. Explanations of compound (8) and trehalose are the same as those mentioned above.

The weight ratio of compound (8) and trehalose in the second thermoplastic polymer composition (i.e., compound (8) :trehalose) is preferably 1000:1 - 0.05:1. Compound (8) :trehalose is more preferably 1000:1 - 0.1:1 from the aspect of processing stability of the thermoplastic polymer composition, and still more preferably 1000:1 - 0.5:1, particularly preferably 1000:1 - 1:1, from the aspect of suppression of color change of the thermoplastic polymer composition.

The second stabilizer composition may contain components other than compound (8) and trehalose as long as the effect of the present invention is not inhibited. For example, the second stabilizer composition may further contain compound (2). In addition, the second stabilizer composition may further contain at least one selected from the group consisting of compounds (3) - (7). Only one kind of compounds (2) - (7) may be used or two or more kinds thereof may be used in combination. Explanations of compound (2) - compound (7) are the same as those mentioned above.

The content of compound (2) in the second stabilizer composition is preferably 0 - 90 parts by weight, more preferably 0.1 - 80 parts by weight, relative to 100 parts by weight of the second stabilizer composition. The total amount of the compounds selected from the group consisting of compounds (3) - (7) in the second stabilizer composition is preferably 0 - 10 parts by weight, more preferably 0.001 - 5 parts by weight, relative to 100 parts by weight of the second stabilizer composition.

The second stabilizer composition may further contain other additives. Explanations of other additives are the same as those mentioned above.

The third stabilizer composition is now explained. The third stabilizer composition contains compound (2) and trehalose. Only one kind of compound (2) may be used or two or more kinds thereof may be used in combination. Explanations of compound (2) and trehalose are the same as those mentioned above.

The third stabilizer composition preferably consists of compound (2) and trehalose. Here, "consists of compound (2) and trehalose" means the total amount of compound (2) and trehalose is not less than 99 wt% of the third stabilizer composition.

The weight ratio of compound (2) and trehalose in the third thermoplastic polymer composition (i.e., compound (2):trehalose) is preferably 1000:1 - 0.05:1. Compound (2):trehalose is more preferably 1000:1 - 0.1:1 from the aspect of processing stability of the thermoplastic polymer composition, and still more preferably 1000:1 - 0.5:1, further more preferably 1000:1 - 1:1, from the aspect of suppression of color change of the thermoplastic polymer composition.

The third stabilizer composition may contain components other than compound (2) and trehalose as long as the effect of the present invention is not inhibited. For example, the third stabilizer composition may further contain compound (1). In addition, the third stabilizer composition may further contain at least one selected from the group consisting of compounds (3) - (7). Moreover, the third thermoplastic polymer composition may further contain compound (8). Only one kind of compound (1) and compounds (3) - (8) may be used or two or more kinds thereof may be used in combination. Explanations of compound (1) and compounds (3) - (8) are the same as those mentioned above.

The content of each of compound (1) and compounds (3) - (8) in the third stabilizer composition is preferably 0 - 90 parts by weight, more preferably 0.1 - 80 parts by weight, relative to 100 parts by weight of the third stabilizer composition.

The third stabilizer composition may further contain other additives. Explanations of other additives are the same as those mentioned above.

The fourth stabilizer composition is now explained. The fourth stabilizer composition contains trehalose and at least one selected from the group consisting of compounds (3) - (7). Only one kind of compounds (3) - (7) may be used or two or more kinds thereof may be used in combination. Explanations of compounds (3) - (7) and trehalose are the same as those mentioned above.

The fourth stabilizer composition preferably consists of trehalose and at least one selected from the group consisting of compounds (3) - (7). Here, "consists of trehalose and at least one selected from the group consisting of compounds (3) - (7)" means the total amount of trehalose and the compound selected from the group consisting of compounds (3) - (7) is not less than 99 wt% of the fourth stabilizer composition.

The weight ratio of the compound selected from the group consisting of compounds (3) - (7) and trehalose in the fourth thermoplastic polymer composition (i.e., compound selected from the group consisting of compounds (3) - (7):trehalose) is preferably 1000:1 - 0.05:1. The compound selected from the group consisting of compounds (3) - (7): trehalose is more preferably 1000:1 - 0.1:1 from the aspect of processing stability of the thermoplastic polymer composition, and still more preferably 1000:1 - 0.5:1, further more preferably 1000:1 - 1:1, from the aspect of suppression of color change of the thermoplastic polymer composition.

The fourth stabilizer composition may contain components other than compounds (3) - (7) and trehalose as long as the effect of the present invention is not inhibited. For example, the fourth stabilizer composition may further contain at least one selected from the group consisting of compound (1), compound (2) and compound (8). Only one kind of compound (1), compound (2) and compound (8) may be used or two or more kinds thereof may be used in combination. Explanations of compound (1), compound (2) and compound (8) are the same as those mentioned above.

The content of each of compound (1), compound (2) and compound (8) in the fourth stabilizer composition is preferably 0 - 90 parts by weight, more preferably 0.1 - 80 parts by weight, relative to 100 parts by weight of the fourth

stabilizer composition.

The fourth stabilizer composition may further contain other additives. Explanations of other additives in the fourth thermoplastic polymer composition are the same as those mentioned above.

Examples of the production method of the stabilizer composition of the present invention include a method including mixing the essential components and optional components used as necessary (i.e., compounds (1) - (8), trehalose and other additives) of the first - fourth stabilizer compositions in a blending machine such as Henschel mixer, super mixer, high speed mixer and the like and the like. The thus-obtained mixture (stabilizer composition) may be further subjected to extrusion molding or agitation granulation.

## Examples

The present invention is explained in more detail in the following by referring to Examples and the like. In the following, "part" and "%" is, unless particularly explained, on the weight basis. In addition, the "melt flow rate" is described as "MFR".

The components used in the following Examples and the like are as follows.

Compound (1-1): 2,4-di-t-pentyl-6-[1-(3,5-di-t-pentyl-2-hydroxyphenyl)ethyl]phenyl acrylate ("Sumilizer (registered trade mark) GS(F)" manufactured by Sumitomo Chemical Company, Limited)
Compound (1-2): 2-t-butyl-6-(3-t-butyl-2-hydroxy-5-methylbenzyl)-4-methylphenyl acrylate ("Sumilizer (registered trade mark) GM" manufactured by Sumitomo Chemical Company, Limited)
Compound (2-1): octadecyl 3-(3,5-di-t-butyl-4-hydroxyphenyl)propionate ("Irganox (registered trade mark) 1076" manufactured by BASF)
Compound (2-2): 3,9-bis[2-{3-(3-t-butyl-4-hydroxy-5-methylphenyl)propionyloxy}-1,1-dimethylethyl]-2,4,8,10-tetraoxaspiro[5.5]undecane ("Sumilizer (registered trade mark) GA-80" manufactured by Sumitomo Chemical Company, Limited)
Compound (2-3): pentaerythritol tetrakis[3-(3,5-di-t-butyl-4-hydroxyphenyl)propionate] ("Irganox (registered trade mark) 1010" manufactured by BASF)
Compound (3-1): tris(2,4-di-t-butylphenyl) phosphite ("Irgafos (registered trade mark) 168" manufactured by BASF)
Compound (4-1): tetrakis(2,4-di-t-butylphenyl)-4,4-biphenylene diphoshonite ("Sandostab (registered trade mark) P-EPQ" manufactured by Clariant)
Compound (5-1): bis(2,6-di-t-butyl-4-methylphenyl)pentaerythritol diphosphite ("Adekastab (registered trade mark) PEP-36" manufactured by ADEKA)
Compound (5-2): bis(2,4-di-t-butylphenyl)pentaerythritol diphosphite ("Ultranox (registered trade mark) 626" manufactured by GE Plastics)
Compound (5-3): bis(2,4-dicumylphenyl)pentaerythritol diphosphite ("Doverphos 59228T" manufactured by Dover Chemical Corporation)
Compound (6-1): 6,6',6"-[nitrilotris(ethyleneoxy)]tris(2,4,8,10-tetra-t-butyldibenzo[d,f][1,3,2]dioxaphosphepine) ("Irgafos(registered trade mark) 12" manufactured by BASF)
Compound (7-1): 2,2-methylenebis(4,6-di-t-butylphenyl) octyl phosphite ("Adekastab (registered trade mark) HP-10" manufactured by ADEKA)
Compound (8-1): 6-[3-(3-t-butyl-4-hydroxy-5-methylphenyl)propoxy]-2,4,8,10-tetra-t-butyldibenzo[d,f][1,3,2]dioxaphosphepine ("Sumilizer (registered trade mark) GP" manufactured by Sumitomo Chemical Company, Limited)
trehalose (manufactured by HAYASHIBARA CO., LTD.)

In the following Example 1-1 - Example 1-253, the first stabilizer composition containing compound (1) and trehalose as essential components is used, in Example 2-1 - Example 2-208, the second stabilizer composition containing compound (8) and trehalose as essential components is used, in Example 3-1 - Example 3-134, the third stabilizer composition containing compound (2) and trehalose as essential components is used, and in Example 4-1 - Example 4-199, the fourth stabilizer composition containing trehalose and at least one selected from the group consisting of compounds (3) - (7) as essential components is used.

Example 1-1 (Production of stabilizer composition)

Compound (1-1) (0.4 part) and trehalose (0.01 part) were mixed to produce a stabilizer composition.

Example 1-2 - Example 1-4 (Production of stabilizer composition)

In the same manner as in Example 1-1 except that the amounts of the trehalose to be used were respectively

set to 0.05 part, 0.1 part and 0.2 part, stabilizer compositions were produced.

Example 1-5 - Example 1-8 (Production of stabilizer composition)

In the same manner as in Example 1-1 - Example 1-4 except that compound (1-2) was used instead of compound (1-1), stabilizer compositions were respectively produced.

Example 1-9 (Production of thermoplastic polymer composition)

A styrene-butadiene block copolymer (manufactured by Asahi Kasei Corp., 100 parts) and the total amount of the stabilizer composition obtained in Example 1-1 were mixed, and the mixture was kneaded using a laboplast mill ("4C-150" manufactured by Toyo Seiki Seisaku-sho, Ltd.) under a nitrogen atmosphere under the conditions of temperature 250°C and screw rotation 100 rpm to give a thermoplastic polymer composition as pellets.

Example 1-10 - Example 1-12 (Production of thermoplastic polymer composition)

In the same manner as in Example 1-9 except that each stabilizer composition obtained in Example 1-2 - Example 1-4 was used instead of the stabilizer composition obtained in Example 1-1, thermoplastic polymer compositions were obtained as pellets.

Comparative Example 1-1

In the same manner as in Example 1-9 except that compound (1-1) (0.4 part) was used instead of the stabilizer composition obtained in Example 1-1, a thermoplastic polymer composition was obtained as pellets.

Example 1-13 - Example 1-16 (Production of thermoplastic polymer composition)

In the same manner as in Example 1-9 except that each stabilizer composition obtained in Example 1-5 - Example 1-8 was used instead of the stabilizer composition obtained in Example 1-1, thermoplastic polymer compositions were obtained as pellets.

Comparative Example 1-2

In the same manner as in Example 1-13 except that compound (1-2) (0.4 part) was used instead of the stabilizer composition obtained in Example 1-5, a thermoplastic polymer composition was obtained as pellets.

Experimental Example 1-1 (Evaluation of processing stability under dynamic condition)

In Example 1-9 - Example 1-13, Comparative Example 1-1 and Comparative Example 1-2, the time necessary for the torque of the laboplast mill to reach the maximum value was measured as a build-up time. A longer build-up time means more superior processing stability of the thermoplastic polymer composition under dynamic condition.

In addition, the progress rate of processing stability was calculated from the values of the build-up time of Examples and Comparative Examples, and based on the following formula:

progress rate of processing stability (%)
=build-up time (minute) of Example x 100/build-up time
(minute) of Comparative Example.

For calculation of the progress rate of processing stability, the value of the build-up time of Comparative Example 1-1 was used for Example 1-9 - Example 1-12 and the value of the build-up time of Comparative Example 1-2 was used for Example 1-13 - Example 1-16.

The compositions of the stabilizer compositions of Example 1-1 - Example 1-8 are shown in Table 1, and the compositions, build-up time and processing stability of the thermoplastic polymer compositions of Example 1-9 - Example 1-16, Comparative Example 1-1 and Comparative Example 1-2 are shown in Table 2.

[Table 1]

Table 1: stabilizer composition

| | compound (1-1) (part) | compound (1-2) (part) | trehalose (part) | mass ratio of compound (1) :trehalose |
|---|---|---|---|---|
| Ex. 1-1 | 0.4 | - | 0.01 | 40:1 |
| Ex. 1-2 | 0.4 | - | 0.05 | 8:1 |
| Ex. 1-3 | 0.4 | - | 0.1 | 4:1 |
| Ex. 1-4 | 0.4 | - | 0.2 | 2:1 |
| Ex. 1-5 | - | 0.4 | 0.01 | 40:1 |
| Ex. 1-6 | - | 0.4 | 0.05 | 8:1 |
| Ex. 1-7 | - | 0.4 | 0.1 | 4:1 |
| Ex. 1-8 | - | 0.4 | 0.2 | 2:1 |

[Table 2]

Table 2: thermoplastic polymer composition

| | SBS (part) | stabilizer composition | | build-up time (minute) | progress rate (%) of processing stability |
|---|---|---|---|---|---|
| | | kind | amount (part) | | |
| Ex. 1-9 | 100 | Ex. 1-1 | 0.41 | 26.8 | 103 |
| Ex. 1-10 | 100 | Ex. 1-2 | 0.45 | 26.9 | 103 |
| Ex. 1-11 | 100 | Ex. 1-3 | 0.5 | 36.0 | 138 |
| Ex. 1-12 | 100 | Ex. 1-4 | 0.6 | 40.7 | 157 |
| Comp. Ex. 1-1 | 100 | compound (1-1) | 0.4 | 26.0 | - |
| Ex. 1-13 | 100 | Ex. 1-5 | 0.41 | 28.0 | 106 |
| Ex. 1-14 | 100 | Ex. 1-6 | 0.45 | 33.2 | 126 |
| Ex. 1-15 | 100 | Ex. 1-7 | 0.5 | 36.0 | 137 |
| Ex. 1-16 | 100 | Ex. 1-8 | 0.6 | 48.8 | 186 |
| Comp. Ex. 1-2 | 100 | compound (1-2) | 0.4 | 26.3 | - |
| SBS: styrene-butadiene block copolymer | | | | | |

Example 1-17 (Production of thermoplastic polymer composition)

An ethylene-vinyl alcohol copolymer (manufactured by KURARAY CO., LTD., 100 parts), compound (1-1) (0.3 part) and trehalose (0.2 part) were dry-blended, the obtained mixture was knead-extruded by a single screw extruder having a screw diameter of 30 mm ("VS30-28 type extruder" manufactured by TANABE PLASTICS MACHINERY CO., LTD.) under the conditions of temperature 230°C and screw rotation 50 rpm to give strands, and the strands were cut by a pelletizer to give a thermoplastic polymer composition as pellets.

Example 1-18 (Production of thermoplastic polymer composition)

In the same manner as in Example 1-17 except that compound (1-1) (0.1 part) and trehalose (0.4 part) were used as a stabilizer composition, a thermoplastic polymer composition was obtained as pellets.

Comparative Example 1-3

In the same manner as in Example 1-17 except that only compound (1-1) (0.5 part) was used as a stabilizer, a thermoplastic polymer composition was obtained as pellets.

Experimental Example 1-2 (Evaluation of processing stability under static condition)

For evaluation of the processing stability during operation of extrusion processing (i.e., under static conditions), Dwell MFR tests were performed using the pellets of each thermoplastic polymer composition obtained in Example 1-17, Example 1-18 and Comparative Example 1-3. The test was based on JIS K 7210, and 0 min Dwell MFR (g/10 min) and 30 min Dwell MFR (g/10 min) were measured by a melt indexer (L217-E14011 manufactured by Technol Seven Co., Ltd.) under the conditions of temperature in a cylinder 270°C and load 2.16 kg. The 0 min Dwell MFR was measured after 5-min preheating time after filling pellets of the thermoplastic polymer composition in the cylinder. The 30 min Dwell MFR was measured after 30-min dwell time, including the preheating time, of the pellets of the thermoplastic polymer composition in the cylinder. The MFR variation rate was calculated by the following formula and using the thus-measured 0 min Dwell MFR and 30 min Dwell MFR:

MFR variation rate (%)=
absolute value of (30 min Dwell MFR-0 min Dwell MFR) x 100/(0 min Dwell MFR)

A smaller MFR variation rate means better processing stability of the thermoplastic polymer composition. The results are shown in Table 3.

[Table 3]

Table 3: thermoplastic polymer composition

| | SBS (part) | stabilizer composition | | | 0 min Dwell MFR (g/10 min) | 30 min Dwell MFR (g/10 min) | MFR variation rate (%) |
|---|---|---|---|---|---|---|---|
| | | compound (1-1) (part) | trehalose (part) | mass ratio of compound (1-1) : trehalose | | | |
| Ex. 1-17 | 100 | 0.3 | 0.2 | 3:2 | 10.1 | 10.9 | 7.9 |
| Ex. 1-18 | 100 | 0.1 | 0.4 | 1:4 | 11.9 | 13.6 | 14.3 |
| Com. Ex. 1-3 | 100 | 0.5 | - | - | 13.1 | 24.9 | 90.1 |
| SBS: styrene-butadiene block copolymer | | | | | | | |

Example 1-19 - Example 1-22 (Production of stabilizer composition)

Compound (1-1), trehalose, compound (2-1) and compound (3-1) were mixed in the amounts described in Table 4 to give stabilizer compositions.

Example 1-23 (Production of thermoplastic polymer composition)

A styrene-butadiene block copolymer (manufactured by DENKI KAGAKU KOGYO KABUSHIKI KAISHA, 100 parts) and the stabilizer composition (0.31 part) obtained in Example 1-19 were dry-blended, the obtained mixture was knead-extruded by a single screw extruder having a screw diameter of 30 mm ("VS30-28 type extruder" manufactured by TANABE PLASTICS MACHINERY CO., LTD.) under the conditions of temperature 230°C and screw rotation 50 rpm to give strands, and the strands were cut by a pelletizer to give a thermoplastic polymer composition as pellets.

Example 1-24 (Production of thermoplastic polymer composition)

In the same manner as in Example 1-23 except that the stabilizer composition (0.51 part) obtained in Example 1-20 was used instead of the stabilizer composition obtained in Example 1-19, a thermoplastic polymer composition was obtained as pellets.

Example 1-25 (Production of thermoplastic polymer composition)

In the same manner as in Example 1-23 except that the stabilizer composition (0.51 part) obtained in Example 1-21 was used instead of the stabilizer composition obtained in Example 1-19, a thermoplastic polymer composition was obtained as pellets.

Example 1-26 (Production of thermoplastic polymer composition)

In the same manner as in Example 1-23 except that the stabilizer composition (0.71 part) obtained in Example 1-22 was used instead of the stabilizer composition obtained in Example 1-19, a thermoplastic polymer composition was obtained as pellets.

Comparative Example 1-4

In the same manner as in Example 1-23 except that compound (1-1) (0.3 part) was used instead of the stabilizer composition obtained in Example 1-19, a thermoplastic polymer composition was obtained as pellets.

Experimental Example 1-3 (Evaluation of processing stability under static condition)

Dwell MFR tests were performed in the same manner as in Experimental Example 1-2 and using the pellets of each thermoplastic polymer composition obtained in Example 1-23 - Example 1-26 and Comparative Example 1-4. The results are shown in Table 5.

[Table 4]

Table 4: stabilizer composition

| | compound (1-1) (part) | trehalose (part) | compound (2-1) (part) | compound (3-1) (part) |
|---|---|---|---|---|
| Ex. 1-19 | 0.3 | 0.01 | - | - |
| Ex. 1-20 | 0.3 | 0.01 | 0.2 | - |
| Ex. 1-21 | 0.3 | 0.01 | - | 0.2 |
| Ex. 1-22 | 0.3 | 0.01 | 0.2 | 0.2 |

[Table 5]

Table 5: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 1-23 | 100 | Ex. 1-19 | 0.31 | 20.4 | 11.6 | 43.1 |
| Ex. 1-24 | 100 | Ex. 1-20 | 0.51 | 22.0 | 14.5 | 34.1 |
| Ex. 1-25 | 100 | Ex. 1-21 | 0.51 | 21.3 | 13.6 | 36.2 |
| Ex. 1-26 | 100 | Ex. 1-22 | 0.71 | 23.1 | 15.4 | 33.3 |
| Comp. Ex. 1-4 | 100 | compound (1-1) | 0.3 | 18.6 | 6.2 | 66.7 |
| SBS: styrene-butadiene block copolymer | | | | | | |

Example 1-27 - Example 1-31 (Production of stabilizer composition)

Compound (1-1) and trehalose in the amounts described in Table 6 were mixed to give stabilizer compositions.

Example 1-32 - Example 1-36 (Production of thermoplastic polymer composition)

In the same manner as in Example 1-23 except that each stabilizer composition (0.2 part) obtained in Examples 1-27 - 31 was used instead of the stabilizer composition (0.31 part) obtained in Example 1-19, thermoplastic polymer compositions were obtained as pellets.

Experimental Example 1-4 (Evaluation of processing stability under static condition)

Dwell MFR tests were performed in the same manner as in Experimental Example 1-2 and using the pellets of each thermoplastic polymer composition obtained in Example 1-32 - Example 1-36. The results are shown in Table 7.
[Table 6]

Table 6: stabilizer composition

| | compound (1-1) (part) | trehalose (part) |
|---|---|---|
| Ex. 1-27 | 0.1998 | 0.0002 |
| Ex. 1-28 | 0.1996 | 0.0004 |
| Ex. 1-29 | 0.198 | 0.002 |
| Ex. 1-30 | 0.1818 | 0.0182 |
| Ex. 1-31 | 0.0667 | 0.1333 |

[Table 7]

Table 7: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 1-32 | 100 | Ex. 1-27 | 0.2 | 16.9 | 11.7 | 30.8 |
| Ex. 1-33 | 100 | Ex. 1-28 | 0.2 | 15.9 | 9.4 | 40.9 |
| Ex. 1-34 | 100 | Ex. 1-29 | 0.2 | 16.4 | 11.5 | 29.9 |
| Ex. 1-35 | 100 | Ex. 1-30 | 0.2 | 17.6 | 13.6 | 22.7 |
| Ex. 1-36 | 100 | Ex. 1-31 | 0.2 | 16.5 | 8.2 | 50.3 |
| SBS:styrene-butadiene block copolymer | | | | | | |

Example 1-37 - Example 1-123 (Production of stabilizer composition)

Stabilizer compositions are obtained by mixing the components described in Table 8-1 - Table 8-3. Thermoplastic polymer compositions containing these stabilizer compositions are predicted to be superior in processing stability.
[Table 8-1]

Table 8-1: stabilizer composition

| Example | compound (1) | | trehalose | compound (2) | | compounds (3) - (7) | |
|---|---|---|---|---|---|---|---|
| | kind | amount (part) | amount (part) | kind | amount (part) | kind | amount (part) |
| 1-37 | (1-1) | 0.01 | 0.2 | - | - | - | - |
| 1-38 | (1-1) | 0.05 | 0.15 | - | - | - | - |
| 1-39 | (1-1) | 0.1 | 0.1 | - | - | - | - |
| 1-40 | (1-1) | 0.15 | 0.05 | - | - | - | - |
| 1-41 | (1-1) | 0.2 | 0.01 | - | - | - | - |
| 1-42 | (1-1) | 0.2 | 0.005 | - | - | - | - |

(continued)

| Example | compound (1) | | trehalose | compound (2) | | compounds (3) - (7) | |
|---|---|---|---|---|---|---|---|
| | kind | amount (part) | amount (part) | kind | amount (part) | kind | amount (part) |
| 1-43 | (1-1) | 0.2 | 0.001 | - | - | - | - |
| 1-44 | (1-1) | 0.2 | 0.0005 | - | - | - | - |
| 1-45 | (1-1) | 0.2 | 0.0002 | - | - | - | - |
| 1-46 | (1-1) | 0.01 | 0.2 | (2-2) | 0.2 | | |
| 1-47 | (1-1) | 0.1 | 0.1 | (2-2) | 0.2 | - | - |
| 1-48 | (1-1) | 0.2 | 0.01 | (2-2) | 0.2 | - | - |
| 1-49 | (1-1) | 0.2 | 0.005 | (2-2) | 0.2 | - | - |
| 1-50 | (1-1) | 0.2 | 0.001 | (2-2) | 0.2 | - | - |
| 1-51 | (1-1) | 0.2 | 0.0005 | (2-2) | 0.2 | - | - |
| 1-52 | (1-1) | 0.01 | 0.2 | (2-3) | 0.2 | - | - |
| 1-53 | (1-1) | 0.1 | 0.1 | (2-3) | 0.2 | - | - |
| 1-54 | (1-1) | 0.2 | 0.01 | (2-3) | 0.2 | - | - |
| 1-55 | (1-1) | 0.2 | 0.005 | (2-3) | 0.2 | - | - |
| 1-56 | (1-1) | 0.2 | 0.001 | (2-3) | 0.2 | - | - |
| 1-57 | (1-1) | 0.2 | 0.0005 | (2-3) | 0.2 | - | - |
| 1-58 | (1-1) | 0.01 | 0.2 | - | - | (4-1) | 0.2 |
| 1-59 | (1-1) | 0.1 | 0.1 | - | - | (4-1) | 0.2 |
| 1-60 | (1-1) | 0.2 | 0.01 | - | - | (4-1) | 0.2 |
| 1-61 | (1-1) | 0.2 | 0.005 | - | - | (4-1) | 0.2 |
| 1-62 | (1-1) | 0.2 | 0.001 | - | - | (4-1) | 0.2 |
| 1-63 | (1-1) | 0.2 | 0.0005 | - | - | (4-1) | 0.2 |
| 1-64 | (1-1) | 0.01 | 0.2 | - | - | (5-1) | 0.2 |
| 1-65 | (1-1) | 0.1 | 0.1 | - | - | (5-1) | 0.2 |
| 1-66 | (1-1) | 0.2 | 0.01 | - | - | (5-1) | 0.2 |
| 1-67 | (1-1) | 0.2 | 0.005 | - | - | (5-1) | 0.2 |
| 1-68 | (1-1) | 0.2 | 0.001 | - | - | (5-1) | 0.2 |
| 1-69 | (1-1) | 0.2 | 0.0005 | - | - | (5-1) | 0.2 |

[Table 8-2]

Table 8-2: stabilizer composition

| Example | compound (1) | | trehalose | compound (2) | | compounds (3) - (7) | |
|---|---|---|---|---|---|---|---|
| | kind | amount (part) | amount (part) | kind | amount (part) | kind | amount (part) |
| 1-70 | (1-1) | 0.01 | 0.2 | - | - | (5-2) | 0.2 |
| 1-71 | (1-1) | 0.1 | 0.1 | - | - | (5-2) | 0.2 |
| 1-72 | (1-1) | 0.2 | 0.01 | - | - | (5-2) | 0.2 |
| 1-73 | (1-1) | 0.2 | 0.005 | - | - | (5-2) | 0.2 |
| 1-74 | (1-1) | 0.2 | 0.001 | - | - | (5-2) | 0.2 |

(continued)

| Example | compound (1) | | trehalose | compound (2) | | compounds (3) - (7) | |
|---|---|---|---|---|---|---|---|
| | kind | amount (part) | amount (part) | kind | amount (part) | kind | amount (part) |
| 1-75 | (1-1) | 0.2 | 0.0005 | - | - | (5-2) | 0.2 |
| 1-76 | (1-1) | 0.01 | 0.2 | - | - | (5-3) | 0.2 |
| 1-77 | (1-1) | 0.1 | 0.1 | - | - | (5-3) | 0.2 |
| 1-78 | (1-1) | 0.2 | 0.01 | - | - | (5-3) | 0.2 |
| 1-79 | (1-1) | 0.2 | 0.005 | - | - | (5-3) | 0.2 |
| 1-80 | (1-1) | 0.2 | 0.001 | - | - | (5-3) | 0.2 |
| 1-81 | (1-1) | 0.2 | 0.0005 | - | - | (5-3) | 0.2 |
| 1-82 | (1-1) | 0.01 | 0.2 | - | - | (6-1) | 0.2 |
| 1-83 | (1-1) | 0.1 | 0.1 | - | - | (6-1) | 0.2 |
| 1-84 | (1-1) | 0.2 | 0.01 | - | - | (6-1) | 0.2 |
| 1-85 | (1-1) | 0.2 | 0.005 | - | - | (6-1) | 0.2 |
| 1-86 | (1-1) | 0.2 | 0.001 | - | - | (6-1) | 0.2 |
| 1-87 | (1-1) | 0.2 | 0.0005 | - | - | (6-1) | 0.2 |
| 1-88 | (1-1) | 0.01 | 0.2 | - | - | (7-1) | 0.2 |
| 1-89 | (1-1) | 0.1 | 0.1 | - | - | (7-1) | 0.2 |
| 1-90 | (1-1) | 0.2 | 0.01 | - | - | (7-1) | 0.2 |
| 1-91 | (1-1) | 0.2 | 0.005 | - | - | (7-1) | 0.2 |
| 1-92 | (1-1) | 0.2 | 0.001 | - | - | (7-1) | 0.2 |
| 1-93 | (1-1) | 0.2 | 0.0005 | - | - | (7-1) | 0.2 |
| 1-94 | (1-1) | 0.01 | 0.2 | (2-1) | 0.2 | (3-1) | 0.2 |
| 1-95 | (1-1) | 0.1 | 0.1 | (2-1) | 0.2 | (3-1) | 0.2 |
| 1-96 | (1-1) | 0.2 | 0.01 | (2-1) | 0.2 | (3-1) | 0.2 |
| 1-97 | (1-1) | 0.2 | 0.005 | (2-1) | 0.2 | (3-1) | 0.2 |
| 1-98 | (1-1) | 0.2 | 0.001 | (2-1) | 0.2 | (3-1) | 0.2 |
| 1-99 | (1-1) | 0.2 | 0.0005 | (2-1) | 0.2 | (3-1) | 0.2 |
| 1-100 | (1-1) | 0.01 | 0.2 | (2-2) | 0.2 | (3-1) | 0.2 |
| 1-101 | (1-1) | 0.1 | 0.1 | (2-2) | 0.2 | (3-1) | 0.2 |
| 1-102 | (1-1) | 0.2 | 0.01 | (2-2) | 0.2 | (3-1) | 0.2 |
| 1-103 | (1-1) | 0.2 | 0.005 | (2-2) | 0.2 | (3-1) | 0.2 |
| 1-104 | (1-1) | 0.2 | 0.001 | (2-2) | 0.2 | (3-1) | 0.2 |
| 1-105 | (1-1) | 0.2 | 0.0005 | (2-2) | 0.2 | (3-1) | 0.2 |

[Table 8-3]

Table 8-3: stabilizer composition

| Example | compound (1) | | trehalose | compound (2) | | compounds (3) - (7) | |
|---|---|---|---|---|---|---|---|
| | kind | amount (part) | amount (part) | kind | amount (part) | kind | amount (part) |
| 1-106 | (1-1) | 0.01 | 0.2 | (2-3) | 0.2 | (3-1) | 0.2 |

(continued)

| Example | compound (1) | | trehalose | compound (2) | | compounds (3) - (7) | |
|---|---|---|---|---|---|---|---|
| | kind | amount (part) | amount (part) | kind | amount (part) | kind | amount (part) |
| 1-107 | (1-1) | 0.1 | 0.1 | (2-3) | 0.2 | (3-1) | 0.2 |
| 1-108 | (1-1) | 0.2 | 0.01 | (2-3) | 0.2 | (3-1) | 0.2 |
| 1-109 | (1-1) | 0.2 | 0.005 | (2-3) | 0.2 | (3-1) | 0.2 |
| 1-110 | (1-1) | 0.2 | 0.001 | (2-3) | 0.2 | (3-1) | 0.2 |
| 1-111 | (1-1) | 0.2 | 0.0005 | (2-3) | 0.2 | (3-1) | 0.2 |
| 1-112 | (1-2) | 0.01 | 0.2 | - | - | - | - |
| 1-113 | (1-2) | 0.05 | 0.15 | - | - | - | - |
| 1-114 | (1-2) | 0.1 | 0.1 | - | - | - | - |
| 1-115 | (1-2) | 0.15 | 0.05 | - | - | - | - |
| 1-116 | (1-2) | 0.2 | 0.01 | - | - | - | - |
| 1-117 | (1-2) | 0.2 | 0.005 | - | - | - | - |
| 1-118 | (1-2) | 0.2 | 0.001 | - | - | - | - |
| 1-119 | (1-2) | 0.2 | 0.0005 | - | - | - | - |
| 1-120 | (1-2) | 0.2 | 0.0002 | - | - | - | - |
| 1-121 | (1-2) | 0.1 | 0.1 | (2-1) | 0.2 | - | - |
| 1-122 | (1-2) | 0.1 | 0.1 | - | - | (3-1) | 0.2 |
| 1-123 | (1-2) | 0.1 | 0.1 | (2-1) | 0.2 | (3-1) | 0.2 |

Example 1-124 - Example 1-253 (Production of thermoplastic polymer composition)

In the same manner as in Example 1-4 except that the thermoplastic polymers (100 parts) described in Table 9-1 - Table 9-4, and the stabilizer composition in the kinds and amounts described in Table 9-1 - Table 9-4 are used, thermoplastic polymer compositions are obtained as pellets. The obtained thermoplastic polymer compositions are predicted to be superior in processing stability.

The meanings of the abbreviations of the thermoplastic polymers described in Table 9-1 - Table 9-4 are as follows. The MFR described below is the 0 min Dwell MFR of the thermoplastic polymer as measured under the conditions of Experimental Example 1-2.

P1-1: high density polyethylene (HDPE) (excluding P1-45 - P1-50)
P1-2: low density polyethylene (LDPE) (excluding P1-51 - P1-57)
P1-3: linear low density polyethylene (LLDPE) (excluding P1-58 - P1-64)
P1-4: ethylene-ethyl acrylate copolymer (EEA)
P1-5: ethylene-vinyl acetate copolymer (EVA)
P1-6: polypropylene (PP) (excluding P1-65 - P1-71)
P1-7: propylene-ethylene random copolymer
P1-8: propylene-α-olefin random copolymer
P1-9: propylene-ethylene-α-olefin copolymer
P1-10: polystyrene (PS)
P1-11: acrylonitrile-styrene copolymer (SAN)
P1-12: acrylonitrile-butadiene-styrene copolymer (ABS)
P1-13: special acrylic rubber-acrylonitrile-styrene copolymer
P1-14: acrylonitrile-chlorinated polyethylene-styrene copolymer (ACS)
P1-15: polybutadiene rubber (BR)
P1-16: styrene-butadiene copolymer (SB)
P1-17: styrene-butadiene block copolymer (SBS)
P1-18: chlorinated polyethylene (CPE)

P1-19: polychloroprene
P1-20: chlorinated rubber
P1-21: poly(vinyl chloride) (PVC)
P1-22: poly(vinylidene chloride) (PVDC)
P1-23: methacrylate resin
P1-24: fluororesin
P1-25: polyacetal (POM)
P1-26: grafted poly(phenylene ether) resin
P1-27: poly(phenylene sulfide) resin (PPS)
P1-28: polyurethane (PU) (excluding P1-75 - P1-77)
P1-29: polyamide (PA) (excluding P1-78 - P1-86)
P1-30: poly(ethylene terephthalate) (PET)
P1-31: poly(butylene terephthalate) (PBT)
P1-32: poly(lactic acid) (PLA)
P1-33: polycarbonate (PC)
P1-34: polyacrylate
P1-35: polysulfone (PPSU)
P1-36: poly(ether ether ketone) (PEEK)
P1-37: poly(ether sulfone) (PES)
P1-38: aromatic polyester
P1-39: diallyl phthalate prepolymer
P1-40: silicone resin (SI)
P1-41: 1,2-polybutadiene
P1-42: polyisoprene
P1-43: butadiene-acrylonitrile copolymer (NBR)
P1-44: ethylene-methyl methacrylate copolymer (EMMA)
P1-45: high density polyethylene (HDPE) with MFR of 40 g/10 min
P1-46: high density polyethylene (HDPE) with MFR of 20 g/10 min
P1-47: high density polyethylene (HDPE) with MFR of 10 g/10 min
P1-48: high density polyethylene (HDPE) with MFR of 5 g/10 min
P1-49: high density polyethylene (HDPE) with MFR of 1 g/10 min
P1-50: high density polyethylene (HDPE) with MFR of 0.1 g/10 min
P1-51: low density polyethylene (LDPE) with MFR of 75 g/10 min
P1-52: low density polyethylene (LDPE) with MFR of 50 g/10 min
P1-53: low density polyethylene (LDPE) with MFR of 25 g/10 min
P1-54: low density polyethylene (LDPE) with MFR of 10 g/10 min
P1-55: low density polyethylene (LDPE) with MFR of 5 g/10 min
P1-56: low density polyethylene (LDPE) with MFR of 2 g/10 min
P1-57: low density polyethylene (LDPE) with MFR of 1 g/10 min
P1-58: low density polyethylene (LDPE) with MFR of 0.1 g/10 min
P1-59: linear low density polyethylene (LLDPE) with MFR of 100 g/10 min
P1-60: linear low density polyethylene (LLDPE) with MFR of 50 g/10 min
P1-61: linear low density polyethylene (LLDPE) with MFR of 25 g/10 min
P1-62: linear low density polyethylene (LLDPE) with MFR of 10 g/10 min
P1-63: linear low density polyethylene (LLDPE) with MFR of 5 g/10 min
P1-64: linear low density polyethylene (LLDPE) with MFR of 1 g/10 min
P1-65: linear low density polyethylene (LLDPE) with MFR of 0.1 g/10 min
P1-66: polypropylene (PP) with MFR of 100 g/10 min
P1-67: polypropylene (PP) with MFR of 50 g/10 min
P1-68: polypropylene (PP) with MFR of 25 g/10 min
P1-69: polypropylene (PP) with MFR of 10 g/10 min
P1-70: polypropylene (PP) with MFR of 5 g/10 min
P1-71: polypropylene (PP) with MFR of 1 g/10 min
P1-72: polypropylene (PP) with MFR of 0.1 g/10 min
P1-73: styrene-butadiene thermoplastic elastomer
P1-74: styrene-ethylene-butylene-styrene block copolymer (SEBS)
P1-75: styrene-isoprene-styrene block copolymer (SIS)
P1-76: polyurethane (PU) with weight average molecular weight of 1000

P1-77: polyurethane (PU) with weight average molecular weight of 2000
P1-78: polyurethane (PU) with weight average molecular weight of 5000
P1-79: nylon 6 (Ny6) with number average molecular weight of 5000
P1-80: nylon 6 (Ny6) with number average molecular weight of 10000
P1-81: nylon 6 (Ny6) with number average molecular weight of 50000
P1-82: nylon 6 (Ny6) with number average molecular weight of 100000
P1-83: nylon 610 (Ny610)
P1-84: nylon 612 (Ny612)
P1-85: nylon 11 (Ny11)
P1-86: nylon 12 (Ny12)
P1-87: nylon MXD6 (NyMXD6)

[Table 9-1]

Table 9-1: thermoplastic polymer composition

| Example | thermoplastic polymer | stabilizer composition | |
|---|---|---|---|
| | | kind | amount (part) |
| 1-124 | P1-1 | Ex. 1-1 | 0.41 |
| 1-125 | P1-2 | Ex. 1-1 | 0.41 |
| 1-126 | P1-3 | Ex. 1-1 | 0.41 |
| 1-127 | P1-3 | Ex. 1-2 | 0.45 |
| 1-128 | P1-3 | Ex. 1-3 | 0.5 |
| 1-129 | P1-3 | Ex. 1-4 | 0.6 |
| 1-130 | P1-3 | Ex. 1-19 | 0.31 |
| 1-131 | P1-3 | Ex. 1-20 | 0.51 |
| 1-132 | P1-3 | Ex. 1-21 | 0.51 |
| 1-133 | P1-3 | Ex. 1-22 | 0.71 |
| 1-134 | P1-4 | Ex. 1-1 | 0.41 |
| 1-135 | P1-4 | Ex. 1-2 | 0.45 |
| 1-136 | P1-4 | Ex. 1-3 | 0.5 |
| 1-137 | P1-4 | Ex. 1-4 | 0.6 |
| 1-138 | P1-4 | Ex. 1-19 | 0.31 |
| 1-139 | P1-4 | Ex. 1-20 | 0.51 |
| 1-140 | P1-4 | Ex. 1-21 | 0.51 |
| 1-141 | P1-4 | Ex. 1-22 | 0.71 |
| 1-142 | P1-5 | Ex. 1-1 | 0.41 |
| 1-143 | P1-6 | Ex. 1-1 | 0.41 |
| 1-144 | P1-7 | Ex. 1-1 | 0.41 |
| 1-145 | P1-7 | Ex. 1-2 | 0.45 |
| 1-146 | P1-7 | Ex. 1-3 | 0.5 |
| 1-147 | P1-7 | Ex. 1-4 | 0.6 |
| 1-148 | P1-7 | Ex. 1-19 | 0.31 |
| 1-149 | P1-7 | Ex. 1-20 | 0.51 |
| 1-150 | P1-7 | Ex. 1-21 | 0.51 |

(continued)

| Example | thermoplastic polymer | stabilizer composition | |
|---|---|---|---|
| | | kind | amount (part) |
| 1-151 | P1-7 | Ex. 1-22 | 0.71 |
| 1-152 | P1-8 | Ex. 1-1 | 0.41 |
| 1-153 | P1-9 | Ex. 1-1 | 0.41 |
| 1-154 | P1-10 | Ex. 1-1 | 0.41 |
| 1-155 | P1-11 | Ex. 1-1 | 0.41 |
| 1-156 | P1-11 | Ex. 1-2 | 0.45 |

[Table 9-2]

Table 9-2: thermoplastic polymer composition

| Example | thermoplastic polymer | stabilizer composition | |
|---|---|---|---|
| | | kind | amount (part) |
| 1-157 | P1-11 | Ex. 1-3 | 0.5 |
| 1-158 | P1-11 | Ex. 1-4 | 0.6 |
| 1-159 | P1-11 | Ex. 1-19 | 0.31 |
| 1-160 | P1-11 | Ex. 1-20 | 0.51 |
| 1-161 | P1-11 | Ex. 1-21 | 0.51 |
| 1-162 | P1-11 | Ex. 1-22 | 0.71 |
| 1-163 | P1-12 | Ex. 1-1 | 0.41 |
| 1-164 | P1-13 | Ex. 1-1 | 0.41 |
| 1-165 | P1-13 | Ex. 1-2 | 0.45 |
| 1-166 | P1-13 | Ex. 1-3 | 0.5 |
| 1-167 | P1-13 | Ex. 1-4 | 0.6 |
| 1-168 | P1-13 | Ex. 1-19 | 0.31 |
| 1-169 | P1-13 | Ex. 1-20 | 0.51 |
| 1-170 | P1-13 | Ex. 1-21 | 0.51 |
| 1-171 | P1-13 | Ex. 1-22 | 0.71 |
| 1-172 | P1-14 | Ex. 1-1 | 0.41 |
| 1-173 | P1-15 | Ex. 1-1 | 0.41 |
| 1-174 | P1-16 | Ex. 1-1 | 0.41 |
| 1-175 | P1-17 | Ex. 1-1 | 0.41 |
| 1-176 | P1-17 | Ex. 1-2 | 0.45 |
| 1-177 | P1-17 | Ex. 1-3 | 0.5 |
| 1-178 | P1-17 | Ex. 1-4 | 0.6 |
| 1-179 | P1-17 | Ex. 1-19 | 0.31 |
| 1-180 | P1-17 | Ex. 1-20 | 0.51 |
| 1-181 | P1-17 | Ex. 1-21 | 0.51 |
| 1-182 | P1-17 | Ex. 1-22 | 0.71 |

(continued)

| Example | thermoplastic polymer | stabilizer composition | |
|---|---|---|---|
| | | kind | amount (part) |
| 1-183 | P1-18 | Ex. 1-1 | 0.41 |
| 1-184 | P1-19 | Ex. 1-1 | 0.41 |
| 1-185 | P1-20 | Ex. 1-1 | 0.41 |
| 1-186 | P1-21 | Ex. 1-1 | 0.41 |
| 1-187 | P1-22 | Ex. 1-1 | 0.41 |
| 1-188 | P1-23 | Ex. 1-1 | 0.41 |
| 1-189 | P1-24 | Ex. 1-1 | 0.41 |

[Table 9-3]

Table 9-3: thermoplastic polymer composition

| Example | thermoplastic polymer | stabilizer composition | |
|---|---|---|---|
| | | kind | amount (part) |
| 1-190 | P1-25 | Ex. 1-1 | 0.41 |
| 1-191 | P1-26 | Ex. 1-1 | 0.41 |
| 1-192 | P1-27 | Ex. 1-1 | 0.41 |
| 1-192 | P1-28 | Ex. 1-1 | 0.41 |
| 1-193 | P1-29 | Ex. 1-1 | 0.41 |
| 1-194 | P1-30 | Ex. 1-1 | 0.41 |
| 1-195 | P1-31 | Ex. 1-1 | 0.41 |
| 1-196 | P1-32 | Ex. 1-1 | 0.41 |
| 1-197 | P1-33 | Ex. 1-1 | 0.41 |
| 1-198 | P1-34 | Ex. 1-1 | 0.41 |
| 1-199 | P1-35 | Ex. 1-1 | 0.41 |
| 1-200 | P1-36 | Ex. 1-1 | 0.41 |
| 1-201 | P1-37 | Ex. 1-1 | 0.41 |
| 1-202 | P1-38 | Ex. 1-1 | 0.41 |
| 1-203 | P1-39 | Ex. 1-1 | 0.41 |
| 1-204 | P1-40 | Ex. 1-1 | 0.41 |
| 1-205 | P1-41 | Ex. 1-1 | 0.41 |
| 1-206 | P1-42 | Ex. 1-1 | 0.41 |
| 1-207 | P1-43 | Ex. 1-1 | 0.41 |
| 1-208 | P1-44 | Ex. 1-1 | 0.41 |
| 1-209 | P1-45 | Ex. 1-1 | 0.41 |
| 1-210 | P1-46 | Ex. 1-1 | 0.41 |
| 1-211 | P1-47 | Ex. 1-1 | 0.41 |
| 1-212 | P1-48 | Ex. 1-1 | 0.41 |
| 1-213 | P1-49 | Ex. 1-1 | 0.41 |

(continued)

| Example | thermoplastic polymer | stabilizer composition | |
|---|---|---|---|
| | | kind | amount (part) |
| 1-214 | P1-50 | Ex. 1-1 | 0.41 |
| 1-215 | P1-51 | Ex. 1-1 | 0.41 |
| 1-216 | P1-52 | Ex. 1-1 | 0.41 |
| 1-217 | P1-53 | Ex. 1-1 | 0.41 |
| 1-218 | P1-54 | Ex. 1-1 | 0.41 |
| 1-219 | P1-55 | Ex. 1-1 | 0.41 |
| 1-220 | P1-56 | Ex. 1-1 | 0.41 |
| 1-221 | P1-57 | Ex. 1-1 | 0.41 |
| 1-222 | P1-58 | Ex. 1-1 | 0.41 |

[Table 9-4]

Table 9-4: thermoplastic polymer composition

| Example | thermoplastic polymer | stabilizer composition | |
|---|---|---|---|
| | | kind | amount (part) |
| 1-223 | P1-59 | Ex. 1-1 | 0.41 |
| 1-225 | P1-60 | Ex. 1-1 | 0.41 |
| 1-226 | P1-61 | Ex. 1-1 | 0.41 |
| 1-227 | P1-62 | Ex. 1-1 | 0.41 |
| 1-228 | P1-63 | Ex. 1-1 | 0.41 |
| 1-229 | P1-64 | Ex. 1-1 | 0.41 |
| 1-230 | P1-65 | Ex. 1-1 | 0.41 |
| 1-231 | P1-66 | Ex. 1-1 | 0.41 |
| 1-232 | P1-67 | Ex. 1-1 | 0.41 |
| 1-233 | P1-68 | Ex. 1-1 | 0.41 |
| 1-234 | P1-69 | Ex. 1-1 | 0.41 |
| 1-235 | P1-70 | Ex. 1-1 | 0.41 |
| 1-236 | P1-71 | Ex. 1-1 | 0.41 |
| 1-237 | P1-70 | Ex. 1-1 | 0.41 |
| 1-238 | P1-72 | Ex. 1-1 | 0.41 |
| 1-239 | P1-73 | Ex. 1-1 | 0.41 |
| 1-240 | P1-74 | Ex. 1-1 | 0.41 |
| 1-241 | P1-75 | Ex. 1-1 | 0.41 |
| 1-242 | P1-76 | Ex. 1-1 | 0.41 |
| 1-243 | P1-77 | Ex. 1-1 | 0.41 |
| 1-244 | P1-78 | Ex. 1-1 | 0.41 |
| 1-245 | P1-79 | Ex. 1-1 | 0.41 |
| 1-246 | P1-80 | Ex. 1-1 | 0.41 |

(continued)

| Example | thermoplastic polymer | stabilizer composition | |
|---|---|---|---|
| | | kind | amount (part) |
| 1-247 | P1-81 | Ex. 1-1 | 0.41 |
| 1-248 | P1-82 | Ex. 1-1 | 0.41 |
| 1-249 | P1-83 | Ex. 1-1 | 0.41 |
| 1-250 | P1-84 | Ex. 1-1 | 0.41 |
| 1-251 | P1-85 | Ex. 1-1 | 0.41 |
| 1-252 | P1-86 | Ex. 1-1 | 0.41 |
| 1-253 | P1-87 | Ex. 1-1 | 0.41 |

Example 2-1 (Production of stabilizer composition)

Compound (8-1) (0.2 part) and trehalose (0.05 part) were mixed to produce a stabilizer composition.

Example 2-2 (Production of stabilizer composition)

Compound (8-1) (0.1 part) and trehalose (0.01 part) were mixed to produce a stabilizer composition.

Example 2-3 (Production of thermoplastic polymer composition)

An ethylene-vinyl alcohol copolymer (manufactured by KURARAY CO., LTD., 100 parts) and the total amount of the stabilizer composition obtained in Example 2-1 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 2-4 (Production of thermoplastic polymer composition)

In the same manner as in Example 2-3 except that the stabilizer composition obtained in Example 2-2 was used instead of the stabilizer composition obtained in Example 2-1, a thermoplastic polymer composition was obtained as pellets.

Comparative Example 2-1

In the same manner as in Example 2-3 except that compound (8-1) (0.1 part) was used instead of the stabilizer composition obtained in Example 2-1, a thermoplastic polymer composition was obtained as pellets.

Experimental Example 2-1 (Evaluation of processing stability)

For evaluation of the processing stability during operation of extrusion processing, Dwell MFR tests were performed using the pellets of each thermoplastic polymer compositions obtained in Example 2-34 and Comparative Example 2-1. The test was based on JIS K 7210, and 0 min Dwell MFR (g/10 min) and 30 min Dwell MFR (g/10 min) were measured by a melt indexer (L217-E14011 manufactured by Technol Seven Co., Ltd.) under the conditions of temperature in a cylinder 270°C and load 2.16 kg. The 0 min Dwell MFR was measured after 5 min preheating time after filling pellets of the thermoplastic polymer composition in the cylinder. The 30 min Dwell MFR was measured after 30 min dwell time, including the preheating time, of the pellets of the thermoplastic polymer composition in the cylinder. The MFR variation rate was calculated by the following formula and using the thus-measured 0 min Dwell MFR and 30 min Dwell MFR:

MFR variation rate (%)=
absolute value of (30 min Dwell MFR-0 min Dwell MFR) x 100/(0 min Dwell MFR)

A smaller MFR variation rate means better processing stability of the thermoplastic polymer composition.

The compositions of the stabilizer compositions of Example 2-1 and Example 2-2 are shown in Table 10, and the compositions, 0 min Dwell MFRs, 30 min Dwell MFRs and MFR variation rates of the thermoplastic polymer compositions of Example 2-3, Example 2-4 and Comparative Example 2-1 are shown in Table 11.

[Table 10]

Table 10: stabilizer composition

| | compound (8-1) (part) | trehalose (part) | mass ratio of compound (8-1) : trehalose |
|---|---|---|---|
| Ex. 2-1 | 0.2 | 0.05 | 8:2 |
| Ex. 2-2 | 0.1 | 0.01 | 91:9 |

[Table 11]

Table 11: thermoplastic polymer composition

| | EVOH (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 2-3 | 100 | Ex. 2-1 | 0.25 | 13.7 | 15.9 | 16.1 |
| Ex. 2-4 | 100 | Ex. 2-2 | 0.11 | 13.5 | 13.1 | 3.0 |
| Comp. Ex. 2-1 | 100 | compound (8-1) | 0.1 | 14.3 | 9.4 | 34.3 |
| EVOH: ethylene-vinyl alcohol copolymer | | | | | | |

Example 2-5 - Example 2-91 (Production of stabilizer composition)

Stabilizer compositions are obtained by mixing the components described in Table 12-1 - Table 12-3. Thermoplastic polymer compositions containing these stabilizer compositions are predicted to be superior in processing stability.

[Table 12-1]

Table 12-1: stabilizer composition

| Example | compound (8-1) | trehalose | compound (2) | | compounds (3) - (7) | |
|---|---|---|---|---|---|---|
| | amount (part) | amount (part) | kind | amount (part) | kind | amount (part) |
| 2-5 | 0.01 | 0.2 | - | - | | - |
| 2-6 | 0.05 | 0.15 | - | - | - | - |
| 2-7 | 0.1 | 0.1 | - | - | - | - |
| 2-8 | 0.15 | 0.05 | - | - | - | - |
| 2-9 | 0.2 | 0.01 | - | - | - | - |
| 2-10 | 0.2 | 0.005 | - | - | - | - |
| 2-11 | 0.2 | 0.001 | - | - | - | - |
| 2-12 | 0.2 | 0.0005 | - | - | - | - |
| 2-13 | 0.2 | 0.0002 | - | - | - | - |
| 2-14 | 0.01 | 0.2 | (2-1) | 0.2 | - | - |

(continued)

| Example | compound (8-1) | trehalose | compound (2) | | compounds (3) - (7) | |
|---|---|---|---|---|---|---|
| | amount (part) | amount (part) | kind | amount (part) | kind | amount (part) |
| 2-15 | 0.1 | 0.1 | (2-1) | 0.2 | - | - |
| 2-16 | 0.2 | 0.01 | (2-1) | 0.2 | - | - |
| 2-17 | 0.2 | 0.005 | (2-1) | 0.2 | - | - |
| 2-18 | 0.2 | 0.001 | (2-1) | 0.2 | - | - |
| 2-19 | 0.2 | 0.0005 | (2-1) | 0.2 | - | - |
| 2-20 | 0.01 | 0.2 | (2-2) | 0.2 | - | - |
| 2-21 | 0.1 | 0.1 | (2-2) | 0.2 | - | - |
| 2-22 | 0.2 | 0.01 | (2-2) | 0.2 | - | - |
| 2-23 | 0.2 | 0.005 | (2-2) | 0.2 | - | - |
| 2-24 | 0.2 | 0.001 | (2-2) | 0.2 | - | - |
| 2-25 | 0.2 | 0.0005 | (2-2) | 0.2 | - | - |
| 2-26 | 0.01 | 0.2 | (2-3) | 0.2 | - | - |
| 2-27 | 0.1 | 0.1 | (2-3) | 0.2 | - | - |
| 2-28 | 0.2 | 0.01 | (2-3) | 0.2 | - | - |
| 2-29 | 0.2 | 0.005 | (2-3) | 0.2 | - | - |
| 2-30 | 0.2 | 0.001 | (2-3) | 0.2 | - | - |
| 2-31 | 0.2 | 0.0005 | (2-3) | 0.2 | - | - |
| 2-32 | 0.01 | 0.2 | - | - | (3-1) | 0.2 |
| 2-33 | 0.1 | 0.1 | - | - | (3-1) | 0.2 |
| 2-34 | 0.2 | 0.01 | - | - | (3-1) | 0.2 |
| 2-35 | 0.2 | 0.005 | - | - | (3-1) | 0.2 |

[Table 12-2]

Table 12-2: stabilizer composition

| Example | compound (8-1) | trehalose | compound (2) | | compounds (3) - (7) | |
|---|---|---|---|---|---|---|
| | amount (part) | amount (part) | kind | amount (part) | kind | amount (part) |
| 2-36 | 0.2 | 0.001 | - | - | (3-1) | 0.2 |
| 2-37 | 0.2 | 0.0005 | - | - | (3-1) | 0.2 |
| 2-38 | 0.01 | 0.2 | - | - | (4-1) | 0.2 |
| 2-39 | 0.1 | 0.1 | - | - | (4-1) | 0.2 |
| 2-40 | 0.2 | 0.01 | - | - | (4-1) | 0.2 |
| 2-41 | 0.2 | 0.005 | - | - | (4-1) | 0.2 |
| 2-42 | 0.2 | 0.001 | - | - | (4-1) | 0.2 |
| 2-43 | 0.2 | 0.0005 | - | - | (4-1) | 0.2 |
| 2-44 | 0.01 | 0.2 | - | - | (5-1) | 0.2 |
| 2-45 | 0.1 | 0.1 | - | - | (5-1) | 0.2 |
| 2-46 | 0.2 | 0.01 | - | - | (5-1) | 0.2 |

(continued)

| Example | compound (8-1) | trehalose | compound (2) | | compounds (3) - (7) | |
|---|---|---|---|---|---|---|
| | amount (part) | amount (part) | kind | amount (part) | kind | amount (part) |
| 2-47 | 0.2 | 0.005 | - | - | (5-1) | 0.2 |
| 2-48 | 0.2 | 0.001 | - | - | (5-1) | 0.2 |
| 2-49 | 0.2 | 0.0005 | - | - | (5-1) | 0.2 |
| 2-50 | 0.01 | 0.2 | - | - | (5-2) | 0.2 |
| 2-51 | 0.1 | 0.1 | - | - | (5-2) | 0.2 |
| 2-52 | 0.2 | 0.01 | - | - | (5-2) | 0.2 |
| 2-53 | 0.2 | 0.005 | - | - | (5-2) | 0.2 |
| 2-54 | 0.2 | 0.001 | - | - | (5-2) | 0.2 |
| 2-55 | 0.2 | 0.0005 | - | - | (5-2) | 0.2 |
| 2-56 | 0.01 | 0.2 | - | - | (5-3) | 0.2 |
| 2-57 | 0.1 | 0.1 | - | - | (5-3) | 0.2 |
| 2-58 | 0.2 | 0.01 | - | - | (5-3) | 0.2 |
| 2-59 | 0.2 | 0.005 | - | - | (5-3) | 0.2 |
| 2-60 | 0.2 | 0.001 | - | - | (5-3) | 0.2 |
| 2-61 | 0.2 | 0.0005 | - | - | (5-3) | 0.2 |
| 2-62 | 0.01 | 0.2 | - | - | (6-1) | 0.2 |

[Table 12-3]

Table 12-3: stabilizer composition

| Example | compound (8-1) | trehalose | compound (2) | | compounds (3) - (7) | |
|---|---|---|---|---|---|---|
| | amount (part) | amount (part) | kind | amount (part) | kind | amount (part) |
| 2-63 | 0.1 | 0.1 | - | - | (6-1) | 0.2 |
| 2-64 | 0.2 | 0.01 | - | - | (6-1) | 0.2 |
| 2-65 | 0.2 | 0.005 | - | - | (6-1) | 0.2 |
| 2-66 | 0.2 | 0.001 | - | - | (6-1) | 0.2 |
| 2-67 | 0.2 | 0.0005 | - | - | (6-1) | 0.2 |
| 2-68 | 0.01 | 0.2 | - | - | (7-1) | 0.2 |
| 2-69 | 0.1 | 0.1 | - | - | (7-1) | 0.2 |
| 2-70 | 0.2 | 0.01 | - | - | (7-1) | 0.2 |
| 2-71 | 0.2 | 0.005 | - | - | (7-1) | 0.2 |
| 2-72 | 0.2 | 0.001 | - | - | (7-1) | 0.2 |
| 2-73 | 0.2 | 0.0005 | - | - | (7-1) | 0.2 |
| 2-74 | 0.01 | 0.2 | (2-1) | 0.2 | (3-1) | 0.2 |
| 2-75 | 0.1 | 0.1 | (2-1) | 0.2 | (3-1) | 0.2 |
| 2-76 | 0.2 | 0.01 | (2-1) | 0.2 | (3-1) | 0.2 |
| 2-77 | 0.2 | 0.005 | (2-1) | 0.2 | (3-1) | 0.2 |
| 2-78 | 0.2 | 0.001 | (2-1) | 0.2 | (3-1) | 0.2 |

(continued)

| Example | compound (8-1) | trehalose | compound (2) | | compounds (3) - (7) | |
|---|---|---|---|---|---|---|
| | amount (part) | amount (part) | kind | amount (part) | kind | amount (part) |
| 2-79 | 0.2 | 0.0005 | (2-1) | 0.2 | (3-1) | 0.2 |
| 2-80 | 0.01 | 0.2 | (2-2) | 0.2 | (3-1) | 0.2 |
| 2-81 | 0.1 | 0.1 | (2-2) | 0.2 | (3-1) | 0.2 |
| 2-82 | 0.2 | 0.01 | (2-2) | 0.2 | (3-1) | 0.2 |
| 2-83 | 0.2 | 0.005 | (2-2) | 0.2 | (3-1) | 0.2 |
| 2-84 | 0.2 | 0.001 | (2-2) | 0.2 | (3-1) | 0.2 |
| 2-85 | 0.2 | 0.0005 | (2-2) | 0.2 | (3-1) | 0.2 |
| 2-86 | 0.01 | 0.2 | (2-3) | 0.2 | (3-1) | 0.2 |
| 2-87 | 0.1 | 0.1 | (2-3) | 0.2 | (3-1) | 0.2 |
| 2-88 | 0.2 | 0.01 | (2-3) | 0.2 | (3-1) | 0.2 |
| 2-89 | 0.2 | 0.005 | (2-3) | 0.2 | (3-1) | 0.2 |
| 2-90 | 0.2 | 0.001 | (2-3) | 0.2 | (3-1) | 0.2 |
| 2-91 | 0.2 | 0.0005 | (2-3) | 0.2 | (3-1) | 0.2 |

Example 2-92 - Example 2-208 (Production of thermoplastic polymer composition)

In the same manner as in Example 2-2 except that the thermoplastic polymers (100 parts) described in Table 13-1 - Table 13-4, and the stabilizer composition in the kinds and amounts described in Table 13-1 - Table 13-4 are used, thermoplastic polymer compositions are obtained as pellets. The obtained thermoplastic polymer compositions are predicted to be superior in processing stability.

The meanings of the abbreviations of the thermoplastic polymers described in Table 13-1 - Table 13-4 are as follows. The MFR described below is the 0 min Dwell MFR of the thermoplastic polymer as measured under the conditions of Experimental Example 2-1.

P2-1: high density polyethylene (HDPE) (excluding P2-45 - P2-50)
P2-2: low density polyethylene (LDPE) (excluding P2-51 - P2-57)
P2-3: linear low density polyethylene (LLDPE) (excluding P2-58 - P2-64)
P2-4: ethylene-ethyl acrylate copolymer (EEA)
P2-5: ethylene-vinyl acetate copolymer (EVA)
P2-6: polypropylene (PP) (excluding P2-65 - P2-71)
P2-7: propylene-ethylene random copolymer
P2-8: propylene-$\alpha$-olefin random copolymer
P2-9: propylene-ethylene-$\alpha$-olefin copolymer
P2-10: polystyrene (PS)
P2-11: acrylonitrile-styrene copolymer (SAN)
P2-12: acrylonitrile-butadiene-styrene copolymer (ABS)
P2-13: special acrylic rubber-acrylonitrile-styrene copolymer
P2-14: acrylonitrile-chlorinated polyethylene-styrene copolymer (ACS)
P2-15: polybutadiene rubber (BR)
P2-16: styrene-butadiene copolymer (SB)
P2-17: styrene-butadiene block copolymer (SBS)
P2-18: chlorinated polyethylene (CPE)
P2-19: polychloroprene
P2-20: chlorinated rubber
P2-21: poly(vinyl chloride) (PVC)
P2-22: poly(vinylidene chloride) (PVDC)
P2-23: methacrylate resin

P2-24: fluororesin
P2-25: polyacetal (POM)
P2-26: grafted poly(phenylene ether) resin
P2-27: poly(phenylene sulfide) resin (PPS)
P2-28: polyurethane (PU) (excluding P2-75 - P2-77)
P2-29: polyamide (PA) (excluding P2-78 - P2-86)
P2-30: poly(ethylene terephthalate) (PET)
P2-31: poly(butylene terephthalate) (PBT)
P2-32: poly(lactic acid) (PLA)
P2-33: polycarbonate (PC)
P2-34: polyacrylate
P2-35: polysulfone (PPSU)
P2-36: poly(ether ether ketone) (PEEK)
P2-37: poly(ether sulfone) (PES)
P2-38: aromatic polyester
P2-39: diallyl phthalate prepolymer
P2-40: silicone resin (SI)
P2-41: 1,2-polybutadiene
P2-42: polyisoprene
P2-43: butadiene-acrylonitrile copolymer (NBR)
P2-44: ethylene-methyl methacrylate copolymer (EMMA)
P2-45: high density polyethylene (HDPE) with MFR of 40 g/10 min
P2-46: high density polyethylene (HDPE) with MFR of 20 g/10 min
P2-47: high density polyethylene (HDPE) with MFR of 10 g/10 min
P2-48: high density polyethylene (HDPE) with MFR of 5 g/10 min
P2-49: high density polyethylene (HDPE) with MFR of 1 g/10 min
P2-50: high density polyethylene (HDPE) with MFR of 0.1 g/10 min
P2-51: low density polyethylene (LDPE) with MFR of 75 g/10 min
P2-52: low density polyethylene (LDPE) with MFR of 50 g/10 min
P2-53: low density polyethylene (LDPE) with MFR of 25 g/10 min
P2-54: low density polyethylene (LDPE) with MFR of 10 g/10 min
P2-55: low density polyethylene (LDPE) with MFR of 5 g/10 min
P2-56: low density polyethylene (LDPE) with MFR of 2 g/10 min
P2-57: low density polyethylene (LDPE) with MFR of 1 g/10 min
P2-58: low density polyethylene (LDPE) with MFR of 0.1 g/10 min
P2-59: linear low density polyethylene (LLDPE) with MFR of 100 g/10 min
P2-60: linear low density polyethylene (LLDPE) with MFR of 50 g/10 min
P2-61: linear low density polyethylene (LLDPE) with MFR of 25 g/10 min
P2-62: linear low density polyethylene (LLDPE) with MFR of 10 g/10 min
P2-63: linear low density polyethylene (LLDPE) with MFR of 5 g/10 min
P2-64: linear low density polyethylene (LLDPE) with MFR of 1 g/10 min
P2-65: linear low density polyethylene (LLDPE) with MFR of 0.1 g/10 min
P2-66: polypropylene (PP) with MFR of 100 g/10 min
P2-67: polypropylene (PP) with MFR of 50 g/10 min
P2-68: polypropylene (PP) with MFR of 25 g/10 min
P2-69: polypropylene (PP) with MFR of 10 g/10 min
P2-70: polypropylene (PP) with MFR of 5 g/10 min
P2-71: polypropylene (PP) with MFR of 1 g/10 min
P2-72: polypropylene (PP) with MFR of 0.1 g/10 min
P2-73: styrene-butadiene thermoplastic elastomer
P2-74: styrene-ethylene-butylene-styrene block copolymer (SEBS)
P2-75: styrene-isoprene-styrene block copolymer (SIS)
P2-76: polyurethane (PU) with weight average molecular weight of 1000
P2-77: polyurethane (PU) with weight average molecular weight of 2000
P2-78: polyurethane (PU) with weight average molecular weight of 5000
P2-79: nylon 6 (Ny6) with number average molecular weight of 5000
P2-80: nylon 6 (Ny6) with number average molecular weight of 10000
P2-81: nylon 6 (Ny6) with number average molecular weight of 50000

P2-82: nylon 6 (Ny6) with number average molecular weight of 100000
P2-83: nylon 610 (Ny610)
P2-84: nylon 612 (Ny612)
P2-85: nylon 11 (Ny11)
P2-86: nylon 12 (Ny12)
P2-87: nylon MXD6 (NyMXD6)

[Table 13-1]

Table 13-1: thermoplastic polymer composition

| Example | thermoplastic polymer | stabilizer composition | |
|---|---|---|---|
| | | kind | amount (part) |
| 2-92 | P2-1 | Ex. 2-1 | 0.25 |
| 2-93 | P2-2 | Ex. 2-1 | 0.25 |
| 2-94 | P2-3 | Ex. 2-1 | 0.25 |
| 2-95 | P2-3 | Ex. 2-2 | 0.11 |
| 2-96 | P2-3 | Ex. 2-13 | 0.2002 |
| 2-97 | P2-3 | Ex. 2-16 | 0.41 |
| 2-98 | P2-3 | Ex. 2-34 | 0.41 |
| 2-99 | P2-3 | Ex. 2-76 | 0.61 |
| 2-100 | P2-4 | Ex. 2-1 | 0.25 |
| 2-101 | P2-5 | Ex. 2-1 | 0.25 |
| 2-102 | P2-6 | Ex. 2-1 | 0.25 |
| 2-103 | P2-6 | Ex. 2-2 | 0.11 |
| 2-104 | P2-6 | Ex. 2-13 | 0.2002 |
| 2-105 | P2-6 | Ex. 2-16 | 0.41 |
| 2-106 | P2-6 | Ex. 2-34 | 0.41 |
| 2-107 | P2-6 | Ex. 2-76 | 0.61 |
| 2-108 | P2-7 | Ex. 2-1 | 0.25 |
| 2-109 | P2-8 | Ex. 2-1 | 0.25 |
| 2-110 | P2-9 | Ex. 2-1 | 0.25 |
| 2-111 | P2-10 | Ex. 2-1 | 0.25 |
| 2-112 | P2-10 | Ex. 2-2 | 0.11 |
| 2-113 | P2-10 | Ex. 2-13 | 0.2002 |
| 2-114 | P2-10 | Ex. 2-16 | 0.41 |
| 2-115 | P2-10 | Ex. 2-34 | 0.41 |
| 2-116 | P2-10 | Ex. 2-76 | 0.61 |
| 2-117 | P2-11 | Ex. 2-1 | 0.25 |
| 2-118 | P2-12 | Ex. 2-1 | 0.25 |
| 2-119 | P2-12 | Ex. 2-2 | 0.11 |
| 2-120 | P2-12 | Ex. 2-13 | 0.2002 |

[Table 13-2]

Table 13-2: thermoplastic polymer composition

| Example | Thermoplastic polymer | stabilizer composition | |
|---|---|---|---|
| | | kind | amount (part) |
| 2-121 | P2-12 | Ex. 2-16 | 0.41 |
| 2-122 | P2-12 | Ex. 2-34 | 0.41 |
| 2-123 | P2-12 | Ex. 2-76 | 0.61 |
| 2-124 | P-13 | Ex. 2-1 | 0.25 |
| 2-125 | P2-14 | Ex. 2-1 | 0.25 |
| 2-126 | P2-15 | Ex. 2-1 | 0.25 |
| 2-127 | P2-16 | Ex. 2-1 | 0.25 |
| 2-128 | P2-16 | Ex. 2-2 | 0.11 |
| 2-129 | P2-16 | Ex. 2-13 | 0.2002 |
| 2-130 | P2-16 | Ex. 2-16 | 0.41 |
| 2-131 | P2-16 | Ex. 2-34 | 0.41 |
| 2-132 | P2-16 | Ex. 2-76 | 0.61 |
| 2-133 | P2-17 | Ex. 2-1 | 0.11 |
| 2-134 | P2-17 | Ex. 2-2 | 0.11 |
| 2-135 | P2-17 | Ex. 2-13 | 0.2002 |
| 2-136 | P2-17 | Ex. 2-16 | 0.41 |
| 2-137 | P2-17 | Ex. 2-34 | 0.41 |
| 2-138 | P2-17 | Ex. 2-76 | 0. 61 |
| 2-139 | P2-18 | Ex. 2-1 | 0.25 |
| 2-140 | P2-19 | Ex. 2-1 | 0.25 |
| 2-141 | P2-20 | Ex. 2-1 | 0.25 |
| 2-142 | P2-21 | Ex. 2-1 | 0.25 |
| 2-143 | P2-22 | Ex. 2-1 | 0.25 |
| 2-144 | P2-23 | Ex. 2-1 | 0.25 |
| 2-145 | P2-24 | Ex. 2-1 | 0.25 |
| 2-146 | P2-25 | Ex. 2-1 | 0.25 |
| 2-147 | P2-26 | Ex. 2-1 | 0.25 |
| 2-148 | P2-27 | Ex. 2-1 | 0.25 |
| 2-149 | P2-28 | Ex. 2-1 | 0.25 |

[Table 13-3]

Table 13-3: thermoplastic polymer composition

| Example | thermoplastic polymer | stabilizer composition | |
|---|---|---|---|
| | | kind | amount (part) |
| 2-150 | P2-29 | Ex. 2-1 | 0.25 |
| 2-151 | P2-30 | Ex. 2-1 | 0.25 |

(continued)

| Example | thermoplastic polymer | stabilizer composition | |
|---|---|---|---|
| | | kind | amount (part) |
| 2-152 | P2-31 | Ex. 2-1 | 0.25 |
| 2-153 | P2-32 | Ex. 2-1 | 0.25 |
| 2-154 | P2-33 | Ex. 2-1 | 0.25 |
| 2-155 | P2-34 | Ex. 2-1 | 0.25 |
| 2-156 | P2-35 | Ex. 2-1 | 0.25 |
| 2-157 | P2-36 | Ex. 2-1 | 0.25 |
| 2-158 | P2-37 | Ex. 2-1 | 0.25 |
| 2-159 | P2-38 | Ex. 2-1 | 0.25 |
| 2-160 | P2-39 | Ex. 2-1 | 0.25 |
| 2-161 | P2-40 | Ex. 2-1 | 0.25 |
| 2-162 | P2-41 | Ex. 2-1 | 0.25 |
| 2-163 | P2-42 | Ex. 2-1 | 0.25 |
| 2-164 | P2-43 | Ex. 2-1 | 0.25 |
| 2-165 | P2-44 | Ex. 2-1 | 0.25 |
| 2-166 | P2-45 | Ex. 2-1 | 0.11 |
| 2-167 | P2-46 | Ex. 2-1 | 0.11 |
| 2-168 | P2-47 | Ex. 2-1 | 0.11 |
| 2-169 | P2-48 | Ex. 2-1 | 0.11 |
| 2-170 | P2-49 | Ex. 2-1 | 0.11 |
| 2-171 | P2-50 | Ex. 2-1 | 0.11 |
| 2-172 | P2-51 | Ex. 2-1 | 0.11 |
| 2-173 | P2-52 | Ex. 2-1 | 0.11 |
| 2-174 | P2-53 | Ex. 2-1 | 0.11 |
| 2-175 | P2-54 | Ex. 2-1 | 0.11 |
| 2-176 | P2-55 | Ex. 2-1 | 0.11 |
| 2-177 | P2-56 | Ex. 2-1 | 0.11 |
| 2-178 | P2-57 | Ex. 2-1 | 0.11 |

[Table 13-4]

Table 13-4: thermoplastic polymer composition

| Example | thermoplastic polymer | stabilizer composition | |
|---|---|---|---|
| | | kind | amount (part) |
| 2-179 | P2-58 | Ex. 2-1 | 0.11 |
| 2-180 | P2-59 | Ex. 2-1 | 0.11 |
| 2-181 | P2-60 | Ex. 2-1 | 0.11 |
| 2-182 | P2-61 | Ex. 2-1 | 0.11 |
| 2-183 | P2-62 | Ex. 2-1 | 0.11 |

(continued)

| Example | thermoplastic polymer | stabilizer composition | |
|---|---|---|---|
| | | kind | amount (part) |
| 2-184 | P2-63 | Ex. 2-1 | 0.11 |
| 2-185 | P2-64 | Ex. 2-1 | 0.11 |
| 2-186 | P2-65 | Ex. 2-1 | 0.11 |
| 2-187 | P2-66 | Ex. 2-1 | 0.11 |
| 2-188 | P2-67 | Ex. 2-1 | 0.11 |
| 2-189 | P2-68 | Ex. 2-1 | 0.11 |
| 2-190 | P2-69 | Ex. 2-1 | 0.11 |
| 2-191 | P2-70 | Ex. 2-1 | 0.11 |
| 2-192 | P2-71 | Ex. 2-1 | 0.11 |
| 2-193 | P2-72 | Ex. 2-1 | 0.11 |
| 2-194 | P2-73 | Ex. 2-1 | 0.11 |
| 2-195 | P2-74 | Ex. 2-1 | 0.11 |
| 2-196 | P2-75 | Ex. 2-1 | 0.11 |
| 2-197 | P2-76 | Ex. 2-1 | 0.11 |
| 2-198 | P2-77 | Ex. 2-1 | 0.11 |
| 2-199 | P2-78 | Ex. 2-1 | 0.11 |
| 2-200 | P2-79 | Ex. 2-1 | 0.11 |
| 2-201 | P2-80 | Ex. 2-1 | 0.11 |
| 2-202 | P2-81 | Ex. 2-1 | 0.11 |
| 2-203 | P2-82 | Ex. 2-1 | 0.11 |
| 2-204 | P2-83 | Ex. 2-1 | 0.11 |
| 2-205 | P2-84 | Ex. 2-1 | 0.11 |
| 2-206 | P2-85 | Ex. 2-1 | 0.11 |
| 2-207 | P2-86 | Ex. 2-1 | 0.11 |
| 2-208 | P2-87 | Ex. 2-1 | 0.11 |

Example 3-1 (Production of stabilizer composition)

Compound (2-1) (0.2 part), trehalose (0.01 part) and compound (1-1) (0.3 part) were mixed to produce a stabilizer composition.

Reference Example 3-1

Compound (2-1) (0.2 part) and compound (1-1) (0.3 part) were mixed to produce a stabilizer composition.

Example 3-2 (Production of thermoplastic polymer composition)

A styrene-butadiene block copolymer (manufactured by Asahi Kasei Corp., 100 parts) and the stabilizer composition (0.51 part) obtained in Example 3-1 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Reference Example 3-2

In the same manner as in Example 3-2 except that the composition (0.5 part) obtained in Reference Example 3-1 was used instead of the stabilizer composition obtained in Example 3-1, a thermoplastic polymer composition was obtained as pellets.

Experimental Example 3-1 (Evaluation of processing stability)

For evaluation of the processing stability during operation of extrusion processing, Dwell MFR tests were performed using the pellets of each thermoplastic polymer composition obtained in Example 3-2 and Reference Example 3-2. The test was based on JIS K 7210, and 0 min Dwell MFR (g/10 min) and 30 min Dwell MFR (g/10 min) were measured by a melt indexer (L217-E14011 manufactured by Technol Seven Co., Ltd.) under the conditions of temperature in a cylinder 270°C and load 2.16 kg. The 0 min Dwell MFR was measured after 5 min preheating time after filling pellets of the thermoplastic polymer composition in the cylinder. The 30 min Dwell MFR was measured after 30 min dwell time, including the preheating time, of the pellets of the thermoplastic polymer composition in the cylinder. The MFR variation rate was calculated by the following formula and using the thus-measured 0 min Dwell MFR and 30 min Dwell MFR:

MFR variation rate (%)=
absolute value of (30 min Dwell MFR-0 min Dwell MFR) x 100/(0 min Dwell MFR)

The compositions of the stabilizer compositions of Example 3-1 and Reference Example 3-1 are shown in Table 14, and the compositions, 0 min Dwell MFRs, 30 min Dwell MFRs and MFR variation rates of the thermoplastic polymer compositions of Example 3-2 and Reference Example 3-2 are shown in Table 15. In a thermoplastic polymer composition containing a styrene-butadiene block copolymer, a smaller MFR variation rate means better processing stability thereof.

[Table 14]

Table 14: stabilizer composition

| | compound (2-1) (part) | trehalose (part) | compound (1-1) (part) |
|---|---|---|---|
| Ex. 3-1 | 0.2 | 0.01 | 0.3 |
| Ref. Ex. 3-1 | 0.2 | - | 0.3 |

[Table 15]

Table 15: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 3-2 | 100 | Ex. 3-1 | 0.51 | 23.7 | 14.9 | 37.1 |
| Ref. Ex. 3-2 | 100 | Ref. Ex. 3-1 | 0.5 | 23.4 | 10.5 | 55.3 |
| SBS: styrene-butadiene block copolymer | | | | | | |

Example 3-3 (Production of stabilizer composition)

Compound (2-2) (0.1 part) and trehalose (0.1 part) were mixed to produce a stabilizer composition.

Example 3-4 (Production of thermoplastic polymer composition)

A polypropylene (manufactured by Sumitomo Chemical Company, Limited, 100 parts) and the stabilizer composition (0.2 part) obtained in Example 3-3 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by

a pelletizer to give a thermoplastic polymer composition as pellets.

Comparative Example 3-1

In the same manner as in Example 3-4 except that compound (2-2) (0.1 part) was used instead of the stabilizer composition obtained in Example 3-3, a thermoplastic polymer composition was obtained as pellets.

Experimental Example 3-2 (Evaluation of processing stability)

For evaluation of the processing stability during operation of extrusion processing, Dwell MFR tests were performed using the pellets of each thermoplastic polymer composition obtained in Example 3-4 and Comparative Example 3-1. The test was based on JIS K 7210, and 30 min Dwell MFR (g/10 min) were measured by a melt indexer (L217-E14011 manufactured by Technol Seven Co., Ltd.) under the conditions of temperature in a cylinder 270°C and load 2.16 kg. The 30 min Dwell MFR was measured after 30 min dwell time, including the preheating time, of the pellets of the thermoplastic polymer composition in the cylinder.

The composition of the stabilizer composition in Example 3-3 is shown in Table 16, and the compositions and 30 min Dwell MFRs of the thermoplastic polymer compositions of Example 3-4 and Comparative Example 3-1 are shown in Table 17. In a thermoplastic polymer composition containing polypropylene, a smaller 30 min Dwell MFR means better processing stability thereof.

[Table 16]

Table 16: stabilizer composition

| | compound (2-2) (part) | trehalose (part) |
|---|---|---|
| Ex. 3-3 | 0.1 | 0.1 |

[Table 17]

Table 17: thermoplastic polymer composition

| | PP (part) | stabilizer composition | | 30 min Dwell MFR (g/10 min) |
|---|---|---|---|---|
| | | kind | amount (part) | |
| Ex. 3-4 | 100 | Ex. 3-3 | 0.2 | 16.5 |
| Comp. Ex. 3-1 | 100 | compound (2-2) | 0.1 | 22.8 |
| PP: polypropylene | | | | |

Example 3-5 - Example 3-7 (Production of stabilizer composition)

Compound (2-1), trehalose, compound (1-1) and compound (3-1) in the amounts described in Table 18 were mixed to respectively produce stabilizer compositions.

Example 3-8 (Production of thermoplastic polymer composition)

A styrene-butadiene block copolymer (manufactured by DENKI KAGAKU KOGYO KABUSHIKI KAISHA, 100 parts) and the stabilizer composition (0.21 part) obtained in Example 3-5 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 3-9 (Production of thermoplastic polymer composition)

In the same manner as in Example 3-8 except that the stabilizer composition (0.41 part) obtained in Example 3-6 was used instead of the stabilizer composition obtained in Example 3-5, a thermoplastic polymer composition was obtained as pellets.

Example 3-10 (Production of thermoplastic polymer composition)

In the same manner as in Example 3-8 except that the stabilizer composition (0.71 part) obtained in Example 3-7 was used instead of the stabilizer composition obtained in Example 3-5, a thermoplastic polymer composition was obtained as pellets.

Comparative Example 3-2

In the same manner as in Example 3-8 except that compound (2-1) (0.2 part) was used instead of the stabilizer composition obtained in Example 3-5, a thermoplastic polymer composition was obtained as pellets.

Experimental Example 3-3 (Evaluation of processing stability)

0 min Dwell MFRs (g/10 min) and 30 min Dwell MFRs (g/10 min) were measured using the pellets of each thermoplastic polymer composition obtained in Example 3-8 - Example 3-10 and Comparative Example 3-2 and in the same manner as in Experimental Example 3-1, and the MFR variation rates (%) were calculated. These results are shown in Table 19.

[Table 18]

Table 18: stabilizer composition

| | compound (2-1) amount (part) | trehalose amount (part) | compound (1-1) amount (part) | compound (3-1) amount (part) |
|---|---|---|---|---|
| Ex. 3-5 | 0.2 | 0.01 | - | - |
| Ex. 3-6 | 0.2 | 0.01 | - | 0.2 |
| Ex. 3-7 | 0.2 | 0.01 | 0.3 | 0.2 |

[Table 19]

Table 19: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 3-8 | 100 | Ex. 3-5 | 0.21 | 16.3 | 3.0 | 81.6 |
| Ex. 3-9 | 100 | Ex. 3-6 | 0.41 | 20.6 | 8.9 | 58.3 |
| Ex. 3-10 | 100 | Ex. 3-7 | 0.71 | 23.1 | 15.4 | 33.3 |
| Comp. Ex. 3-2 | 100 | compound (2-1) | 0.2 | 14.7 | 1.2 | 91.8 |
| SBS: styrene-butadiene block copolymer | | | | | | |

Example 3-11 - Example 3-78 (Production of stabilizer composition)

Stabilizer compositions are obtained by mixing the components described in Table 20-1 and Table 20-2. The thermoplastic polymer compositions containing these stabilizer compositions are predicted to be superior in processing stability.

[Table 20-1]

Table 20-1: stabilizer composition

| Example | compound (2) | | trehalose | compounds (1), (3) - (8) | | | | | |
|---|---|---|---|---|---|---|---|---|---|
| | kind | amount (part) | amount (part) | kind | amount (part) | kind | amount (part) | kind | amount (part) |
| 3-11 | (2-1) | 0.01 | 0.2 | - | - | - | - | - | - |

(continued)

| Example | compound (2) | | trehalose | compounds (1), (3) - (8) | | | | | |
|---|---|---|---|---|---|---|---|---|---|
| | kind | amount (part) | amount (part) | kind | amount (part) | kind | amount (part) | kind | amount (part) |
| 3-12 | (2-1) | 0.05 | 0.15 | - | - | - | - | - | - |
| 3-13 | (2-1) | 0.1 | 0.1 | - | - | - | - | - | - |
| 3-14 | (2-1) | 0.15 | 0.05 | - | - | - | - | - | - |
| 3-15 | (2-1) | 0.2 | 0.001 | - | - | - | - | - | - |
| 3-16 | (2-1) | 0.2 | 0.0002 | - | - | - | - | - | - |
| 3-17 | (2-2) | 0.01 | 0.2 | - | - | - | - | - | - |
| 3-18 | (2-2) | 0.05 | 0.15 | - | - | - | - | - | - |
| 3-19 | (2-2) | 0.1 | 0.1 | - | - | - | - | - | - |
| 3-20 | (2-2) | 0.15 | 0.05 | - | - | - | - | - | - |
| 3-21 | (2-2) | 0.2 | 0.01 | - | - | - | - | - | - |
| 3-22 | (2-2) | 0.2 | 0.001 | - | - | - | - | - | - |
| 3-23 | (2-2) | 0.2 | 0.0002 | - | - | - | - | - | - |
| 3-24 | (2-3) | 0.01 | 0.2 | - | - | - | - | - | - |
| 3-25 | (2-3) | 0.05 | 0.15 | - | - | - | - | - | - |
| 3-26 | (2-3) | 0.1 | 0.1 | - | - | - | - | - | - |
| 3-27 | (2-3) | 0.15 | 0.05 | - | - | - | - | - | - |
| 3-28 | (2-3) | 0.2 | 0.01 | - | - | - | - | - | - |
| 3-29 | (2-3) | 0.2 | 0.001 | - | - | - | - | - | - |
| 3-30 | (2-3) | 0.2 | 0.0002 | - | - | - | - | - | - |
| 3-31 | (2-1) | 0.01 | 0.2 | (1-1) | 0.2 | - | - | - | - |
| 3-32 | (2-1) | 0.2 | 0.01 | (1-1) | 0.2 | - | - | - | - |
| 3-33 | (2-1) | 0.2 | 0.0002 | (1-1) | 0.2 | - | - | - | - |
| 3-34 | (2-2) | 0.01 | 0.2 | (1-1) | 0.2 | - | - | - | - |
| 3-35 | (2-2) | 0.2 | 0.01 | (1-1) | 0.2 | - | - | - | - |
| 3-36 | (2-2) | 0.2 | 0.0002 | (1-1) | 0.2 | - | - | - | - |
| 3-37 | (2-3) | 0.01 | 0.2 | (1-1) | 0.2 | - | - | - | - |
| 3-38 | (2-3) | 0.2 | 0.01 | (1-1) | 0.2 | - | - | - | - |
| 3-39 | (2-3) | 0.2 | 0.0002 | (1-1) | 0.2 | - | - | - | - |
| 3-40 | (2-1) | 0.01 | 0.2 | (1-2) | 0.2 | - | - | - | - |
| 3-41 | (2-1) | 0.2 | 0.01 | (1-2) | 0.2 | - | - | - | - |
| 3-42 | (2-1) | 0.2 | 0.0002 | (1-2) | 0.2 | - | - | - | - |

[Table 20-2]

Table 20-2: stabilizer composition

| Example | compound (2) | | trehalose | compounds (1), (3) - (8) | | | | | |
|---|---|---|---|---|---|---|---|---|---|
| | kind | amount (part) | amount (part) | kind | amount (part) | kind | amount (part) | kind | amount (part) |
| 3-43 | (2-1) | 0.2 | 0.01 | (3-1) | 0.2 | - | - | - | - |
| 3-44 | (2-2) | 0.2 | 0.01 | (3-1) | 0.2 | - | - | - | - |
| 3-45 | (2-3) | 0.2 | 0.01 | (3-1) | 0.2 | - | - | - | - |
| 3-46 | (2-1) | 0.2 | 0.01 | (4-1) | 0.2 | - | - | - | - |
| 3-47 | (2-2) | 0.2 | 0.01 | (4-1) | 0.2 | - | - | - | - |
| 3-48 | (2-3) | 0.2 | 0.01 | (4-1) | 0.2 | - | - | - | - |
| 3-49 | (2-1) | 0.2 | 0.01 | (5-1) | 0.2 | - | - | - | - |
| 3-50 | (2-2) | 0.2 | 0.01 | (5-1) | 0.2 | - | - | - | - |
| 3-51 | (2-3) | 0.2 | 0.01 | (5-1) | 0.2 | - | - | - | - |
| 3-52 | (2-1) | 0.2 | 0.01 | (5-2) | 0.2 | - | - | - | - |
| 3-53 | (2-2) | 0.2 | 0.01 | (5-2) | 0.2 | - | - | - | - |
| 3-54 | (2-3) | 0.2 | 0.01 | (5-2) | 0.2 | - | - | - | - |
| 3-55 | (2-1) | 0.2 | 0.01 | (5-3) | 0.2 | - | - | - | - |
| 3-56 | (2-2) | 0.2 | 0.01 | (5-3) | 0.2 | - | - | - | - |
| 3-57 | (2-3) | 0.2 | 0.01 | (5-3) | 0.2 | - | - | - | - |
| 3-58 | (2-1) | 0.2 | 0.01 | (6-1) | 0.2 | - | - | - | - |
| 3-59 | (2-2) | 0.2 | 0.01 | (6-1) | 0.2 | - | - | - | - |
| 3-60 | (2-3) | 0.2 | 0.01 | (6-1) | 0.2 | - | - | - | - |
| 3-61 | (2-1) | 0.2 | 0.01 | (7-1) | 0.2 | - | - | - | - |
| 3-62 | (2-2) | 0.2 | 0.01 | (7-1) | 0.2 | - | - | - | - |
| 3-63 | (2-3) | 0.2 | 0.01 | (7-1) | 0.2 | - | - | - | - |
| 3-64 | (2-1) | 0.2 | 0.01 | (8-1) | 0.2 | - | - | - | - |
| 3-65 | (2-2) | 0.2 | 0.01 | (8-1) | 0.2 | - | - | - | - |
| 3-66 | (2-3) | 0.2 | 0.01 | (8-1) | 0.2 | - | - | - | - |
| 3-67 | (2-1) | 0.2 | 0.01 | (1-1) | 0.2 | (3-1) | 0.2 | - | - |
| 3-68 | (2-2) | 0.2 | 0.01 | (1-1) | 0.2 | (3-1) | 0.2 | - | - |
| 3-69 | (2-3) | 0.2 | 0.01 | (1-1) | 0.2 | (3-1) | 0.2 | - | - |
| 3-70 | (2-1) | 0.2 | 0.01 | (1-1) | 0.2 | (8-1) | 0.2 | - | - |
| 3-71 | (2-2) | 0.2 | 0.01 | (1-1) | 0.2 | (8-1) | 0.2 | - | - |
| 3-72 | (2-3) | 0.2 | 0.01 | (1-1) | 0.2 | (8-1) | 0.2 | - | - |
| 3-73 | (2-1) | 0.2 | 0.01 | (3-1) | 0.2 | (8-1) | 0.2 | - | - |
| 3-74 | (2-2) | 0.2 | 0.01 | (3-1) | 0.2 | (8-1) | 0.2 | - | - |
| 3-75 | (2-3) | 0.2 | 0.01 | (3-1) | 0.2 | (8-1) | 0.2 | - | - |
| 3-76 | (2-1) | 0.2 | 0.01 | (1-1) | 0.2 | (3-1) | 0.2 | (8-1) | 0.2 |
| 3-77 | (2-2) | 0.2 | 0.01 | (1-1) | 0.2 | (3-1) | 0.2 | (8-1) | 0.2 |
| 3-78 | (2-3) | 0.2 | 0.01 | (1-1) | 0.2 | (3-1) | 0.2 | (8-1) | 0.2 |

Example 3-79 - Example 3-134 (Production of thermoplastic polymer composition)

In the same manner as in Example 3-4 except that the thermoplastic polymers (100 parts) described in Table 21-1 and Table 21-2 and the stabilizer composition in the kinds and amounts described in Table 21-1 and Table 21-2 are used, thermoplastic polymer compositions are obtained as pellets. The obtained thermoplastic polymer compositions are predicted to be superior in processing stability.

The meanings of the abbreviations of the thermoplastic polymers described in Table 21-1 and Table 21-2 are as follows.

P3-1: high density polyethylene (HDPE)
P3-2: low density polyethylene (LDPE)
P3-3: linear low density polyethylene (LLDPE)
P3-4: ethylene-vinyl alcohol copolymer (EVOH)
P3-5: ethylene-ethyl acrylate copolymer (EEA)
P3-6: ethylene-vinyl acetate copolymer (EVA)
P3-7: propylene-ethylene random copolymer
P3-8: propylene-$\alpha$-olefin random copolymer
P3-9: propylene-ethylene-$\alpha$-olefin copolymer
P3-10: polystyrene (PS)
P3-11: acrylonitrile-styrene copolymer (SAN)
P3-12: acrylonitrile-butadiene-styrene copolymer (ABS)
P3-13: special acrylic rubber-acrylonitrile-styrene copolymer
P3-14: acrylonitrile-chlorinated polyethylene-styrene copolymer (ACS)
P3-15: polybutadiene rubber (BR)
P3-16: styrene-butadiene copolymer (SB)
P3-17: styrene-butadiene block copolymer (SBS)
P3-18: chlorinated polyethylene (CPE)
P3-19: polychloroprene
P3-20: chlorinated rubber
P3-21: poly(vinyl chloride) (PVC)
P3-22: poly(vinylidene chloride) (PVDC)
P3-23: methacrylate resin
P3-24: fluororesin
P3-25: polyacetal (POM)
P3-26: grafted poly(phenylene ether) resin
P3-27: poly(phenylene sulfide) resin (PPS)
P3-28: polyurethane (PU)
P3-29: polyamide (PA)
P3-30: poly(ethylene terephthalate) (PET)
P3-31: poly(butylene terephthalate) (PBT)
P3-32: poly(lactic acid) (PLA)
P3-33: polycarbonate (PC)
P3-34: polyacrylate
P3-35: polysulfone (PPSU)
P3-36: poly(ether ether ketone) (PEEK)
P3-37: poly(ether sulfone) (PES)
P3-38: aromatic polyester
P3-39: diallyl phthalate prepolymer
P3-40: silicone resin (SI)
P3-41: 1,2-polybutadiene
P3-42: polyisoprene
P3-43: butadiene-acrylonitrile copolymer (NBR)
P3-44: ethylene-methyl methacrylate copolymer (EMMA)

[Table 21-1]

Table 21-1: thermoplastic polymer composition

| Example | thermoplastic polymer | stabilizer composition | |
|---|---|---|---|
| | | kind | amount (part) |
| 3-79 | P3-1 | Ex. 3-5 | 0.21 |
| 3-80 | P3-2 | Ex. 3-5 | 0.21 |
| 3-81 | P3-3 | Ex. 3-5 | 0.21 |
| 3-82 | P3-3 | Ex. 3-1 | 0.51 |
| 3-83 | P3-3 | Ex. 3-6 | 0.41 |
| 3-84 | P3-3 | Ex. 3-7 | 0.71 |
| 3-85 | P3-4 | Ex. 3-5 | 0.21 |
| 3-86 | P3-4 | Ex. 3-1 | 0.51 |
| 3-87 | P3-4 | Ex. 3-6 | 0.41 |
| 3-88 | P3-4 | Ex. 3-7 | 0.71 |
| 3-89 | P3-5 | Ex. 3-5 | 0.21 |
| 3-90 | P3-6 | Ex. 3-5 | 0.21 |
| 3-91 | P3-7 | Ex. 3-5 | 0.21 |
| 3-92 | P3-8 | Ex. 3-5 | 0.21 |
| 3-93 | P3-9 | Ex. 3-5 | 0.21 |
| 3-94 | P3-10 | Ex. 3-5 | 0.21 |
| 3-95 | P3-10 | Ex. 3-1 | 0.51 |
| 3-96 | P3-10 | Ex. 3-6 | 0.41 |
| 3-97 | P3-10 | Ex. 3-7 | 0.71 |
| 3-98 | P3-11 | Ex. 3-5 | 0.21 |
| 3-99 | P3-12 | Ex. 3-5 | 0.21 |
| 3-100 | P3-12 | Ex. 3-1 | 0.51 |
| 3-101 | P3-12 | Ex. 3-6 | 0.41 |
| 3-102 | P3-12 | Ex. 3-7 | 0.71 |

[Table 21-2]

Table 21-2: thermoplastic polymer composition

| Example | thermoplastic polymer | stabilizer composition | |
|---|---|---|---|
| | | kind | amount (part) |
| 3-103 | P3-13 | Ex. 3-5 | 0.21 |
| 3-104 | P3-14 | Ex. 3-5 | 0.21 |
| 3-105 | P3-15 | Ex. 3-5 | 0.21 |
| 3-106 | P3-16 | Ex. 3-5 | 0.21 |
| 3-107 | P3-17 | Ex. 3-5 | 0.21 |
| 3-108 | P3-18 | Ex. 3-5 | 0.21 |
| 3-109 | P3-19 | Ex. 3-5 | 0.21 |
| 3-110 | P3-20 | Ex. 3-5 | 0.21 |

(continued)

| Example | thermoplastic polymer | stabilizer composition | |
|---|---|---|---|
| | | kind | amount (part) |
| 3-111 | P3-21 | Ex. 3-5 | 0.21 |
| 3-112 | P3-22 | Ex. 3-5 | 0.21 |
| 3-113 | P3-23 | Ex. 3-5 | 0.21 |
| 3-114 | P3-24 | Ex. 3-5 | 0.21 |
| 3-115 | P3-25 | Ex. 3-5 | 0.21 |
| 3-116 | P3-26 | Ex. 3-5 | 0.21 |
| 3-117 | P3-27 | Ex. 3-5 | 0.21 |
| 3-118 | P3-28 | Ex. 3-5 | 0.21 |
| 3-119 | P3-29 | Ex. 3-5 | 0.21 |
| 3-120 | P3-30 | Ex. 3-5 | 0.21 |
| 3-121 | P3-31 | Ex. 3-5 | 0.21 |
| 3-122 | P3-32 | Ex. 3-5 | 0.21 |
| 3-123 | P3-33 | Ex. 3-5 | 0.21 |
| 3-124 | P3-34 | Ex. 3-5 | 0.21 |
| 3-125 | P3-35 | Ex. 3-5 | 0.21 |
| 3-126 | P3-36 | Ex. 3-5 | 0.21 |
| 3-127 | P3-37 | Ex. 3-5 | 0.21 |
| 3-128 | P3-38 | Ex. 3-5 | 0.21 |
| 3-129 | P3-39 | Ex. 3-5 | 0.21 |
| 3-130 | P3-40 | Ex. 3-5 | 0.21 |
| 3-131 | P3-41 | Ex. 3-5 | 0.21 |
| 3-132 | P3-42 | Ex. 3-5 | 0.21 |
| 3-133 | P3-43 | Ex. 3-5 | 0.21 |
| 3-134 | P3-44 | Ex. 3-5 | 0.21 |

Example 4-1 (Production of stabilizer composition)

Compound (3-1) (0.1 part) and trehalose (0.01 part) were mixed to produce a stabilizer composition.

Example 4-2 (Production of thermoplastic polymer composition)

Polypropylene (manufactured by Sumitomo Chemical Company, Limited, 100 parts) and the stabilizer composition obtained in Example 4-1 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Comparative Example 4-1

In the same manner as in Example 4-2 except that compound (3-1) (0.1 part) was used instead of the stabilizer composition obtained in Example 4-1, a thermoplastic polymer composition was obtained as pellets.

Experimental Example 4-1 (Evaluation of processing stability)

For evaluation of the processing stability during operation of extrusion processing, Dwell MFR tests were performed using the pellets of each thermoplastic polymer composition obtained in Example 4-2 and Comparative Example 4-1. The test was based on JIS K 7210, and 30 min Dwell MFR (g/10 min) were measured by a melt indexer (L217-E14011 manufactured by Technol Seven Co., Ltd.) under the conditions of temperature in a cylinder 270°C and load 2.16 kg. The 30 min Dwell MFR was measured after 30 min dwell time, including the preheating time, of the pellets of the thermoplastic polymer composition in the cylinder. Since decomposition of polypropylene is accelerated by the heat of processing, in a thermoplastic polymer composition containing polypropylene, a smaller 30 min Dwell MFR means better processing stability thereof.

The composition of the stabilizer composition of Example 4-1 is shown in Table 22, and the compositions and 30 min Dwell MFRs of the thermoplastic polymer compositions of Example 4-2 and Comparative Example 4-1 are shown in Table 23. Furthermore, the inhibition rate of MFR increment was calculated by the following formula and using the 30 min Dwell MFR of Example 4-2 and the 30 min Dwell MFR of Comparative Example 4-1:

inhibition rate of MFR increment(%)
=[(30 min Dwell MFR of Comparative Example 4-1)-(30 min Dwell MFR of Example 4-2)] x 100/(30 min Dwell MFR of Comparative Example 4-1).

The results are shown in Table 23.

[Table 22]

Table 22: stabilizer composition

| | compound (3-1) (part) | trehalose (part) | mass ratio of compound (3-1):trehalose |
|---|---|---|---|
| Ex. 4-1 | 0.1 | 0.01 | 10:1 |

[Table 23]

Table 23: thermoplastic polymer composition

| | PP (part) | stabilizer composition | | 30 min Dwell MFR (g/ 10 min) | inhibition rate of MFR increment (%) |
|---|---|---|---|---|---|
| | | kind | amount (part) | | |
| Ex. 4-2 | 100 | Ex. 4-1 | 0.11 | 11.5 | 28.1 |
| Comp. Ex. 4-1 | 100 | compound (3-1) | 0.1 | 16.0 | - |
| PP: polypropylene | | | | | |

Example 4-3 - Example 4-6 (Production of stabilizer composition)

Compound (3-1), trehalose, compound (1-1) and compound (2-1) in the amounts described in Table 24 were mixed to respectively produce stabilizer compositions.

Example 4-7 (Production of thermoplastic polymer composition)

A styrene-butadiene block copolymer (manufactured by DENKI KAGAKU KOGYO KABUSHIKI KAISHA, 100 parts) and the stabilizer composition (0.21 part) obtained in Example 4-3 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 4-8 (Production of thermoplastic polymer composition)

In the same manner as in Example 4-7 except that the stabilizer composition (0.51 part) obtained in Example 4-4 was used instead of the stabilizer composition obtained in Example 4-3, a thermoplastic polymer composition was obtained as pellets.

Example 4-9 (Production of thermoplastic polymer composition)

In the same manner as in Example 4-7 except that the stabilizer composition (0.41 part) obtained in Example 4-5 was used instead of the stabilizer composition obtained in Example 4-3, a thermoplastic polymer composition was obtained as pellets.

Example 4-10 (Production of thermoplastic polymer composition)

In the same manner as in Example 4-7 except that the stabilizer composition (0.71 part) obtained in Example 4-6 was used instead of the stabilizer composition obtained in Example 4-3, a thermoplastic polymer composition was obtained as pellets.

Comparative Example 4-2

In the same manner as in Example 4-7 except that only compound (3-1) (0.2 part) was used instead of the stabilizer composition obtained in Example 4-3, a thermoplastic polymer composition was obtained as pellets.

Experimental Example 4-2 (Evaluation of processing stability)

For evaluation of the processing stability during operation of extrusion processing, Dwell MFR tests were performed using the pellets of each thermoplastic polymer composition obtained in Example 4-7 - Example 4-10 and Comparative Example 4-2. The test was based on JIS K 7210, and 0 min Dwell MFR (g/10 min) and 30 min Dwell MFR (g/10 min) were measured by a melt indexer (L217-E14011 manufactured by Technol Seven Co., Ltd.) under the conditions of temperature in a cylinder 270°C and load 2.16 kg. The 0 min Dwell MFR was measured after 5 min preheating time after filling pellets of the thermoplastic polymer composition in the cylinder. The 30 min Dwell MFR was measured after 30 min dwell time, including the preheating time, of the pellets of the thermoplastic polymer composition in the cylinder. The MFR variation rate was calculated by the following formula and using the thus-measured 0 min Dwell MFR and 30 min Dwell MFR:

MFR variation rate (%)=
absolute value of (30 min Dwell MFR-0 min Dwell MFR) x 100/(0 min Dwell MFR)

The compositions of the stabilizer compositions of Example 4-3 - Example 4-6 are shown in Table 24, and the compositions, 0 min Dwell MFRs, 30 min Dwell MFRs and MFR variation rates of the thermoplastic polymer compositions in Example 4-7 - Example 4-10 and Comparative Example 4-2 are shown in Table 25. In a thermoplastic polymer composition containing a styrene-butadiene block copolymer, a smaller MFR variation rate means better processing stability thereof.
[Table 24]

Table 24: stabilizer composition

| | compound (3-1) amount (part) | trehalose amount (part) | compound (1-1) amount (part) | compound (2-1) amount (part) |
|---|---|---|---|---|
| Ex. 4-3 | 0.2 | 0.01 | - | - |
| Ex. 4-4 | 0.2 | 0.01 | 0.3 | - |
| Ex. 4-5 | 0.2 | 0.01 | - | 0.2 |
| Ex. 4-6 | 0.2 | 0.01 | 0.3 | 0.2 |

[Table 25]

Table 25: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 4-7 | 100 | Ex. 4-3 | 0.21 | 19.9 | 8.5 | 57.3 |
| Ex. 4-8 | 100 | Ex. 4-4 | 0.51 | 22.0 | 14.5 | 34.1 |
| Ex. 4-9 | 100 | Ex. 4-5 | 0.41 | 20.6 | 8.9 | 56.8 |
| Ex. 4-10 | 100 | Ex. 4-6 | 0.71 | 23.1 | 15.4 | 33.3 |
| Comp. Ex. 4-2 | 100 | compound (3-1) | 0.2 | 17.3 | 3.2 | 81.5 |
| SBS: styrene-butadiene block copolymer | | | | | | |

Example 4-11 - Example 4-139 (Production of stabilizer composition)

Stabilizer compositions are obtained by mixing the components described in Table 26-1 - Table 26-4. Thermoplastic polymer compositions containing these stabilizer compositions are predicted to be superior in processing stability.

[Table 26-1]

Table 26-1: stabilizer composition

| Example | compounds (3) - (7) | | trehalose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-11 | (3-1) | 0.01 | 0.2 | - | - | - | - | - | - |
| 4-12 | (3-1) | 0.05 | 0.15 | - | - | - | - | - | - |
| 4-13 | (3-1) | 0.1 | 0.1 | - | - | - | - | - | - |
| 4-14 | (3-1) | 0.15 | 0.05 | - | - | - | - | - | - |
| 4-15 | (3-1) | 0.2 | 0.001 | - | - | - | - | - | - |
| 4-16 | (3-1) | 0.2 | 0.0002 | - | - | - | - | - | - |
| 4-17 | (4-1) | 0.01 | 0.2 | - | - | - | - | - | - |
| 4-18 | (4-1) | 0.05 | 0.15 | - | - | - | - | - | - |
| 4-19 | (4-1) | 0.1 | 0.1 | - | - | - | - | - | - |
| 4-20 | (4-1) | 0.15 | 0.05 | - | - | - | - | - | - |
| 4-21 | (4-1) | 0.2 | 0.01 | - | - | - | - | - | - |
| 4-22 | (4-1) | 0.2 | 0.001 | - | - | - | - | - | - |
| 4-23 | (4-1) | 0.2 | 0.0002 | - | - | - | - | - | - |
| 4-24 | (5-1) | 0.01 | 0.2 | - | - | - | - | - | - |
| 4-25 | (5-1) | 0.05 | 0.15 | - | - | - | - | - | - |
| 4-26 | (5-1) | 0.1 | 0.1 | - | - | - | - | - | - |
| 4-27 | (5-1) | 0.15 | 0.05 | - | - | - | - | - | - |
| 4-28 | (5-1) | 0.2 | 0.01 | - | - | - | - | - | - |
| 4-29 | (5-1) | 0.2 | 0.001 | - | - | - | - | - | - |
| 4-30 | (5-1) | 0.2 | 0.0002 | - | - | - | - | - | - |

(continued)

| Example | compounds (3) - (7) | | trehalose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-31 | (5-2) | 0.01 | 0.2 | - | - | - | - | - | - |
| 4-32 | (5-2) | 0.05 | 0.15 | - | - | - | - | - | - |
| 4-33 | (5-2) | 0.1 | 0.1 | - | - | - | - | - | - |
| 4-34 | (5-2) | 0.15 | 0.05 | - | - | - | - | - | - |
| 4-35 | (5-2) | 0.2 | 0.01 | - | - | - | - | - | - |
| 4-36 | (5-2) | 0.2 | 0.001 | - | - | - | - | - | - |
| 4-37 | (5-2) | 0.2 | 0.0002 | - | - | - | - | - | - |
| 4-38 | (5-3) | 0.01 | 0.2 | - | - | - | - | - | - |
| 4-39 | (5-3) | 0.05 | 0.15 | - | - | - | - | - | - |
| 4-40 | (5-3) | 0.1 | 0.1 | - | - | - | - | - | - |
| 4-41 | (5-3) | 0.15 | 0.05 | - | - | - | - | - | - |
| 4-42 | (5-3) | 0.2 | 0.01 | - | - | - | - | - | - |

[Table 26-2]

Table 26-2: stabilizer composition

| Example | compounds (3) - (7) | | trehalose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-43 | (5-3) | 0.2 | 0.001 | - | - | - | - | - | - |
| 4-44 | (5-3) | 0.2 | 0.0002 | - | - | - | - | - | - |
| 4-45 | (6-1) | 0.01 | 0.2 | - | - | - | - | - | - |
| 4-46 | (6-1) | 0.05 | 0.15 | - | - | - | - | - | - |
| 4-47 | (6-1) | 0.1 | 0.1 | - | - | - | - | - | - |
| 4-48 | (6-1) | 0.15 | 0.05 | - | - | - | - | - | - |
| 4-49 | (6-1) | 0.2 | 0.01 | - | - | - | - | - | - |
| 4-50 | (6-1) | 0.2 | 0.001 | - | - | - | - | - | - |
| 4-51 | (6-1) | 0.2 | 0.0002 | - | - | - | - | - | - |
| 4-52 | (7-1) | 0.01 | 0.2 | - | - | - | - | - | - |
| 4-53 | (7-1) | 0.05 | 0.15 | - | - | - | - | - | - |
| 4-54 | (7-1) | 0.1 | 0.1 | - | - | - | - | - | - |
| 4-55 | (7-1) | 0.15 | 0.05 | - | - | - | - | - | - |
| 4-56 | (7-1) | 0.2 | 0.01 | - | - | - | - | - | - |
| 4-57 | (7-1) | 0.2 | 0.001 | - | - | - | - | - | - |
| 4-58 | (7-1) | 0.2 | 0.0002 | - | - | - | - | - | - |
| 4-59 | (3-1) | 0.01 | 0.2 | (1-1) | 0.2 | - | - | - | - |
| 4-60 | (3-1) | 0.2 | 0.01 | (1-1) | 0.2 | - | - | - | - |

(continued)

| Example | compounds (3) - (7) | | trehalose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-61 | (3-1) | 0.2 | 0.0002 | (1-1) | 0.2 | - | - | - | - |
| 4-62 | (4-1) | 0.01 | 0.2 | (1-1) | 0.2 | - | - | - | - |
| 4-63 | (4-1) | 0.2 | 0.01 | (1-1) | 0.2 | - | - | - | - |
| 4-64 | (4-1) | 0.2 | 0.0002 | (1-1) | 0.2 | - | - | - | - |
| 4-65 | (5-1) | 0.01 | 0.2 | (1-1) | 0.2 | - | - | - | - |
| 4-66 | (5-1) | 0.2 | 0.01 | (1-1) | 0.2 | - | - | - | - |
| 4-67 | (5-2) | 0.2 | 0.0002 | (1-1) | 0.2 | - | - | - | - |
| 4-68 | (5-2) | 0.01 | 0.2 | (1-1) | 0.2 | - | - | - | - |
| 4-69 | (5-2) | 0.2 | 0.01 | (1-1) | 0.2 | - | - | - | - |
| 4-70 | (5-3) | 0.2 | 0.0002 | (1-1) | 0.2 | - | - | - | - |
| 4-71 | (6-1) | 0.01 | 0.2 | (1-1) | 0.2 | - | - | - | - |
| 4-72 | (6-1) | 0.2 | 0.01 | (1-1) | 0.2 | - | - | - | - |
| 4-73 | (6-1) | 0.2 | 0.0002 | (1-1) | 0.2 | - | - | - | - |
| 4-74 | (7-1) | 0.01 | 0.2 | (1-1) | 0.2 | - | - | - | - |

[Table 26-3]

Table 26-3: stabilizer composition

| Example | compounds (3) - (7) | | trehalose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-75 | (7-1) | 0.2 | 0.01 | (1-1) | 0.2 | - | - | - | - |
| 4-76 | (7-1) | 0.2 | 0.0002 | (1-1) | 0.2 | - | - | - | - |
| 4-77 | (3-1) | 0.2 | 0.01 | (1-2) | 0.2 | - | - | - | - |
| 4-78 | (4-1) | 0.2 | 0.01 | (1-2) | 0.2 | - | - | - | - |
| 4-79 | (5-1) | 0.2 | 0.01 | (1-2) | 0.2 | - | - | - | - |
| 4-80 | (5-2) | 0.2 | 0.01 | (1-2) | 0.2 | - | - | - | - |
| 4-81 | (5-3) | 0.2 | 0.01 | (1-2) | 0.2 | - | - | - | - |
| 4-82 | (6-1) | 0.2 | 0.01 | (1-2) | 0.2 | - | - | - | - |
| 4-83 | (7-1) | 0.2 | 0.01 | (1-2) | 0.2 | - | - | - | - |
| 4-84 | (3-1) | 0.2 | 0.01 | - | - | (2-1) | 0.2 | - | - |
| 4-85 | (4-1) | 0.2 | 0.01 | - | - | (2-1) | 0.2 | - | - |
| 4-86 | (5-1) | 0.2 | 0.01 | - | - | (2-1) | 0.2 | - | - |
| 4-87 | (5-2) | 0.2 | 0.01 | - | - | (2-1) | 0.2 | - | - |
| 4-88 | (5-3) | 0.2 | 0.01 | - | - | (2-1) | 0.2 | - | - |
| 4-89 | (6-1) | 0.2 | 0.01 | - | - | (2-1) | 0.2 | - | - |
| 4-90 | (7-1) | 0.2 | 0.01 | - | - | (2-1) | 0.2 | - | - |

(continued)

| Example | compounds (3) - (7) | | trehalose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-91 | (3-1) | 0.2 | 0.01 | - | - | (2-2) | 0.2 | - | - |
| 4-92 | (4-1) | 0.2 | 0.01 | - | - | (2-2) | 0.2 | - | - |
| 4-93 | (5-1) | 0.2 | 0.01 | - | - | (2-2) | 0.2 | - | - |
| 4-94 | (5-2) | 0.2 | 0.01 | - | - | (2-2) | 0.2 | - | - |
| 4-95 | (5-3) | 0.2 | 0.01 | - | - | (2-2) | 0.2 | - | - |
| 4-96 | (6-1) | 0.2 | 0.01 | - | - | (2-2) | 0.2 | - | - |
| 4-97 | (7-1) | 0.2 | 0.01 | - | - | (2-2) | 0.2 | - | - |
| 4-98 | (3-1) | 0.2 | 0.01 | - | - | (2-3) | 0.2 | - | - |
| 4-99 | (4-1) | 0.2 | 0.01 | - | - | (2-3) | 0.2 | - | - |
| 4-100 | (5-1) | 0.2 | 0.01 | - | - | (2-3) | 0.2 | - | - |
| 4-101 | (5-2) | 0.2 | 0.01 | - | - | (2-3) | 0.2 | - | - |
| 4-102 | (5-3) | 0.2 | 0.01 | - | - | (2-3) | 0.2 | - | - |
| 4-103 | (6-1) | 0.2 | 0.01 | - | - | (2-3) | 0.2 | - | - |
| 4-104 | (7-1) | 0.2 | 0.01 | - | - | (2-3) | 0.2 | - | - |
| 4-105 | (3-1) | 0.2 | 0.01 | - | - | - | - | (8-1) | 0.2 |
| 4-106 | (4-1) | 0.2 | 0.01 | - | - | - | - | (8-1) | 0.2 |

[Table 26-4]

Table 26-4: stabilizer composition

| Example | compounds (3) - (7) | | trehalose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-107 | (5-1) | 0.2 | 0.01 | - | - | - | - | (8-1) | 0.2 |
| 4-108 | (5-2) | 0.2 | 0.01 | - | - | - | - | (8-1) | 0.2 |
| 4-109 | (5-3) | 0.2 | 0.01 | - | - | - | - | (8-1) | 0.2 |
| 4-110 | (6-1) | 0.2 | 0.01 | - | - | - | - | (8-1) | 0.2 |
| 4-111 | (7-1) | 0.2 | 0.01 | - | - | - | - | (8-1) | 0.2 |
| 4-112 | (3-1) | 0.2 | 0.01 | (1-1) | 0.2 | (2-1) | 0.2 | - | - |
| 4-113 | (4-1) | 0.2 | 0.01 | (1-1) | 0.2 | (2-1) | 0.2 | - | - |
| 4-114 | (5-1) | 0.2 | 0.01 | (1-1) | 0.2 | (2-1) | 0.2 | - | - |
| 4-115 | (5-2) | 0.2 | 0.01 | (1-1) | 0.2 | (2-1) | 0.2 | - | - |
| 4-116 | (5-3) | 0.2 | 0.01 | (1-1) | 0.2 | (2-1) | 0.2 | - | - |
| 4-117 | (6-1) | 0.2 | 0.01 | (1-1) | 0.2 | (2-1) | 0.2 | - | - |
| 4-118 | (7-1) | 0.2 | 0.01 | (1-1) | 0.2 | (2-1) | 0.2 | - | - |
| 4-119 | (3-1) | 0.2 | 0.01 | (1-1) | 0.2 | - | - | (8-1) | 0.2 |
| 4-120 | (4-1) | 0.2 | 0.01 | (1-1) | 0.2 | - | - | (8-1) | 0.2 |

(continued)

| Example | compounds (3) - (7) | | trehalose | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-121 | (5-1) | 0.2 | 0.01 | (1-1) | 0.2 | - | - | (8-1) | 0.2 |
| 4-122 | (5-2) | 0.2 | 0.01 | (1-1) | 0.2 | - | - | (8-1) | 0.2 |
| 4-123 | (5-3) | 0.2 | 0.01 | (1-1) | 0.2 | - | - | (8-1) | 0.2 |
| 4-124 | (6-1) | 0.2 | 0.01 | (1-1) | 0.2 | - | - | (8-1) | 0.2 |
| 4-125 | (7-1) | 0.2 | 0.01 | (1-1) | 0.2 | - | - | (8-1) | 0.2 |
| 4-126 | (3-1) | 0.2 | 0.01 | - | - | (2-1) | 0.2 | (8-1) | 0.2 |
| 4-127 | (4-1) | 0.2 | 0.01 | - | - | (2-1) | 0.2 | (8-1) | 0.2 |
| 4-128 | (5-1) | 0.2 | 0.01 | - | - | (2-1) | 0.2 | (8-1) | 0.2 |
| 4-129 | (5-2) | 0.2 | 0.01 | - | - | (2-1) | 0.2 | (8-1) | 0.2 |
| 4-130 | (5-3) | 0.2 | 0.01 | - | - | (2-1) | 0.2 | (8-1) | 0.2 |
| 4-131 | (6-1) | 0.2 | 0.01 | - | - | (2-1) | 0.2 | (8-1) | 0.2 |
| 4-132 | (7-1) | 0.2 | 0.01 | - | - | (2-1) | 0.2 | (8-1) | 0.2 |
| 4-133 | (3-1) | 0.2 | 0.01 | (1-1) | 0.2 | (2-1) | 0.2 | (8-1) | 0.2 |
| 4-134 | (4-1) | 0.2 | 0.01 | (1-1) | 0.2 | (2-1) | 0.2 | (8-1) | 0.2 |
| 4-135 | (5-1) | 0.2 | 0.01 | (1-1) | 0.2 | (2-1) | 0.2 | (8-1) | 0.2 |
| 4-136 | (5-2) | 0.2 | 0.01 | (1-1) | 0.2 | (2-1) | 0.2 | (8-1) | 0.2 |
| 4-137 | (5-3) | 0.2 | 0.01 | (1-1) | 0.2 | (2-1) | 0.2 | (8-1) | 0.2 |
| 4-138 | (6-1) | 0.2 | 0.01 | (1-1) | 0.2 | (2-1) | 0.2 | (8-1) | 0.2 |
| 4-139 | (7-1) | 0.2 | 0.01 | (1-1) | 0.2 | (2-1) | 0.2 | (8-1) | 0.2 |

Example 4-140 - Example 4-199 (Production of thermoplastic polymer composition)

In the same manner as in Example 4-2 except that the thermoplastic polymers (100 parts) described in Table 27-1 and Table 27-2, and the stabilizer compositions in the kinds and amounts described in Table 27-1 and Table 27-2 are used, thermoplastic polymer compositions are obtained as pellets. The obtained thermoplastic polymer compositions are predicted to be superior in processing stability.

The meanings of the abbreviations of the thermoplastic polymers described in Table 27-1 and Table 27-2 are as follows.

P4-1: high density polyethylene (HDPE)
P4-2: low density polyethylene (LDPE)
P4-3: linear low density polyethylene (LLDPE)
P4-4: ethylene-vinyl alcohol copolymer (EVOH)
P4-5: ethylene-ethyl acrylate copolymer (EEA)
P4-6: ethylene-vinyl acetate copolymer (EVA)
P4-7: propylene-ethylene random copolymer
P4-8: propylene-$\alpha$-olefin random copolymer
P4-9: propylene-ethylene-$\alpha$-olefin copolymer
P4-10: polystyrene (PS)
P4-11: acrylonitrile-styrene copolymer (SAN)
P4-12: acrylonitrile-butadiene-styrene copolymer (ABS)
P4-13: special acrylic rubber-acrylonitrile-styrene copolymer
P4-14: acrylonitrile-chlorinated polyethylene-styrene copolymer (ACS)
P4-15: polybutadiene rubber (BR)

P4-16: styrene-butadiene copolymer (SB)
P4-17: styrene-butadiene block copolymer (SBS)
P4-18: chlorinated polyethylene (CPE)
P4-19: polychloroprene
P4-20: chlorinated rubber
P4-21: poly(vinyl chloride) (PVC)
P4-22: poly(vinylidene chloride) (PVDC)
P4-23: methacrylate resin
P4-24: fluororesin
P4-25: polyacetal (POM)
P4-26: grafted poly(phenylene ether) resin
P4-27: poly(phenylene sulfide) resin (PPS)
P4-28: polyurethane (PU)
P4-29: polyamide (PA)
P4-30: poly(ethylene terephthalate) (PET)
P4-31: poly(butylene terephthalate) (PBT)
P4-32: poly(lactic acid) (PLA)
P4-33: polycarbonate (PC)
P4-34: polyacrylate
P4-35: polysulfone (PPSU)
P4-36: poly(ether ether ketone) (PEEK)
P4-37: poly(ether sulfone) (PES)
P4-38: aromatic polyester
P4-39: diallyl phthalate prepolymer
P4-40: silicone resin (SI)
P4-41: 1,2-polybutadiene
P4-42: polyisoprene
P4-43: butadiene-acrylonitrile copolymer (NBR)
P4-44: ethylene-methyl methacrylate copolymer (EMMA)

[Table 27-1]

Table 27-1: thermoplastic polymer composition

| Example | thermoplastic polymer | stabilizer composition | |
|---|---|---|---|
| | | kind | amount (part) |
| 4-140 | P4-1 | Ex. 4-1 | 0.11 |
| 4-141 | P4-2 | Ex. 4-1 | 0.11 |
| 4-142 | P4-3 | Ex. 4-1 | 0.11 |
| 4-143 | P4-3 | Ex. 4-3 | 0.21 |
| 4-144 | P4-3 | Ex. 4-4 | 0.51 |
| 4-145 | P4-3 | Ex. 4-5 | 0.41 |
| 4-146 | P4-3 | Ex. 4-6 | 0.71 |
| 4-147 | P4-4 | Ex. 4-1 | 0.11 |
| 4-148 | P4-4 | Ex. 4-5 | 0.21 |
| 4-149 | P4-4 | Ex. 4-6 | 0.51 |
| 4-150 | P4-4 | Ex. 4-7 | 0.41 |
| 4-151 | P4-4 | Ex. 4-8 | 0.71 |
| 4-152 | P4-5 | Ex. 4-1 | 0.11 |
| 4-153 | P4-6 | Ex. 4-1 | 0.11 |
| 4-154 | P4-7 | Ex. 4-1 | 0.11 |

(continued)

| Example | thermoplastic polymer | stabilizer composition | |
|---|---|---|---|
| | | kind | amount (part) |
| 4-155 | P4-8 | Ex. 4-1 | 0.11 |
| 4-156 | P4-9 | Ex. 4-1 | 0.11 |
| 4-157 | P4-10 | Ex. 4-1 | 0.11 |
| 4-158 | P4-10 | Ex. 4-3 | 0.21 |
| 4-159 | P4-10 | Ex. 4-4 | 0.51 |
| 4-160 | P4-10 | Ex. 4-5 | 0.41 |
| 4-161 | P4-10 | Ex. 4-6 | 0.71 |
| 4-162 | P4-11 | Ex. 4-1 | 0.11 |
| 4-163 | P4-12 | Ex. 4-1 | 0.11 |
| 4-164 | P4-12 | Ex. 4-3 | 0.21 |
| 4-165 | P4-12 | Ex. 4-4 | 0.51 |
| 4-166 | P4-12 | Ex. 4-5 | 0.41 |
| 4-167 | P4-12 | Ex. 4-6 | 0.71 |
| 4-168 | P4-13 | Ex. 4-1 | 0.11 |
| 4-169 | P4-14 | Ex. 4-1 | 0.11 |

[Table 27-2]

Table 27-2: thermoplastic polymer composition

| Example | thermoplastic polymer | stabilizer composition | |
|---|---|---|---|
| | | kind | amount (part) |
| 4-170 | P4-15 | Ex. 4-1 | 0.11 |
| 4-171 | P4-16 | Ex. 4-1 | 0.11 |
| 4-172 | P4-17 | Ex. 4-1 | 0.11 |
| 4-173 | P4-18 | Ex. 4-1 | 0.11 |
| 4-174 | P4-19 | Ex. 4-1 | 0.11 |
| 4-175 | P4-20 | Ex. 4-1 | 0.11 |
| 4-176 | P4-21 | Ex. 4-1 | 0.11 |
| 4-177 | P4-22 | Ex. 4-1 | 0.11 |
| 4-178 | P4-23 | Ex. 4-1 | 0.11 |
| 4-179 | P4-24 | Ex. 4-1 | 0.11 |
| 4-180 | P4-25 | Ex. 4-1 | 0.11 |
| 4-181 | P4-26 | Ex. 4-1 | 0.11 |
| 4-182 | P4-27 | Ex. 4-1 | 0.11 |
| 4-183 | P4-28 | Ex. 4-1 | 0.11 |
| 4-184 | P4-29 | Ex. 4-1 | 0.11 |
| 4-185 | P4-30 | Ex. 4-1 | 0.11 |
| 4-186 | P4-31 | Ex. 4-1 | 0.11 |

(continued)

| Example | thermoplastic polymer | stabilizer composition | |
|---|---|---|---|
| | | kind | amount (part) |
| 4-187 | P4-32 | Ex. 4-1 | 0.11 |
| 4-188 | P4-33 | Ex. 4-1 | 0.11 |
| 4-189 | P4-34 | Ex. 4-1 | 0.11 |
| 4-190 | P4-35 | Ex. 4-1 | 0.11 |
| 4-191 | P4-36 | Ex. 4-1 | 0.11 |
| 4-192 | P4-37 | Ex. 4-1 | 0.11 |
| 4-193 | P4-38 | Ex. 4-1 | 0.11 |
| 4-194 | P4-39 | Ex. 4-1 | 0.11 |
| 4-195 | P4-40 | Ex. 4-1 | 0.11 |
| 4-196 | P4-41 | Ex. 4-1 | 0.11 |
| 4-197 | P4-42 | Ex. 4-1 | 0.11 |
| 4-198 | P4-43 | Ex. 4-1 | 0.11 |
| 4-199 | P4-44 | Ex. 4-1 | 0.11 |

## Industrial Applicability

The thermoplastic polymer composition of the present invention containing compound (1), compound (2), at least one selected from the group consisting of compounds (3) - (7), or compound (8) and trehalose shows superior processing stability. The thermoplastic polymer composition of the present invention can be used for, for example, the production of electronic components, automobile parts, clock components, camera components, components of leisure goods and the like.

## Claims

1. A thermoplastic polymer composition comprising a compound represented by the formula (1):

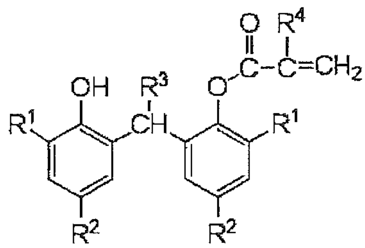

(1)

wherein in the formula (1),

each $R^1$ and/or each $R^2$ are/is independently a $C_{1-8}$ alkyl group, a $C_{6-12}$ aryl group or a $C_{7-18}$ aralkyl group,
$R^3$ is a hydrogen atom or a $C_{1-3}$ alkyl group, and
$R^4$ is a hydrogen atom or a methyl group, trehalose and a thermoplastic polymer.

2. The thermoplastic polymer composition according to claim 1, wherein the total amount of the compound represented by the formula (1) and trehalose is 0.001 - 3 parts by weight relative to 100 parts by weight of the thermoplastic polymer.

3. A stabilizer composition comprising a compound represented by the formula (1):

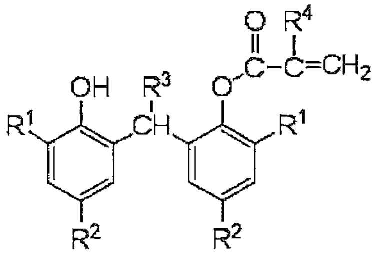

(1)

wherein in the formula (1),

each $R^1$ and/or each $R^2$ are/is independently a $C_{1-8}$ alkyl group, a $C_{6-12}$ aryl group or a $C_{7-18}$ aralkyl group,
$R^3$ is a hydrogen atom or a $C_{1-3}$ alkyl group, and
$R^4$ is a hydrogen atom or a methyl group, and trehalose.

4. The stabilizer composition according to claim 3, wherein the compound represented by the formula (1) is at least one selected from the group consisting of 2,4-di-t-pentyl-6-[1-(3,5-di-t-pentyl-2-hydroxyphenyl)ethyl]phenyl acrylate and 2-t-butyl-6-(3-t-butyl-2-hydroxy-5-methylbenzyl)-4-methylphenyl acrylate.

5. The stabilizer composition according to claim 3 or 4, further comprising a compound represented by the formula (2):

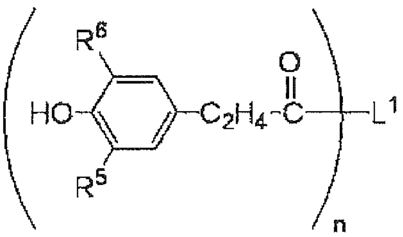

(2)

wherein in the formula (2),

each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol.

6. The stabilizer composition according to any one of claims 3 - 5, further comprising at least one selected from the group consisting of the compounds represented by the formulas (3) - (7) :

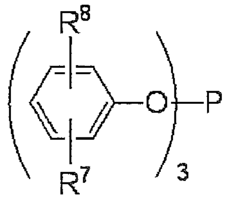

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

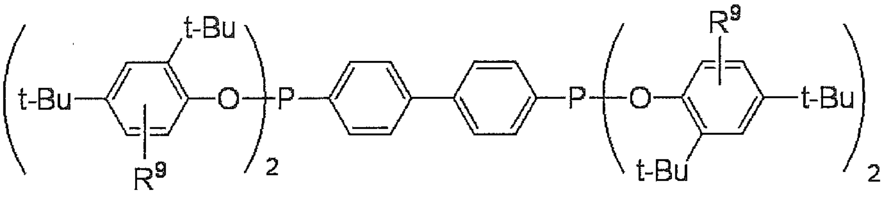

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

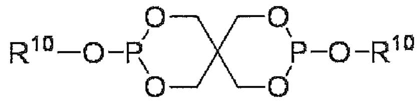

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

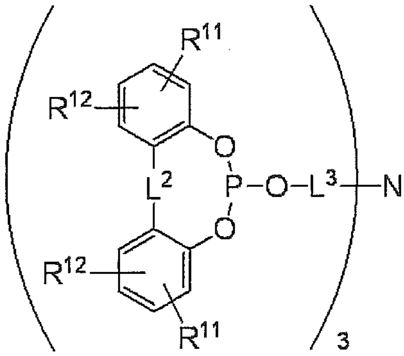

(6)

wherein in the formula (6),

each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

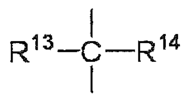

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

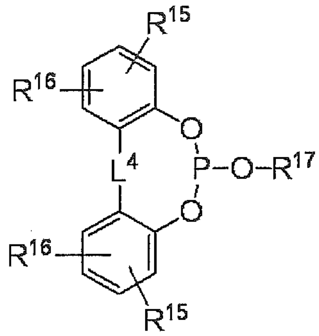

(7)

wherein in the formula (7),
each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

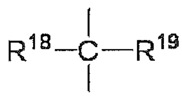

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**7.** The stabilizer composition according to claim 6, wherein at least one selected from the group consisting of the compounds represented by the formulas (3) - (7) is the compound represented by the formula (3).

**8.** A thermoplastic polymer composition comprising a compound represented by the formula (8):

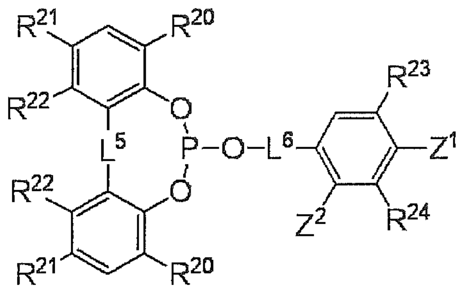

(8)

wherein in the formula (8),

each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):

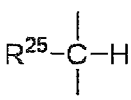

(8a)

wherein in the formula (8a), $R^{25}$ is a hydrogen atom, a $C_{1-8}$ alkyl group or a $C_{5-8}$ cycloalkyl group, $L^6$ is a $C_{2-8}$ alkylene group or a divalent group represented by the formula (8b):

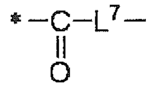

(8b)

wherein in the formula (8b), $L^7$ is a single bond or a $C_{1-8}$ alkylene group, and * shows bonding to the oxygen atom side, and one of $Z^1$ and $Z^2$ is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group, trehalose and a thermoplastic polymer.

**9.** The thermoplastic polymer composition according to claim 8, wherein the total amount of the compound represented by the formula (8) and trehalose is 0.001 - 3 parts by weight relative to 100 parts by weight of the thermoplastic polymer.

**10.** A stabilizer composition comprising a compound represented by the formula (8):

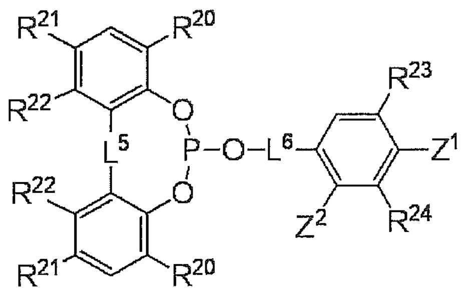

(8)

wherein in the formula (8),

each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):

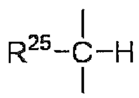

(8a)

wherein in the formula (8a), $R^{25}$ is a hydrogen atom, a $C_{1-8}$ alkyl group or a $C_{5-8}$ cycloalkyl group,
$L^6$ is a $C_{2-8}$ alkylene group or a divalent group represented by the formula (8b):

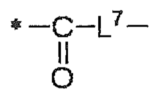

(8b)

wherein in the formula (8b), $L^7$ is a single bond or a $C_{1-8}$ alkylene group, and * shows bonding to the oxygen atom side, and
one of $Z^1$ and $Z^2$ is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group, and trehalose.

**11.** The stabilizer composition according to claim 10, wherein the compound represented by the formula (8) is 6-[3-(3-t-butyl-4-hydroxy-5-methylphenyl)propoxy]-2,4,8,10-tetra-t-butyldibenzo[d,f][1,3,2]dioxaphosphepine.

**12.** The stabilizer composition according to claim 10 or 11, further comprising a compound represented by the formula (2):

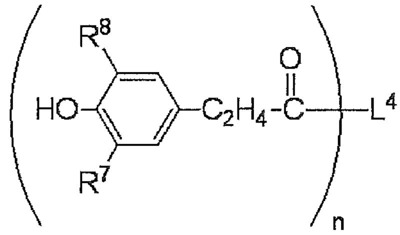

(2)

wherein in the formula (2),

each $R^7$ and/or each $R^8$ are/is independently a hydrogen atom or a $C_{1-6}$ alkyl group,
$L^4$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol.

**13.** The stabilizer composition according to any one of claims 10 - 12, further comprising at least one selected from the group consisting of the compounds represented by the formulas (3) - (7):

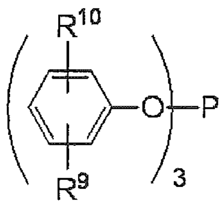

(3)

wherein in the formula (3), each $R^9$ and/or each $R^{10}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

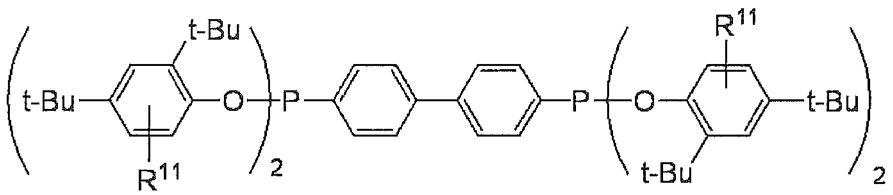

(4)

wherein in the formula (4), each $R^{11}$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

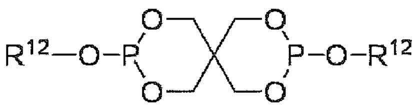

(5)

wherein in the formula (5), each $R^{12}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

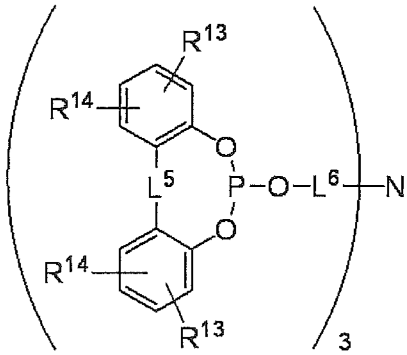

(6)

wherein in the formula (6),

each $R^{13}$ and/or each $R^{14}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^5$ is independently a single bond, a sulfur atom or a divalent group represented by the formula (6a):

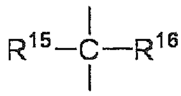

(6a)

wherein in the formula (6a), $R^{15}$ and $R^{16}$ are each independently a hydrogen atom or a $C_{1-7}$ alkyl group, and the total carbon number of $R^{15}$ and $R^{16}$ is not more than 7, and
each $L^6$ is independently a $C_{2-8}$ alkylene group,

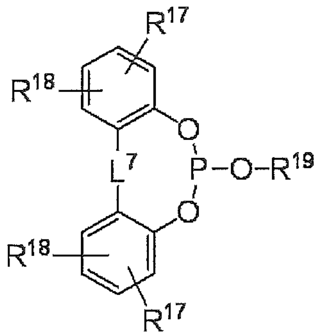

(7)

wherein in the formula (7),
each $R^{17}$ and/or each $R^{18}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{19}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^7$ is a single bond, a sulfur atom or a divalent group represented by the formula (7a):

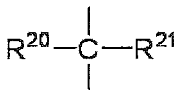

(7a)

wherein in the formula (7a), $R^{20}$ and $R^{21}$ are each independently a hydrogen atom or a $C_{1-7}$ alkyl group, and the total carbon number of $R^{20}$ and $R^{21}$ is not more than 7.

**14.** The stabilizer composition according to claim 13, wherein at least one selected from the group consisting of the compounds represented by the formulas (3) - (7) is the compound represented by the formula (3).

**15.** A thermoplastic polymer composition comprising a compound represented by the formula (2):

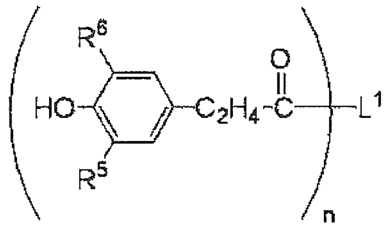

(2)

wherein in the formula (2),

each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol, trehalose and a thermoplastic polymer.

**16.** The thermoplastic polymer composition according to claim 15, wherein the total amount of the compound represented by the formula (2) and trehalose is 0.001 - 3 parts by weight relative to 100 parts by weight of the thermoplastic polymer.

**17.** The thermoplastic polymer composition according to claim 15 or 16, wherein the thermoplastic polymer is a styrene-butadiene block copolymer.

**18.** A stabilizer composition comprising a compound represented by the formula (2):

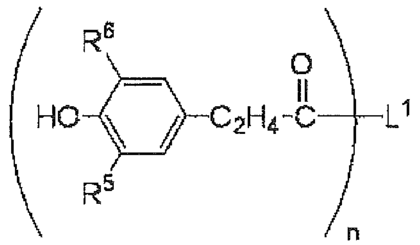

(2)

wherein in the formula (2),

each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol, and trehalose.

**19.** The stabilizer composition according to claim 18, wherein the compound represented by the formula (2) is at least one selected from the group consisting of octadecyl 3-(3,5-di-t-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5.5]undecane and pentaerythritol tetrakis[3-(3,5-di-t-butyl-4-hydroxyphenyl)propionate].

**20.** A thermoplastic polymer composition comprising trehalose, a thermoplastic polymer and at least one selected from the group consisting of the compounds represented by the formulas (3) - (7)):

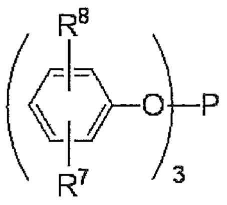

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

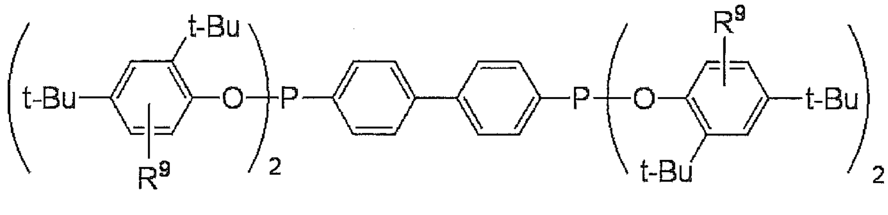

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

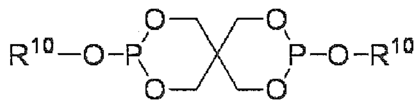

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

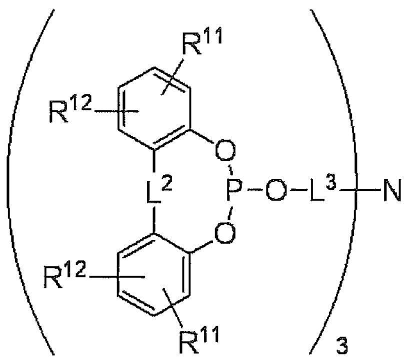

(6)

wherein in the formula (6),

each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

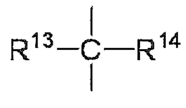

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

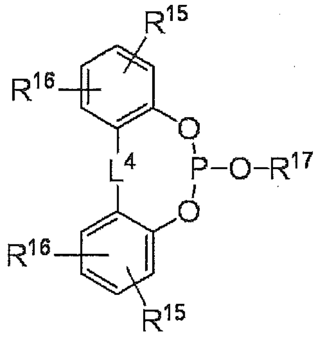
(7)

wherein in the formula (7), each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

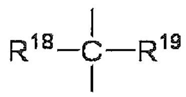
(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**21.** The thermoplastic polymer composition according to claim 20, wherein the total amount of trehalose and the compound selected from the group consisting of the compounds represented by the formulas (3) - (7) is 0.001 - 3 parts by weight relative to 100 parts by weight of the thermoplastic polymer.

**22.** The thermoplastic polymer composition according to claim 20 or 21, wherein the thermoplastic polymer is a styrene-butadiene block copolymer.

**23.** A stabilizer composition comprising trehalose and at least one selected from the group consisting of the compounds represented by the formulas (3) - (7)):

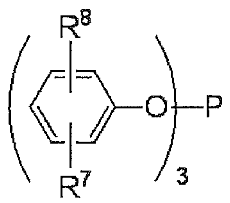
(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

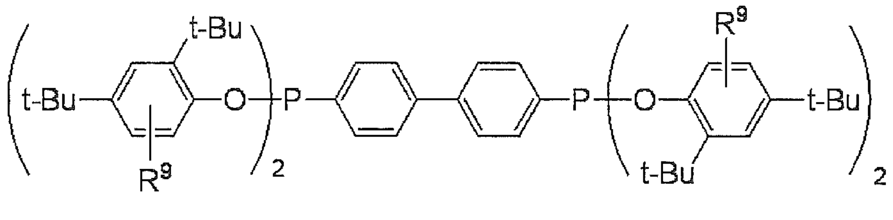
(4)

wherein in the formula (4), each $R^9$ is independently a hydrogen atom, a $C_{1-9}$ alkyl group, a $C_{5-8}$ cycloalkyl group,

a $C_{6-12}$ alkylcycloalkyl group, a $C_{7-12}$ aralkyl group or a phenyl group,

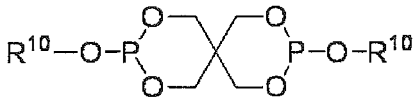

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

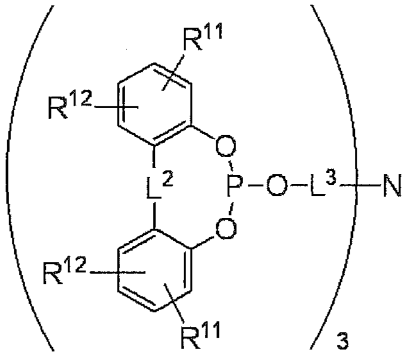

(6)

wherein in the formula (6),

each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

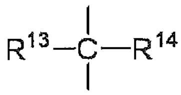

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

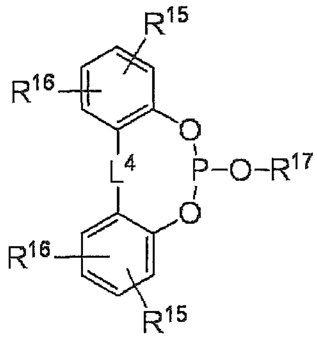

(7)

wherein in the formula (7),
each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

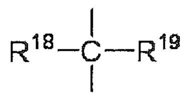

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**24.** The stabilizer composition according to claim 23, wherein at least one selected from the group consisting of the compounds represented by the formulas (3) - (7) is the compound represented by the formula (3).

**25.** The stabilizer composition according to claim 24, wherein the compound represented by the formula (3) is tris(2,4-di-t-butylphenyl) phosphite.

## INTERNATIONAL SEARCH REPORT

International application No.
PCT/JP2011/059265

A. CLASSIFICATION OF SUBJECT MATTER
*C08L101/00*(2006.01)i, *C08K5/13*(2006.01)i, *C08K5/134*(2006.01)i, *C08K5/1545*(2006.01)i, *C08K5/526*(2006.01)i

According to International Patent Classification (IPC) or to both national classification and IPC

B. FIELDS SEARCHED

Minimum documentation searched (classification system followed by classification symbols)
C08L101/00, C08K5/13, C08K5/134, C08K5/1545, C08K5/526

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2006-143767 A (Asahi Denka Co., Ltd.), 08 June 2006 (08.06.2006), claims; entire text (Family: none) | 1-7 |
| A | JP 10-212386 A (Sakai Chemical Industry Co., Ltd.), 11 August 1998 (11.08.1998), claims; entire text (Family: none) | 1-7 |
| A | JP 09-176420 A (Katsuta Kako Kabushiki Kaisha), 08 July 1997 (08.07.1997), claims; entire text (Family: none) | 1-7 |

☒ Further documents are listed in the continuation of Box C.  ☐ See patent family annex.

* Special categories of cited documents:
“A” document defining the general state of the art which is not considered to be of particular relevance
“E” earlier application or patent but published on or after the international filing date
“L” document which may throw doubts on priority claim(s) or which is cited to establish the publication date of another citation or other special reason (as specified)
“O” document referring to an oral disclosure, use, exhibition or other means
“P” document published prior to the international filing date but later than the priority date claimed
“T” later document published after the international filing date or priority date and not in conflict with the application but cited to understand the principle or theory underlying the invention
“X” document of particular relevance; the claimed invention cannot be considered novel or cannot be considered to involve an inventive step when the document is taken alone
“Y” document of particular relevance; the claimed invention cannot be considered to involve an inventive step when the document is combined with one or more other such documents, such combination being obvious to a person skilled in the art
“&” document member of the same patent family

| Date of the actual completion of the international search | Date of mailing of the international search report |
|---|---|
| 14 July, 2011 (14.07.11) | 26 July, 2011 (26.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2011/059265

C (Continuation). DOCUMENTS CONSIDERED TO BE RELEVANT

| Category* | Citation of document, with indication, where appropriate, of the relevant passages | Relevant to claim No. |
|---|---|---|
| A | JP 09-176416 A (Asahi Denka Co., Ltd.), 08 July 1997 (08.07.1997), claims; entire text (Family: none) | 1-7 |
| A | JP 01-168643 A (Sumitomo Chemical Co., Ltd.), 04 July 1989 (04.07.1989), claims; entire text & US 5128398 A & EP 322166 A1 & DE 3870187 A & CA 1325218 A | 1-7 |
| A | JP 04-305413 A (Sumitomo Chemical Co., Ltd.), 28 October 1992 (28.10.1992), claims; entire text (Family: none) | 1-7 |
| A | JP 05-255549 A (Sumitomo Chemical Co., Ltd.), 05 October 1993 (05.10.1993), claims; entire text (Family: none) | 1-7 |
| A | JP 2009-046665 A (Sumitomo Chemical Co., Ltd.), 05 March 2009 (05.03.2009), claims; entire text & US 2009/0030127 A1 & EP 2017299 A1 & KR 10-2009-0009717 A & CN 101628990 A | 1-7 |
| A | JP 2009-132633 A (Sumitomo Chemical Co., Ltd.), 18 June 2009 (18.06.2009), claims; entire text & US 2009/0143517 A1 & EP 2065359 A1 & CN 101450900 A & KR 10-2009-0056863 A | 1-7 |
| A | JP 2010-007002 A (Sumitomo Chemical Co., Ltd.), 14 January 2010 (14.01.2010), claims; entire text & US 2009/0326160 A1 & EP 2141194 A1 & CN 101618782 A & SG 158055 A & KR 10-2010-0003208 A | 1-7 |

Form PCT/ISA/210 (continuation of second sheet) (July 2009)

**INTERNATIONAL SEARCH REPORT**

International application No.
PCT/JP2011/059265

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-7

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

INTERNATIONAL SEARCH REPORT

International application No.
PCT/JP2011/059265

Continuation of Box No.III of continuation of first sheet(2)

The invention in claim 1, the invention in claim 3, the invention in claim 8, the invention in claim 10, the invention in claim 15, the invention in claim 18, the invention in claim 20, and the invention in claim 23 have a common technical feature in such a point that all of the inventions relate to a composition containing a compound, which acts as a stabilizing agent, and trehalose.

However, the above-said technical feature cannot be considered to be a "special technical feature", since said technical feature does not make a contribution over the prior art in the light of the contents disclosed in the following documents 1-4. Furthermore, there is no other same or corresponding "special technical feature".

Document 1: JP 2006-143767 A (Asahi Denka Co., Ltd.), 08 June 2006 (08.06.2006), claims, entire text (Family: none)
Document 2: JP 10-212386 A (Sakai Chemical Industry Co., Ltd.), 11 August 1998 (11.08.1998), claims, entire text (Family: none)
Document 3: JP 09-176420 A (Katsuta Kako Kabushiki Kaisha), 08 July 1997 (08.07.1997), claims, entire text (Family: none)
Document 4: JP 09-176416 A (Asahi Denka Co., Ltd.), 08 July 1997 (08.07.1997), claims, entire text (Family: none)

Consequently, the invention in claim 1, the invention in claim 3, the invention in claim 8, the invention in claim 10, the invention in claim 15, the invention in claim 18, the invention in claim 20, and the invention in claim 23 cannot be deemed be so linked as to share a special technical feature, and therefore, a group of these inventions cannot be considered to be so linked as to form a single general inventive concept.

It is considered that four inventions linked by respective special technical features indicated below are involved in claims 1-25.

(Invention 1) the inventions in claims 1-7
The invention relating to a composition which contains a compound represented by "formula (1)" and trehalose.

(Invention 2) the inventions in claims 8-14
The invention relating to a composition which contains a compound represented by "formula (8)" and trehalose.

(Invention 3) the inventions in claims 15-19
The invention relating to a composition which contains a compound represented by "formula (2)" and trehalose.

(Invention 4) the inventions in claims 20-25
The invention relating to a composition which contains a compound represented by "formulae (3) to (7)" and trehalose.

Meanwhile, this international search report covers the above-said (invention 1).

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1168643 A
- JP 10273494 A
- US 3330859 A
- US 3644482 A
- JP 59025826 A
- JP 51109050 A
- JP 58084835 A